# EUROPEAN PATENT APPLICATION

(11) **EP 4 561 189 A1**
(43) Date of publication of application: **28.05.2025**
(21) Application number: 23851623.1
(22) Date of filing: 31.07.2023
(51) Int. Cl.: H04W 52/02

(54) **COMMUNICATION METHOD AND COMMUNICATION APPARATUS**

(30) Priority: 10.08.2022 CN 202210957937
(71) Applicant: Huawei Technologies Co., Ltd., Shenzhen, Guangdong 518129 (CN)
(72) Inventor: LIU, Nannan, Shenzhen, Guangdong 518129 (CN)
(74) Representative: Körber, Martin Hans
(86) International application number: PCT/CN2023/110098
(87) International publication number: WO 2024/032402

(57) **Abstract**

Embodiments of this application disclose a communication method and a communication apparatus. The communication method includes: A terminal device does not send first CSI at first time if a preset condition is met. Whether a configuration message of an active BWP of the terminal device includes information about a CFR is considered in the preset condition, so that unnecessary sending of the first CSI can be avoided.

## Description

This application claims priority to Chinese Patent Application No. CN202210957937.2, filed with the China National Intellectual Property Administration on August 10, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In a wireless communication system, to reduce power consumption of a terminal device while ensuring effective data transmission, a discontinuous reception (discontinuous reception, DRX) is introduced. When a network device configures a DRX function for the terminal device, the terminal device may enter a dominant state at some moments, so that the terminal device does not need to continuously monitor a physical downlink control channel (physical downlink control channel, PDCCH). When the PDCCH needs to be monitored, the terminal device may be woken up from the dominant state. This can reduce power consumption of the terminal device to some extent.

A bandwidth part (bandwidth part, BWP) is supported in new radio (new radio, NR). After a multicast is introduced in NR, a configuration message of the BWP may include information about a multicast common frequency resource (common frequency resource, CFR).

In the conventional technology, if a multicast DRX is in active time or no multicast DRX is configured for a multicast, the terminal device may report CSI that is not needed.

### SUMMARY

This application provides a communication method and a communication apparatus, to reduce unnecessary CSI reporting, thereby reducing power consumption of a terminal device.

A first aspect of this application provides a communication method, including: A terminal device does not send first channel state information CSI at first time if a preset condition is met, where the preset condition includes any one or more of the following:
a first condition, where the first condition includes: The first time does not belong to active time of a first discontinuous reception DRX, and a configuration message of a first bandwidth part BWP does not include information about a common frequency resource CFR;
a second condition, where the second condition includes: The first time does not belong to the active time of the first DRX, a configuration message of a second BWP includes the information about the CFR, and the first time does not belong to active time of a second DRX set;
a third condition, where the third condition includes a condition A and a condition B; the condition A includes: The first time does not belong to the active time of the first DRX, and the configuration message of the second BWP includes the information about the CFR; and the condition B includes: The first time belongs to active time of a third DRX set, and/or no multicast DRX is configured for a first multicast service set;
a fourth condition, where the fourth condition includes: A first timer does not run at the first time, and the configuration message of the first BWP does not include the information about the CFR;
a fifth condition, where the fifth condition includes: The first timer does not run at the first time, the configuration message of the second BWP includes the information about the CFR, and a second timer set does not run at the first time; and
a sixth condition, where the sixth condition includes a condition C and a condition D; the condition C includes: The first timer does not run at the first time, and the configuration message of the second BWP includes the information about the CFR; and the condition D includes: A third timer set runs at the first time, and/or no multicast DRX is configured for a second multicast service set.

The first DRX is used to control monitoring of terminal device specific control information. The second DRX set includes at least one multicast DRX, the at least one multicast DRX includes a first multicast DRX, and the first multicast DRX is used to control monitoring of control information related to a third multicast service. The third DRX set includes at least one multicast DRX, the at least one multicast DRX includes a second multicast DRX, and the second multicast DRX is used to control monitoring of control information related to a fourth multicast service. The first multicast service set includes at least one multicast service, and the at least one multicast service includes a fifth multicast service. The second multicast service set includes at least one multicast service, and the at least one multicast service includes a sixth multicast service. In running time of the first timer, the terminal device monitors the terminal device specific control information. The second timer set includes at least one multicast timer, and the at least one multicast timer includes a first multicast timer. In running time of the first multicast timer, the terminal device monitors control information related to a seventh multicast service. The third timer set includes at least one multicast timer, and the at least one multicast timer includes a second multicast timer. In running time of the second multicast timer, the terminal device monitors control information related to an eighth multicast service. The first BWP includes an active BWP of the terminal device, and the second BWP includes an active BWP of the terminal device.

In a possible implementation of the first aspect, the first BWP includes all active BWPs.

In a possible implementation of the first aspect, the second DRX set includes DRXes corresponding to all multicasts that the terminal device joins.

In a possible implementation of the first aspect, the preset condition includes at least one of the first condition and a second condition, and that a terminal device does not send first CSI at first time includes: The terminal device does not send the first CSI at the first time for a first cell set, where the first cell set includes at least one cell, and the first cell set is associated with the first DRX.

In a possible implementation of the first aspect, the second DRX set includes DRXes corresponding to all multicasts associated with the first cell set or the first DRX.

In a possible implementation of the first aspect, the first BWP includes all active BWPs associated with the first cell set or the first DRX, and/or the second BWP includes an active BWP associated with the first cell set or the first DRX.

In a possible implementation of the first aspect, the preset condition includes the third condition, and that a terminal device does not send first CSI at first time includes: The terminal device does not send the first CSI at the first time for a second cell set, where the second cell set includes at least one cell; and the second cell set is not associated with the third DRX set, and/or the second cell set is not associated with the first multicast service set.

In a possible implementation of the first aspect, the second cell set is associated with the first DRX.

In a possible implementation of the first aspect, the third DRX set is associated with the first DRX.

In a possible implementation of the first aspect, the first multicast service set is associated with the first DRX.

In a possible implementation of the first aspect, the second BWP is associated with the first DRX.

In a possible implementation of the first aspect, the second timer set includes multicast timers corresponding to all the multicasts that the terminal device joins.

In a possible implementation of the first aspect, the preset condition includes at least one of the fourth condition and the fifth condition, and that a terminal device does not send first CSI at first time includes: The terminal device does not send the first CSI at the first time for the first cell set.

In a possible implementation of the first aspect, the second timer set includes multicast timers corresponding to all the multicasts associated with the first cell set or the first DRX.

In a possible implementation of the first aspect, the first BWP includes all the active BWPs associated with the first cell set or the first DRX, and/or the second BWP includes the active BWP associated with the first cell set or the first DRX.

In a possible implementation of the first aspect, the preset condition includes at least one of the second condition and the fifth condition, and the preset condition further includes: A multicast DRX is configured for a ninth multicast service set, and the ninth multicast service set includes all multicast services that the terminal device joins.

In a possible implementation of the first aspect, the preset condition includes at least one of the second condition and the fifth condition, and the preset condition further includes: The multicast DRX is configured for the ninth multicast service set, and the ninth multicast service set includes all the multicasts associated with the first cell set or the first DRX.

In a possible implementation of the first aspect, the preset condition includes the sixth condition, and that a terminal device does not send first CSI at first time includes: The terminal device does not send the first CSI at the first time for a third cell set, where the third cell set includes at least one cell; and the third cell set is not associated with the third timer set, and/or the third cell set is not associated with the second multicast service set.

In a possible implementation of the first aspect, the third cell set is associated with the first timer or the first DRX.

In a possible implementation of the first aspect, the third timer set is associated with the first timer or the first DRX.

In a possible implementation of the first aspect, the second multicast service set is associated with the first timer or the first DRX.

In a possible implementation of the first aspect, the second BWP is associated with the first DRX.

In a possible implementation of the first aspect, the first CSI includes any one or more of the following:
semi-persistent CSI;
periodic CSI;
CSI configured on a physical uplink shared channel PUSCH;
semi-persistent CSI configured on the PUSCH;
CSI configured on a physical uplink control channel PUCCH;
periodic CSI configured on the PUCCH;
semi-persistent CSI configured on the PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; and
periodic CSI that is configured on the PUCCH and that is not the L1-RSRP.

In a possible implementation of the first aspect, that a terminal device does not send first CSI at first time includes any one or more of the following:
the terminal device does not send CSI on the PUCCH;
the terminal device does not send the periodic CSI on the PUCCH;
the terminal device does not send the semi-persistent CSI on the PUCCH;
the terminal device does not send the CSI on the PUSCH;
the terminal device does not send the semi-persistent CSI on the PUSCH;
the terminal device does not send, on the PUCCH, the CSI that is the L1-RSRP;
the terminal device does not send, on the PUCCH, the CSI that is not the L1-RSRP;
the terminal device does not send, on the PUCCH, the periodic CSI that is the L1-RSRP; and
the terminal device does not send, on the PUCCH, the periodic CSI that is not the L1-RSRP.

In a possible implementation of the first aspect, the preset condition includes at least one of the fourth condition, the fifth condition, and the sixth condition, and the method and/or the preset condition further include/includes: The terminal device obtains first information, where the first information indicates the terminal device to send CSI in running time of a unicast timer and/or in running time of a multicast timer.

In a possible implementation of the first aspect, the preset condition further includes any one or more of the following: The terminal device does not obtain second information, where the second information includes information related to a wakeup signal; the first time is not in duration corresponding to the first timer; or the first timer is started or restarted.

In a possible implementation of the first aspect, the preset condition includes at least one of the first condition, the second condition, and the third condition, and the preset condition further includes any one or more of the following: The terminal device obtains second information, where the second information includes information related to a wakeup signal; the first time is in duration corresponding to the first timer; or the first timer is not started or not restarted.

In a possible implementation of the first aspect, the preset condition further includes: The terminal device does not obtain third information; and/or the terminal device does not obtain fourth information, where the third information indicates to report the periodic CSI or CSI that is the L1-RSRP, and the fourth information indicates to report the periodic CSI or CSI that is not the L1-RSRP.

In a possible implementation of the first aspect, the method and/or the preset condition further include/includes: The terminal device obtains fifth information, where the fifth information indicates the terminal device to send CSI based on a multicast DRX.

A second aspect of this application provides a communication method, including: if a terminal device is switched to a third BWP, the terminal device stops a timer corresponding to a multicast DRX.

A configuration message of the third BWP does not include information about a CFR. The timer corresponding to the multicast DRX includes one or more of the following timers: a fourth timer, a fifth timer, a sixth timer, and a seventh timer; the fourth timer is an on duration timer corresponding to the multicast DRX; the fifth timer is an inactivity timer corresponding to the multicast DRX; the sixth timer is a retransmission timer corresponding to the multicast DRX; and the seventh timer is an RTT timer corresponding to the multicast DRX.

In a possible implementation of the second aspect, the timer corresponding to the multicast DRX includes timers corresponding to all multicast DRXes.

A third aspect of this application provides a communication method, including: If a configuration message of a fourth BWP includes information about a CFR, and a multicast DRX is configured for a terminal device, the terminal device runs the multicast DRX, where the first BWP is an active BWP of the terminal device.

In a possible implementation of the third aspect, that the terminal device runs the multicast DRX includes: The terminal device starts an eighth timer; and/or the terminal device monitors a PDCCH in active time of the multicast DRX, where the eighth timer is an on duration timer corresponding to the multicast DRX.

In a possible implementation of the third aspect, the multicast DRX is associated with a sixth G-RNTI, and/or the multicast DRX is associated with a sixth G-CS-RNTI.

A fourth aspect of this application provides a terminal device, including a processing unit, configured not to send first channel state information CSI at first time if a preset condition is met, where the preset condition includes any one or more of the following:
a first condition, where the first condition includes: The first time does not belong to active time of a first discontinuous reception DRX, and a configuration message of a first bandwidth part BWP does not include information about a common frequency resource CFR;
a second condition, where the second condition includes: The first time does not belong to the active time of the first DRX, a configuration message of a second BWP includes the information about the CFR, and the first time does not belong to active time of a second DRX set;
a third condition, where the third condition includes a condition A and a condition B; the condition A includes: The first time does not belong to the active time of the first DRX, and the configuration message of the second BWP includes the information about the CFR; and the condition B includes: The first time belongs to active time of a third DRX set, and/or no multicast DRX is configured for a first multicast service set;
a fourth condition, where the fourth condition includes: A first timer does not run at the first time, and the configuration message of the first BWP does not include the information about the CFR;
a fifth condition, where the fifth condition includes: The first timer does not run at the first time, the configuration message of the second BWP includes the information about the CFR, and a second timer set does not run at the first time; and
a sixth condition, where the sixth condition includes a condition C and a condition D; the condition C includes: The first timer does not run at the first time, and the configuration message of the second BWP includes the information about the CFR; and the condition D includes: A third timer set runs at the first time, and/or no multicast DRX is configured for a second multicast service set.

The first DRX is used to control monitoring of terminal device specific control information. The second DRX set includes at least one multicast DRX, the at least one multicast DRX includes a first multicast DRX, and the first multicast DRX is used to control monitoring of control information related to a third multicast service. The third DRX set includes at least one multicast DRX, the at least one multicast DRX includes a second multicast DRX, and the second multicast DRX is used to control monitoring of control information related to a fourth multicast service. The first multicast service set includes at least one multicast service, and the at least one multicast service includes a fifth multicast service. The second multicast service set includes at least one multicast service, and the at least one multicast service includes a sixth multicast service. In running time of the first timer, the terminal device monitors the terminal device specific control information. The second timer set includes at least one multicast timer, and the at least one multicast timer includes a first multicast timer. In running time of the first multicast timer, the terminal device monitors control information related to a seventh multicast service. The third timer set includes at least one multicast timer, and the at least one multicast timer includes a second multicast timer. In running time of the second multicast timer, the terminal device monitors control information related to an eighth multicast service. The first BWP includes an active BWP of the terminal device, and the second BWP includes an active BWP of the terminal device.

In a possible implementation of the fourth aspect, the first BWP includes all active BWPs.

In a possible implementation of the fourth aspect, the second DRX set includes DRXes corresponding to all multicasts that the terminal device joins.

In a possible implementation of the fourth aspect, the preset condition includes at least one of the first condition and the second condition, and the processing unit is specifically configured not to send the first CSI at the first time for a first cell set, where the first cell set includes at least one cell, and the first cell set is associated with the first DRX.

In a possible implementation of the fourth aspect, the second DRX set includes DRXes corresponding to all multicasts associated with the first cell set or the first DRX.

In a possible implementation of the fourth aspect, the first BWP includes all active BWPs associated with the first cell set or the first DRX, and/or the second BWP includes an active BWP associated with the first cell set or the first DRX.

In a possible implementation of the fourth aspect, the preset condition includes the third condition, and the processing unit is specifically configured not to send the first CSI at the first time for a second cell set, where the second cell set includes at least one cell; and the second cell set is not associated with the third DRX set, and/or the second cell set is not associated with the first multicast service set.

In a possible implementation of the fourth aspect, the second cell set is associated with the first DRX.

In a possible implementation of the fourth aspect, the third DRX set is associated with the first DRX.

In a possible implementation of the fourth aspect, the first multicast service set is associated with the first DRX.

In a possible implementation of the fourth aspect, the second BWP is associated with the first DRX.

In a possible implementation of the fourth aspect, the second timer set includes multicast timers corresponding to all the multicasts that the terminal device joins.

In a possible implementation of the fourth aspect, the preset condition includes at least one of the fourth condition and the fifth condition, and the processing unit is specifically configured not to send the first CSI at the first time for the first cell set.

In a possible implementation of the fourth aspect, the second timer set includes multicast timers corresponding to all the multicasts associated with the first cell set or the first DRX.

In a possible implementation of the fourth aspect, the first BWP includes all active BWPs associated with the first cell set or the first DRX, and/or the second BWP includes an active BWP associated with the first cell set or the first DRX.

In a possible implementation of the fourth aspect, the preset condition includes at least one of the second condition and the fifth condition, and the preset condition further includes: A multicast DRX is configured for a ninth multicast service set, and the ninth multicast service set includes all multicast services that the terminal device joins.

In a possible implementation of the fourth aspect, the preset condition includes at least one of the second condition and the fifth condition, and the preset condition further includes: The multicast DRX is configured for the ninth multicast service set, and the ninth multicast service set includes all the multicasts associated with the first cell set or the first DRX.

In a possible implementation of the fourth aspect, the preset condition includes the sixth condition, and the processing unit is specifically configured not to send the first CSI at the first time for a third cell set, where the third cell set includes at least one cell; and the third cell set is not associated with the third timer set, and/or the third cell set is not associated with the second multicast service set.

In a possible implementation of the fourth aspect, the third cell set is associated with the first timer or the first DRX.

In a possible implementation of the fourth aspect, the third timer set is associated with the first timer or the first DRX.

In a possible implementation of the fourth aspect, the second multicast service set is associated with the first timer or the first DRX.

In a possible implementation of the fourth aspect, the second BWP is associated with the first DRX.

In a possible implementation of the fourth aspect, the first CSI includes any one or more of the following:
semi-persistent CSI;
periodic CSI;
CSI configured on a physical uplink shared channel PUSCH;
semi-persistent CSI configured on the PUSCH;
CSI configured on a physical uplink control channel PUCCH;
periodic CSI configured on the PUCCH;
semi-persistent CSI configured on the PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; and
periodic CSI that is configured on the PUCCH and that is not the L1-RSRP.

In a possible implementation of the fourth aspect, not sending first CSI at first time includes any one or more of the following:
not sending CSI on the PUCCH;
not sending the periodic CSI on the PUCCH;
not sending the semi-persistent CSI on the PUCCH;
not sending the CSI on the PUSCH;
not sending the semi-persistent CSI on a PUSCH;
not sending, on the PUCCH, the CSI that is the L1-RSRP;
not sending, on the PUCCH, the CSI that is not the L1-RSRP;
not sending, on the PUCCH, the periodic CSI that is the L1-RSRP; and
not sending, on the PUCCH, the periodic CSI that is not the L1-RSRP.

In a possible implementation of the fourth aspect, the preset condition includes at least one of the fourth condition, the fifth condition, and the sixth condition, and the preset condition further includes: The terminal device obtains first information, where the first information indicates the terminal device to send CSI in running time of a unicast timer and/or in running time of a multicast timer.

In a possible implementation of the fourth aspect, the preset condition further includes any one or more of the following: The terminal device does not obtain second information, where the second information includes information related to a wakeup signal; the first time is not in duration corresponding to the first timer; or the first timer is started or restarted.

In a possible implementation of the fourth aspect, the preset condition includes at least one of the first condition, the second condition, and the third condition, and the preset condition further includes any one or more of the following: The terminal device obtains second information, where the second information includes information related to a wakeup signal; the first time is in duration corresponding to the first timer; or the first timer is not started or not restarted.

In a possible implementation of the fourth aspect, the preset condition further includes: The terminal device does not obtain third information; and/or the terminal device does not obtain fourth information, where the third information indicates to report the periodic CSI or CSI that is the L1-RSRP, and the fourth information indicates to report the periodic CSI or CSI that is not the L1-RSRP.

In a possible implementation of the fourth aspect, the preset condition further includes: The terminal device obtains fifth information, where the fifth information indicates the terminal device to send CSI based on a multicast DRX.

A fifth aspect of this application provides a terminal device, including a processing unit, configured to: if the terminal device is switched to a third BWP, stop a timer corresponding to a multicast DRX.

A configuration message of the third BWP does not include information about a CFR. The timer corresponding to the multicast DRX includes one or more of the following timers: a fourth timer, a fifth timer, a sixth timer, and a seventh timer; the fourth timer is an on duration timer corresponding to the multicast DRX; the fifth timer is an inactivity timer corresponding to the multicast DRX; the sixth timer is a retransmission timer corresponding to the multicast DRX; and the seventh timer is an RTT timer corresponding to the multicast DRX.

In a possible implementation of the fifth aspect, the timer corresponding to the multicast DRX includes timers corresponding to all multicast DRXes.

A sixth aspect of this application provides a terminal device, including a processing unit, configured to: if a configuration message of a fourth BWP includes information about a CFR, and a multicast DRX is configured for the terminal device, run the multicast DRX, where the first BWP is an active BWP of the terminal device.

In a possible implementation of the sixth aspect, that the terminal device runs the multicast DRX includes: The terminal device starts an eighth timer; and/or the terminal device monitors a PDCCH in active time of the multicast DRX, where the eighth timer is an on duration timer corresponding to the multicast DRX.

In a possible implementation of the sixth aspect, the multicast DRX is associated with a sixth G-RNTI, and/or the multicast DRX is associated with a sixth G-CS-RNTI.

A seventh aspect of this application provides a terminal device, including: a memory, where the memory stores computer-readable instructions; and a processor connected to the memory, where when the computer-readable instructions are executed by the processor, the terminal device is enabled to implement the method according to any one of the first aspect and the possible implementations.

An eighth aspect of this application provides a communication apparatus, including: a memory, where the memory stores computer-readable instructions; and a processor connected to the memory, where when the computer-readable instructions are executed by the processor, the terminal device is enabled to implement the method according to any one of the first aspect and the possible implementations.

A ninth aspect of this application provides a computer program product, including computer-readable instructions. When the computer-readable instructions are run on a computer, the computer is enabled to perform the method according to any one of the first aspect and the possible implementations.

A tenth aspect of this application provides a computer-readable storage medium, where the computer-readable storage medium stores instructions, and when the instructions are run on a computer, the computer is enabled to perform the method according to any one of the first aspect and the possible implementations.

An eleventh aspect of this application provides a chip, including a processor. The processor is configured to read and execute a computer program stored in a memory, to perform the method according to any one of possible implementations of the foregoing aspects. Optionally, the chip includes the memory, and the memory and the processor are connected to the memory through a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

For technical effect brought by any one of the fourth aspect, the fifth aspect, the sixth aspect, the seventh aspect, the eighth aspect, the ninth aspect, the tenth aspect, the eleventh aspect, and the implementations thereof, refer to technical effect brought by corresponding implementations of the first aspect, the second aspect, and the third aspect. Details are not described herein again.

According to the communication method and the communication apparatus provided in this application, unnecessary CSI reporting can be reduced. This can reduce power consumption of a terminal device.

### BRIEF DESCRIPTION OF DRAWINGS

FIG. 1 is a diagram of a network architecture to which an embodiment of this application is applicable;
FIG. 2 is a diagram of a DRX cycle according to an embodiment of this application;
FIG. 3 is a diagram of a communication method according to an embodiment of this application;
FIG. 4 is a diagram of another communication method according to an embodiment of this application;
FIG. 5 is a diagram of a communication method according to an embodiment of this application;
FIG. 6 is a diagram of another communication method according to an embodiment of this application;
FIG. 7 is a diagram of a communication method according to an embodiment of this application;
FIG. 8 is a diagram of another communication method according to an embodiment of this application;
FIG. 9 is a diagram of a terminal device according to an embodiment of this application;
FIG. 10 is a diagram of a communication apparatus according to an embodiment of this application;
FIG. 11 is a diagram of another terminal apparatus according to an embodiment of this application; and
FIG. 12 is a diagram of another communication apparatus according to an embodiment of this application.

### DESCRIPTION OF EMBODIMENTS

This application provides a communication method and a communication apparatus, to reduce unnecessary CSI reporting.

The following describes embodiments of this application with reference to accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. Terms such as "first" and "second" do not limit a number and an execution sequence, and the terms such as "first" and "second" do not indicate a definite difference. In this application, the term "example" or "for example" indicates an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a future communication system, and the like. Details are not limited herein.

The communication method in embodiments of this application may be applied to a next-generation radio access network (next generation radio access network, NG-RAN) system, or may be applied to an LTE system, or may be applied to a system such as a 6G system or 7G system that may appear in the future, or may be applied to a central unit (central unit, CU)-distributed unit (distributed unit, DU) architecture. This is not limited in embodiments of this application.

A terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect to a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like.

A network device includes, for example, an access network device, and/or a core network device. The access network device is a device with a wireless transceiver function, and is configured to communicate with the terminal device. The access network device includes but is not limited to a base station (BTS, NodeB, eNodeB/eNB, or gNodeB/gNB) in the communication system, a transmission reception point (transmission reception point, TRP), a base station that is subsequently evolved from 3GPP, and an access node, a wireless relay node, a wireless backhaul node, and the like in a Wi-Fi system. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the network device may be a radio controller, a central unit (central unit, CU), and/or a distributed unit (distributed unit, DU) in a cloud radio access network (cloud radio access network, CRAN) scenario. Alternatively, the network device may be a server, a wearable device, a vehicle-mounted device, or the like. For example, a network device in a V2X technology may be a road side unit (road side unit, RSU). The following provides descriptions by using an example in which the access network device is a base station. A plurality of network devices in the communication system may be base stations of a same type, or may be base stations of different types. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in this application. A 5G system is used as an example, and the core network device includes: an access and mobility management function (access and mobility management function, AMF), a session management function (session management function, SMF), a user plane function (user plane function, UPF), and the like.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

The terms "system" and "network" may be used interchangeably in embodiments of this application.

The method provided in embodiments of this application may be applied to but is not limited to the following fields: a multimedia broadcast multicast service (multimedia broadcast multicast service, MBMS), single-cell point-to-multipoint (single cell point to multipoint, SC-PTM), a multicast broadcast service (multicast and broadcast services, or multicast/broadcast services, or multicast-broadcast services, MBS), multimedia broadcast multicast service single frequency network (multimedia broadcast multicast service single frequency network, MBSFN), a dual-channel intelligent unicast (dual-channel intelligent unicast, DC-IU), a broadcast (broadcast), a multicast (multicast), a broadcast multicast (multicast broadcast), a groupcast (groupcast), an internet of vehicles (vehicle to everything, V2X), public safety (public safety), mission critical (mission critical), transparent IPv4/IPv6 multicast delivery (transparent IPv4/IPv6 multicast delivery), IPTV, software delivery over wireless (software delivery over wireless), group communications (group communications), an internet of things (internet of things, IoT), a television video (TV video), a television (TV), a linear television (linear TV), live broadcast (live), and a broadcast service (radio services).

The communication method provided in embodiments of this application may be applied to a next-generation radio access network (next generation radio access network, NG-RAN) system, a long term evolution (long term evolution, LTE) system, a 5th generation (5th-generation, 5G) system, a new radio (new radio, NR) system, a future evolved system (for example, 6G), or a plurality of converged communication systems, and may be applied to a central unit (central unit, CU)-distributed unit (distributed unit, DU) architecture. A specific application system is not limited in this application.

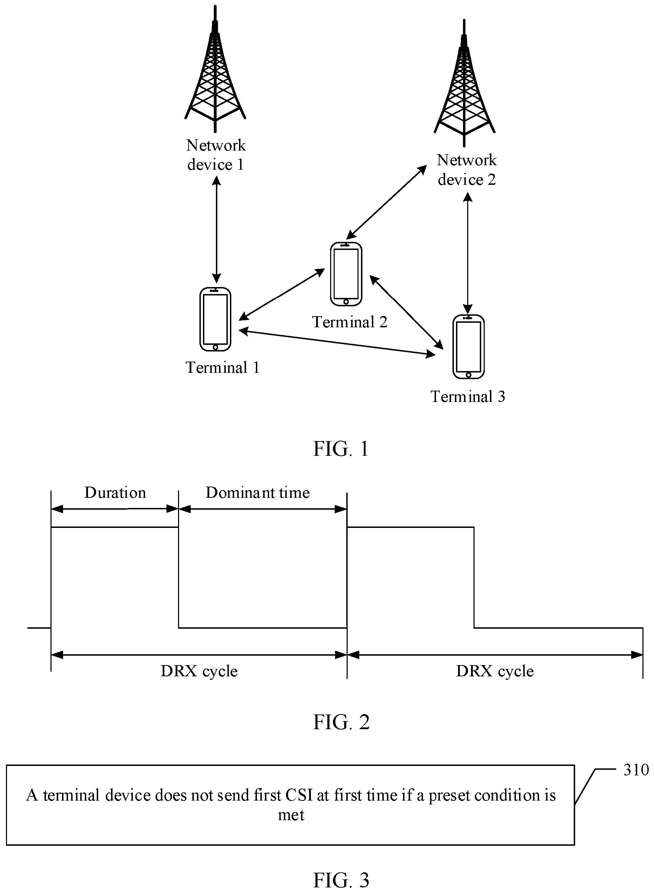

Refer to FIG. 1. The method provided in embodiments of this application mainly relates to communication between a terminal and a network device. FIG. 1 is a diagram of an architecture of an application scenario of a communication method according to an embodiment of this application.

The terminal in embodiments of this application is an entity that is on a user side and that is configured to receive a signal, or send a signal, or receive a signal and send a signal. The terminal is configured to provide one or both of a voice service and a data connectivity service for a user. The terminal may also be referred to as user equipment (user equipment, UE), a terminal device, an access terminal, a subscriber unit, a subscriber station, a mobile station, a remote station, a remote terminal, a mobile device, a user terminal, a wireless communication device, a user agent, or a user apparatus. The terminal may be a handheld device with a wireless communication function, such as a cellular phone (cellular phone), a smartphone (smartphone), a cordless phone, a personal digital processing (personal digital assistant, PDA) device, a laptop computer (laptop computer), a tablet computer, a mobile station (mobile station, MS), or an internet of things (internet of things, IoT) device, a computing device, another processing device connected to a wireless modem, a vehicle-mounted device, or a wearable device (which may also be referred to as a wearable intelligent device). The terminal may alternatively be a V2X device, for example, a smart car (smart car or intelligent car) or a roadside unit (road site unit, RSU). Alternatively, the terminal may be a terminal in a next-generation communication system, for example, a terminal in a 5G system, a terminal in a future evolved PLMN, or a terminal in an NR system.

The network device in embodiments of this application is an entity that is on a network side and that is configured to send a signal, or receive a signal, or send a signal and receive a signal. The network device may be an apparatus deployed in a radio access network (radio access network, RAN) to provide a wireless communication function for the terminal. For example, the network device may be a transmission reception point (transmission reception point, TRP), a base station, a control node (for example, a network controller, a wireless controller (for example, a wireless controller in a cloud radio access network (cloud radio access network, CRAN) scenario)), or the like in any form. Specifically, the network device may be a macro base station, a micro base station (also referred to as a small cell), a relay station, an access point (access point, AP), or the like in any form, or may be an antenna panel of a base station. The control node may be connected to a plurality of base stations, and configure resources (the resources in embodiments of this application may also be referred to as grants) for a plurality of terminals covered by the plurality of base stations. In systems using different radio access technologies, names of devices with the base station function may be different. For example, the device may be referred to as an evolved NodeB (evolved NodeB, eNB, or eNodeB) in the LTE system, or may be referred to as a next-generation node base station (next generation node base station, gNB) in the 5G system or the NR system. A specific name of the base station is not limited in this application. Alternatively, the network device may be a network device or the like in a future evolved public land mobile network (public land mobile network, PLMN).

To better understand the communication method disclosed in embodiments of this application, related concepts in embodiments of this application are briefly described.

### 1. Multicast and broadcast services (multicast and broadcast services, MBS)

A multicast or multicast service mentioned in embodiments of this application may be an MBS in a new radio (new radio, NR) system. The MBS is introduced by the 3GPP to effectively use mobile communication network resources, and provides a point-to-multipoint service that a data source sends data to a plurality of users in a mobile communication network, thereby implementing network resource sharing and improving resource utilization, especially air interface resources. The NR MBS supports a multicast and a broadcast.

### 2. Multicast and unicast

The multicast may include any one or more of the following: a multimedia broadcast multicast service (multimedia broadcast multicast service, MBMS) or a broadcast in an MBS, a groupcast in the MBMS or the MBS, a multicast in the MBMS or the MBS, a groupcast in V2X, a multicast in V2X, a broadcast (broadcast) in V2X, a multicast or a groupcast (multicast), a groupcast (groupcast), and a broadcast.

A groupcast service may include/be replaced with any one or more of the following: a broadcast service, a multicast service, an MBS service, an MBS broadcast service, an MBS multicast service, a V2X multicast service, and a V2X broadcast service.

Data corresponding to the multicast service may be referred to as multicast data.

Aunicast may include either or both of the following: a unicast in V2X and a unicast (unicast). Optionally, the unicast may be understood as unicast transmission.

The multicast service may also be understood as a multicast session or an MBS session.

A "groupcast" in embodiments of this application may also be replaced with a noun such as a "multicast". Correspondingly, a groupcast service may also be replaced with a multicast service.

The multicast may provide a same service and/or same content data to one group of/a plurality of terminal devices at the same time.

For example, a multicast may be for a group of specific terminal devices, and the terminal devices may need to perform a "group joining process".

Correspondingly, the unicast may be understood as providing a same service and/or same content data to one terminal device at the same time. The unicast may be understood as follows: If one piece of data needs to be sent to a plurality of devices, the data needs to be separately sent to each device.

### 3. Discontinuous reception (discontinuous reception, DRX)

In a wireless communication system, to further reduce power consumption of a terminal device while ensuring that data can be effectively transmitted, a DRX function is introduced to control behavior of monitoring a PDCCH by the terminal device. When a network device configures a DRX function for the terminal device, the terminal device may enter a dominant state at some moments, so that the terminal device does not need to continuously monitor a PDCCH. When the PDCCH needs to be monitored, the terminal device may be woken up from the dominant state. This can reduce power consumption of the terminal device to some extent.

The following briefly describes the DRX with reference to FIG. 2. FIG. 2 is a diagram of a DRX cycle according to an embodiment of this application.

As shown in FIG. 2, a DRX cycle (DRX cycle) may include duration (for example, on-duration) or wakeup time (for example, on-duration) and dominant time (for example, opportunity for DRX). The duration period is duration in which the terminal device waits to receive a PDCCH after being woken up. In the duration period, the terminal device monitors the PDCCH. If the terminal device can successfully decode the PDCCH, the terminal device may remain in a wakeup state, or prolong active time. The dominant time period is dominant time of the terminal device. In this time period, the terminal device does not need to monitor a PDCCH, to reduce power consumption. It may be understood that longer dominant time of the terminal device indicates lower power consumption of the terminal device, but correspondingly, a service transmission delay of the terminal device increases.

A DRX function of the terminal device may be configured by the network device. It should be noted that, even if the network device configures the DRX function for the terminal device, the terminal device may monitor the PDCCH based on a requirement of another medium access control (medium access control, MAC) layer process. To be specific, when the another MAC layer process requires the terminal device to keep monitoring the PDCCH, the terminal device needs to continuously monitor the PDCCH regardless of a DRX status in this case.

### 3.1. Unicast DRX

When DRX group (DRX group) is not configured (or in R15), a DRX parameter is configured by the network device for a MAC entity of each terminal device or each terminal device, that is, a MAC entity of one terminal device uses one set of DRX parameters.

In a carrier aggregation (carrier aggregation, CA) scenario, the terminal device uses a same set of DRX parameters for all activated cells, and runs one set of DRX.

In a multi-radio dual connectivity (multi-radio dual connectivity, MR-DC) scenario, each of a master node (master node, MN) and a secondary node (secondary node, SN) corresponds to a MAC entity of one terminal device. Therefore, the terminal device has two sets of independent DRX parameters for the MN and the SN, and runs two sets of DRXes. To be specific, the terminal device uses one set of DRX parameters and runs one set of DRX for all activated serving cells in a master cell group (master cell group, MCG); and uses another set of DRX parameters and runs another set of DRX for all activated serving cells in a secondary cell group (secondary cell group, SCG).

When DRX group is not configured, DRX active time may include any one or more of the following:
running time of drx-onDurationTimer;
running time of drx-InactivityTimer;
running time of drx-RetransmissionTimerDL;
running time of drx-RetransmissionTimerUL;
running time of drx-RetransmissionTimerSL;
time in which a scheduling request (scheduling request, SR) is sent on a physical uplink control channel (physical uplink control channel, PUCCH) and the SR is waiting to be processed; and
time in which a PDCCH that is scrambled by a C-RNTI and that indicates new transmission is not received after a random access response (random access response, RAR) is successfully received in a non-contention based-random access process (that is, after non-contention-based random access (random access, RA) succeeds).

The network device controls a DRX operation by configuring any one or more of the following parameters by using a radio resource control (Radio Resource Control, RRC) message:
drx-onDurationTimer: a period of time at the beginning of a DRX cycle, where a location at which drx-onDurationTimer is started or restarted may be calculated based on a parameter configured by a base station and a formula specified in a protocol;
drx-InactivityTimer: a period of time after a PDCCH occasion (occasion) in which new uplink or downlink transmission is indicated, where for example, the terminal device receives a PDCCH (for example, a PDCCH scrambled by a C-RNTI or a CS-RNTI), to indicate that there is new uplink or downlink transmission (that is, new transmission scheduling), and drx-InactivityTimer is started or restarted;
drx-RetransmissionTimerDL: maximum duration until downlink (downlink, DL) retransmission is received, where for example, if drx-HARQ-RTT-TimerUL expires, and data is not successfully decoded, drx-RetransmissionTimerDL is started or restarted;
drx-RetransmissionTimerUL: maximum duration until a grant for uplink (uplink, UL) retransmission is received, where for example, in a 1^{st} symbol after the drx-HARQ-RTT-TimerUL expires, the drx-RetransmissionTimerUL is started or restarted for a corresponding HARQ process.

Drx-HARQ-RTT-TimerDL: minimum duration before a DL assignment for HARQ retransmission is expected by a MAC entity, or minimum duration before a DL assignment for HARQ retransmission is expected to be received by a MAC entity, where for example, the terminal device receives a PDCCH (for example, a PDCCH scrambled by a C-RNTI or a CS-RNTI), to indicate that there is downlink transmission, or the terminal device receives data in a configured downlink assignment (for example, an SPS resource associated with a unicast), and drx-HARQ-RTT-TimerDL is started or restarted after feedback, where RTT represents round trip time (Round Trip Time);
drx-HARQ-RTT-TimerUL: minimum duration before a UL HARQ retransmission grant is expected by the MAC entity, or minimum duration before a UL HARQ retransmission grant is expected to be received by a MAC entity, where for example, the terminal device sends a MAC protocol data unit (protocol data unit, PDU) in a configured uplink grant (for example, an SPS resource associated with a unicast), or the terminal device receives a PDCCH, to indicate UL transmission, and drx-HARQ-RTT-TimerUL is started or restarted;
drx-RetransmissionTimerSL: maximum duration until a grant for sidelink (sidelink, SL) retransmission is received; and
drx-HARQ-RTT-TimerSL: minimum duration before the SL retransmission grant is expected or minimum duration before the SL retransmission grant is expected to be received.

Compared with R15, in the R16 standard protocol, functions of a DRX group and a DCI with a CRC scrambled by a power saving radio network temporary identifier (power saving radio network temporary identifier, PS-RNTI) (DCI with CRC scrambled by PS-RNTI, DCP) are added to a unicast DRX.

The following briefly describes a DRX group (group).

DRX group: In one MAC entity, different DRX groups are distinguished based on different frequency ranges. For example, DRX groups are distinguished based on a frequency range (frequency range, FR) 1 and an FR 2. In other words, a concept of a secondary DRX group is introduced for a cell in the FR 2. Each cell belongs to one DRX group.

For each cell group/DRX group in the FR 1 and the FR 2, there is a set of drx-onDurationTimer and drx-InactivityTimer parameters, and other DRX parameters are shared.

Each DRX group runs one set of DRX, that is, in one MAC entity, there may be two DRX groups, and two sets of DRXes are run.

When a DRX group is configured, active time of the DRX group may include any one or more of the following:
running time of drx-onDurationTimer of the DRX group;
running time of drx-InactivityTimer of the DRX group;
running time of drx-RetransmissionTimerDL corresponding to the DRX group (or of any cell in the DRX group);
running time of drx-RetransmissionTimerUL corresponding to the DRX group (or of any cell in the DRX group);
running time of drx-RetransmissionTimerSL corresponding to the DRX group (or of any cell in the DRX group);
time in which an SR is sent on a PUCCH and the SR is waiting to be processed; and time in which a PDCCH that is scrambled by a C-RNTI and that indicates new transmission is not received after an RAR is successfully received in a non-contention-based random access process (that is, after non-contention-based RA succeeds).

The following briefly describes a DCP.

DCP: When the network device configures a DCP function for the terminal device, the terminal device monitors, at time before drx-onDurationTimer is started, DCI with a CRC scrambled by a PS-RNTI, to determine whether to start drx-onDurationTimer, thereby further reducing power consumption of the terminal device.

For example, when the DCP function is configured for the terminal device, the terminal device may determine, in the following several manners, whether to start drx-onDurationTimer.

Manner 1: If the network device configures ps-wakeup for the terminal device, and the terminal device does not detect the DCI scrambled by the PS-RNTI, the terminal device may start drx-onDurationTimer.

Manner 2: If the network device does not configure ps-wakeup for the terminal device, the terminal device detects the DCI scrambled by the PS-RNTI, and the DCI indicates that the terminal device is woken up, the terminal device starts drx-onDurationTimer.

### 3.2. Multicast DRX.

The multicast DRX and a unicast DRX are independent. A multicast DRX parameter may be for each (per) G-RNTI and/or G-CS-RNTI, and the multicast DRX is run for each (per) G-RNTI and/or G-CS-RNTI. It should be noted that there may also be specific association or interaction between the unicast DRX and the multicast DRX. For example, when receiving the DCI scrambled by the G-RNTI, the terminal device may also start or restart drx-HARQ-RTT-TimerDL of the unicast DRX, and/or stop drx-RetransmissionTimerDL of the unicast DRX.

For one multicast or for one G-RNTI or G-CS-RNTI, active time (active time) of a multicast DRX may include any one or more of the following: running time of drx-onDurationTimerPTM for the G-RNTI or G-CS-RNTI, running time of drx-InactivityTimerPTM for the G-RNTI or G-CS-RNTI, or running time of drx-RetransmissionTimerDL-PTM for the G-RNTI or G-CS-RNTI.

A multicast DRX function may be described as follows:
The network device controls a multicast DRX operation by configuring any one or more of the following parameters by using an RRC message:
drx-onDurationTimerPTM: a period of time at the beginning of a DRX cycle, where a location at which drx-onDurationTimerPTM is started or restarted is calculated based on a parameter configured by a base station and a formula specified in a protocol;
drx-InactivityTimerPTM: a period of time after a PDCCH occasion in which new DL transmission scheduling is indicated, where for example, the terminal device receives a PDCCH (for example, a PDCCH scrambled by a G-RNTI or a G-CS-RNTI), to indicate that there is new downlink transmission (that is, new transmission scheduling), and drx-InactivityTimerPTM is started or restarted;
drx-RetransmissionTimerDL-PTM: maximum duration until DL retransmission is received, where for example, if drx-HARQ-RTT-TimerDL-PTM expires, and data is not successfully decoded, drx-RetransmissionTimerDL-PTM is started or restarted; and
drx-HARQ-RTT-TimerDL-PTM: minimum duration before the DL retransmission is expected or minimum duration before the DL retransmission is expected to be received, where for example, the terminal device receives a PDCCH (for example, a PDCCH scrambled by a G-RNTI or a G-CS-RNTI), to indicate that there is downlink transmission, or the terminal device receives data in a downlink assignment of multicast configuration, and drx-HARQ-RTT-TimerDL-PTM is started or restarted.

It should be noted that any one or more of drx-RetransmissionTimerDL, drx-HARQ-RTT-TimerDL, drx-RetransmissionTimerUL, drx-HARQ-RTT-TimerUL, drx-RetransmissionTimerSL, drx-HARQ-RTT-TimerSL, drx-HARQ-RTT-TimerDL-PTM, and drx-RetransmissionTimerDL-PTM are for each (per) HARQ process. For example, the terminal device maintains different drx-HARQ-RTT-TimerDL for different HARQ processes. For example, the terminal device maintains different drx-RetransmissionTimerUL for different HARQ processes. For example, the terminal device maintains different drx-HARQ-RTT-TimerDL-PTM for different HARQ processes. For example, the terminal device maintains different drx-RetransmissionTimerDL-PTM for different HARQ processes.

It should be noted that either or both of drx-HARQ-RTT-TimerDL-PTM and drx-RetransmissionTimerDL-PTM is for each (per) G-RNTI and/or G-CS-RNTI or each (per) multicast/multicast service. For example, the terminal device maintains different drx-HARQ-RTT-TimerDL-PTM for different G-RNTIs and/or G-CS-RNTIs, or different multicasts/multicast services. For example, the terminal device maintains different drx-RetransmissionTimerDL-PTM for different G-RNTIs and/or G-CS-RNTIs, or different multicasts/multicast services.

It should be noted that, for DRX-related content, refer to 3GPP TS 38.321: "NR; Medium Access Control (MAC); Protocol specification". Details are not described herein again.

### 4. Channel state information (channel state information, CSI) and channel sounding reference signal (sounding reference signal, SRS) sending

For example, accurate CSI enables a transmit end to perform appropriate data processing on to-be-sent data, such as precoding, or determining a modulation and coding scheme, thereby improving data transmission efficiency and system performance.

Usually, the terminal device may measure a reference signal sent by the network device, to obtain CSI, and feed back the CSI to the network device, so that the network device performs link adaptation for subsequent data transmission.

For example, configuration information of the CSI may be configured by the network device by using dedicated radio resource control (radio resource control, RRC) signaling.

For example, in wireless communication, the SRS is used to estimate uplink channel frequency domain information and perform frequency-selective scheduling, and is used to estimate a downlink channel and perform downlink beamforming.

The following briefly describes solutions in which the terminal device sends the CSI and the SRS to the network device in R15, R16, and R17.

In R15 (or when DCP monitoring is not configured and DRX group is not configured), a solution in which the terminal device sends the CSI and the SRS in a unicast DRX includes either or both of the following:
(1) If a symbol n is not in the DRX active time, the terminal device does not send semi-persistent CSI configured on a PUSCH, the terminal device does not send CSI on a PUCCH, or the terminal device does not send a periodic SRS or a semi-persistent SRS; and
(2) if CSI-masking is configured for the terminal device, and drx-onDurationTimer is not run on the symbol n, the terminal device does not send the CSI on the PUCCH.

In R16 (or when DCP monitoring is configured), a solution in which the terminal device sends the CSI and the SRS in a unicast DRX includes any one or more of the following:
(1) If DCP monitoring is configured for the terminal device, a symbol n is in a time period of drx-onDurationTimer, drx-onDurationTimer in a current DRX cycle is not started, and the symbol n is not in the DRX active time, the terminal device performs any one or more of the following:
   (1.1) The terminal device does not send semi-persistent CSI configured on a PUSCH, and the terminal device does not send a periodic SRS or a semi-persistent SRS;
   (1.2) if ps-TransmitPeriodicL1-RSRP being true is not configured for the terminal device, where ps-TransmitPeriodicL1-RSRP being true indicates that the terminal device needs to report, in this case, periodic CSI that is L1-RSRP, and the terminal device does not send, on a PUCCH, the periodic CSI that is L1-RSRP; and
   (1.3) if ps-TransmitOtherPeriodicCSI being true is not configured for the terminal device, where ps-TransmitOtherPeriodicCSI being true indicates that the terminal device needs to report, in this case, periodic CSI that is not the L1-RSRP, and the terminal device does not send, on the PUCCH, the periodic CSI that is not the L1-RSRP.
(2) If DCP monitoring is not configured for the terminal device, or the symbol n is not in the time period of drx-onDurationTimer, or drx-onDurationTimer in the current DRX cycle is started, and if the symbol n is not in the DRX active time, the terminal device does not send the semi-persistent CSI configured on the PUSCH, the terminal device does not send CSI on the PUCCH, or the terminal device does not send the periodic SRS or the semi-persistent SRS.
(3) If DCP monitoring is not configured for the terminal device, or the symbol n is not in the time period of drx-onDurationTimer, or drx-onDurationTimer in the current DRX cycle is started, and if CSI-masking is configured for the terminal device, and drx-onDurationTimer is not run on the symbol n, the terminal device does not send the CSI on the PUCCH.

In R16 (or when a DRX group is configured), another solution in which the terminal device sends the CSI and the SRS in a unicast DRX includes either or both of the following:
(1) If a symbol n is not in active time of one DRX group, in the DRX group, the terminal device does not send semi-persistent CSI configured on a PUSCH, the terminal device does not send CSI on a PUCCH in the DRX group, or the terminal device does not send a periodic SRS and a semi-persistent SRS in the DRX group; and
(2) if CSI-masking is configured for the terminal device, and drx-onDurationTimer for one DRX group is not run on the symbol n, the terminal device does not send CSI on the PUCCH in the DRX group.

In R17 (or when there is a multicast), a solution in which the terminal device sends the CSI and the SRS includes any one or more of the following:
(1) If DCP monitoring is configured for the terminal device, a symbol n is in a time period of drx-onDurationTimer, and drx-onDurationTimer in a current DRX cycle is not started, if the symbol n is not in active time of the unicast DRX, and if the terminal device is not configured to send CSI and/or an SRS based on a multicast DRX, the terminal device performs any one or more of the following:
   (1.1) The terminal device does not send semi-persistent CSI configured on a PUSCH, and the terminal device does not send a periodic SRS or a semi-persistent SRS;
   (1.2) if ps-TransmitPeriodicL1-RSRP being true is not configured for the terminal device, the terminal device does not send, on a PUCCH, periodic CSI that is L1-RSRP; and
   (1.3) if ps-TransmitOtherPeriodicCSI being true is not configured for the terminal device, the terminal device does not send, on the PUCCH, periodic CSI that is not the L1-RSRP.
(2) If unicast DCP monitoring is configured for the terminal device, the symbol n is in the time period of drx-onDurationTimer, and drx-onDurationTimer in the current DRX cycle is not started, if the symbol n is not in the active time of the unicast DRX, if the terminal device is configured to send the CSI and/or the SRS based on the multicast DRX, and if the symbol n is not in active time of all multicast DRXes that UE joins, and a multicast DRX is configured for each multicast that the UE joins, the terminal device performs any one or more of the following:
   (2.1) The terminal device does not send the semi-persistent CSI configured on the PUSCH, and the terminal device does not send the periodic SRS or the semi-persistent SRS;
   (2.2) if ps-TransmitPeriodicL1-RSRP being true is not configured for the terminal device, the terminal device does not send, on the PUCCH, the periodic CSI that is the L1-RSRP; and
   (2.3) if ps-TransmitOtherPeriodicCSI being true is not configured for the terminal device, the terminal device does not send, on the PUCCH, the periodic CSI that is not the L1-RSRP.
(3) If DCP monitoring is not configured for the terminal device, or the symbol n is not in the time period of drx-onDurationTimer, or drx-onDurationTimer in the current DRX cycle is started, if the symbol n is not in active time of one DRX group, and if the terminal device is not configured to send the CSI and/or the SRS based on the multicast DRX, in the DRX group, the terminal device does not send the semi-persistent CSI configured on the PUSCH, the terminal device does not send the CSI on the PUCCH in the DRX group, or the terminal device does not send the periodic SRS and the semi-persistent SRS in the DRX group.
(4) If DCP monitoring is not configured for the terminal device, or the symbol n is not in the time period of drx-onDurationTimer, or drx-onDurationTimer in the current DRX cycle is started, and the symbol n is not in active time of one DRX group, if the terminal device is configured to send the CSI and/or the SRS based on the multicast DRX, and if the symbol n is not in active time of all multicast DRXes that the UE joins and that are associated with the DRX group, and a multicast DRX is configured for each multicast that the UE joins and that is associated with the DRX group, in the DRX group, the terminal device does not send the semi-persistent CSI configured on the PUSCH, the terminal device does not send the CSI on the PUCCH in the DRX group, or the terminal device does not send the periodic SRS and the semi-persistent SRS in the DRX group.
(5) If DCP monitoring is not configured for the terminal device, or the symbol n is not in the time period of drx-onDurationTimer, or drx-onDurationTimer in the current DRX cycle is started, and if the terminal device is not configured to send the CSI and/or the SRS based on the multicast DRX, and if CSI-masking is configured for the terminal device, and drx-onDurationTimer for one DRX group is not run on the symbol n, the terminal device does not send the CSI on the PUCCH in the DRX group.
(6) If DCP monitoring is not configured for the terminal device, or the symbol n is not in the time period of drx-onDurationTimer, or drx-onDurationTimer in the current DRX cycle is started, and if the terminal device is configured to send the CSI and/or the SRS based on the multicast DRX, and if CSI-masking is configured for the terminal device, drx-onDurationTimer for one DRX group is not run on the symbol n, and if on duration timers of all multicasts that the UE joins and that are associated with the DRX group do not run on the symbol n, and a multicast DRX is configured for each multicast that the UE joins and that is associated with the DRX group, the terminal device does not send the CSI on the PUCCH in the DRX group.

It should be noted that for content related to CSI and SRS sending, refer to 3GPP TS 38.321: "NR; Medium Access Control (MAC); Protocol specification". Details are not described herein again.

### 5. Bandwidth part (Bandwidth Part, BWP) and common frequency resource (common frequency resource, CFR)

For example, the BWP may be understood as a subset of a cell bandwidth. For example, the BWP may be understood as a part of a cell bandwidth. For example, a cell bandwidth includes the BWP. For example, the BWP may alternatively be equal to a cell bandwidth.

For example, for one cell, a terminal device may obtain configuration of one or more BWPs, and the terminal device may perform BWP switching. However, there is only one active BWP at specific time. On the active BWP, the terminal device may perform sending or receiving. For example, for an active BWP, the terminal device may perform any one or more of the following: transmitting on a UL-SCH, transmitting on a RACH, monitoring a PDCCH, transmitting a PUCCH, reporting CSI, transmitting an SRS, receiving a DL-SCH, transmitting a PSBCH, transmitting a PSCCH, transmitting an SL-SCH, transmitting a PSFCH, receiving a PSFCH, receiving a PSBCH, receiving a PSCCH, and receiving an SL-SCH.

For example, the CFR may be understood as a subset of a cell bandwidth or a BWP. For example, the CFR may be understood as a part of a cell bandwidth or a BWP. For example, a cell bandwidth or a BWP includes the CFR. For example, the CFR may also be equal to a cell bandwidth or a BWP.

For example, for one cell, the terminal device may obtain configuration of one or more BWPs, and configuration information of one of the BWPs may include information related to a multicast CFR. The terminal device may receive a multicast service/data on the multicast CFR. For example, if a configuration message of an active BWP of the terminal device includes information about the multicast CFR, the terminal device may receive the multicast service/data on the BWP or the multicast CFR; or if a configuration message of an active BWP of the terminal device does not include information about the multicast CFR, the terminal device cannot receive the multicast service/data on the BWP.

It should be noted that the BWP or the CFR is used for description in this specification, but a name of the BWP or the CFR is not limited to the BWP or the CFR, or may be another name.

### Problem 1:

According to the conventional technology, in the following two scenarios, even if a configuration message of an active BWP of a terminal device does not include information about a multicast CFR, the terminal device sends CSI and/or an SRS. However, if the configuration message of the active BWP of the terminal device does not include the information about the multicast CFR, the terminal device cannot (or may not) receive a multicast service/data, or the terminal device does not receive a multicast service/data. It may be understood that CSI and/or SRS sending in this case is meaningless, and power consumption of the terminal device may be increased. For example, in this scenario, a network device may not perform related multicast scheduling, and therefore the terminal device does not need to send the CSI and/or the SRS. Alternatively, the network device needs to perform related multicast scheduling, but because the terminal device does not receive the multicast service/data, the network device does not need to consider the CSI and/or the SRS of the terminal device when performing multicast scheduling, and therefore the terminal device does not need to send the CSI and/or the SRS.

Scenario 1: If no multicast DRX is configured for some or all multicasts in multicasts that the terminal device joins.

Scenario 2: If a multicast DRX of the multicast that the terminal device joins is in active time, or drx-onDurationTimerPTM of the multicast that the terminal device joins is running.

In view of this, embodiments of this application provide a communication method and a communication apparatus, to send the CSI and/or the SRS when whether the configuration message of the BWP includes the information about the multicast CFR is considered.

It should be noted that the terminal device is used as an example for description in embodiments of this application. Alternatively, the terminal device may be replaced with a MAC entity of the terminal device, another entity of the terminal device, or another device. This is not limited in this application.

In embodiments of this application, "not send" may be understood as "not report".

In embodiments of this application, "send" may be understood as "report".

In embodiments of this application, "not belong to" is understood as "not in" or "not exist".

In embodiments of this application, "belong to" is understood as "in" or "exist".

In embodiments of this application, "associated" may be understood as "corresponding".

In embodiments of this application, "not include" may be understood as "not exist".

In embodiments of this application, a bandwidth part may be understood as/replaced with a bandwidth portion.

In embodiments of this application, a CFR may be understood as/replaced with a multicast CFR or a multicast-related CFR.

In embodiment of this application, starting may be understood as/replaced with starting or restarting.

It should be noted that, in embodiments of this application, that a preset condition includes a condition 1, 2, 3, 4, 5, or 6 may be understood as "if the preset condition includes the condition 1, 2, 3, 4, 5, or 6", or "for that the preset condition includes the condition 1, 2, 3, 4, 5, or 6".

The following describes in detail a communication method provided in an embodiment of this application with reference to FIG. 3. As shown in FIG. 3, the method may include step 310.

310: A terminal device does not send first channel state information CSI at first time if a preset condition is met, where the preset condition includes any one or more of a condition 1, a condition 2, a condition 3, a condition 4, a condition 5, and a condition 6.

Optionally, "meeting a preset condition" may include: The terminal device determines that the preset condition is met.

It should be noted that the first time may be understood as a period of time, or may be understood as a time point or a moment. This is not limited in embodiments of this application. For example, the first time may also be understood as any one or more of the following: one or more symbols, one or more slots, one or more subframes, one or more frames, or the like.

For example, the first time may be understood as a symbol n. For example, the first time may also be referred to as a first moment.

It should be noted that the condition 1 is a first condition, the condition 2 is a second condition, the condition 3 is a third condition, the condition 4 is a fourth condition, the condition 5 is a fifth condition, and the condition 6 is a sixth condition.

Optionally, the first CSI may include any one or more of the following:
semi-persistent CSI;
periodic CSI;
CSI configured on a physical uplink shared channel PUSCH;
semi-persistent CSI configured on the PUSCH;
CSI configured on a physical uplink control channel PUCCH;
periodic CSI configured on the PUCCH;
semi-persistent CSI configured on the PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; or
periodic CSI that is configured on the PUCCH and that is not the L1-RSRP.

Optionally, that a terminal device does not send first CSI at first time may include: The terminal device does not send the first CSI or CSI on the PUCCH at the first time, and/or the terminal device does not send the first CSI or CSI on the PUSCH at the first time.

Optionally, that a terminal device does not send first CSI at first time may include any one or more of the following:
The terminal device does not send the semi-persistent CSI;
the terminal device does not send the periodic CSI;
the terminal device does not send the CSI configured on the PUSCH;
the terminal device does not send the semi-persistent CSI configured on the PUSCH;
the terminal device does not send the CSI configured on the PUCCH;
the terminal device does not send the periodic CSI configured on the PUCCH;
the terminal device does not send the semi-persistent CSI configured on the PUCCH;
the terminal device does not send the CSI that is the L1-RSRP;
the terminal device does not send the CSI that is not the L1-RSRP;
the terminal device does not send the periodic CSI that is the L1-RSRP;
the terminal device does not send the periodic CSI that is not the L1-RSRP;
the terminal device does not send the CSI that is configured on the PUCCH and that is the L1-RSRP;
the terminal device does not send the CSI that is configured on the PUCCH and that is not the L1-RSRP;
the terminal device does not send the periodic CSI that is configured on the PUCCH and that is the L1-RSRP;
the terminal device does not send the periodic CSI that is configured on the PUCCH and that is not the L1-RSRP;
the terminal device does not send CSI on the PUCCH;
the terminal device does not send the periodic CSI on the PUCCH;
the terminal device does not send the semi-persistent CSI on the PUCCH;
the terminal device does not send the CSI on the PUSCH;
the terminal device does not send the semi-persistent CSI on the PUSCH;
the terminal device does not send, on the PUCCH, the CSI that is the L1-RSRP;
the terminal device does not send, on the PUCCH, the CSI that is not the L1-RSRP;
the terminal device does not send, on the PUCCH, the periodic CSI that is the L1-RSRP; or
the terminal device does not send, on the PUCCH, the periodic CSI that is not the L1-RSRP.

It should be noted that in different conditions, "first CSI" may be different or may be the same, and/or "a terminal device does not send first CSI at first time" may be different or may be the same. This is not limited in this application.

Condition 1: The first time does not belong to active time of a first DRX, and a configuration message of a first BWP does not include information about a CFR.

The first DRX may be used to control monitoring of terminal device specific control information.

It should be noted that the first DRX may also be used to control monitoring of control information that is not terminal device specific control information. This is not limited in this application.

For example, the first DRX may be used to control monitoring of control information for any one or more of the following RNTIs:
a cell RNTI (cell RNTI, C-RNTI), a cancellation indication RNTI (cancellation indication RNTI, CI-RNTI), a configured scheduling RNTI (configured scheduling RNTI, CS-RNTI), an interruption RNTI (interruption RNTI, INT-RNTI), a slot format indication RNTI (slot format indication RNTI, SFI-RNTI), a semi-persistent CSI RNTI (semi-persistent CSI RNTI, SP-CSI-RNTI), a transmit power control-physical uplink control channel-RNTI (transmit power control-PUCCH-RNTI, TPC-PUCCH-RNTI), a transmit power control-physical uplink shared channel-RNTI (transmit power control-PUSCH-RNTI, TPC-PUSCH-RNTI), a transmit power control-sounding reference signal-RNTI (transmit power control-sounding reference signal-RNTI, TPC-SRS-RNTI), an AI-RNTI, a sidelink RNTI (sidelink RNTI, SL-RNTI), a sidelink configured scheduling RNTI (sidelink configured scheduling RNTI, SLCS-RNTI), and a sidelink semi-persistent scheduling V2X RNTI (SL semi-persistent scheduling V-RNTI).

For example, the first DRX may be a unicast DRX or a DRX group (for example, one DRX group).

For example, the active time of the first DRX may include any one or more of the following: running time of an on duration timer (for example, drx-onDurationTimer) corresponding to a unicast, running time of an inactivity timer (for example, drx-InactivityTimer) corresponding to the unicast, or running time of a retransmission timer corresponding to the unicast.

For example, the retransmission timer corresponding to the unicast may include any one or more of the following: a downlink retransmission timer (for example, drx-RetransmissionTimerDL), an uplink retransmission timer (for example, drx-RetransmissionTimerUL), or a sidelink retransmission timer (for example, drx-RetransmissionTimerSL).

For example, an on duration timer/the on duration timer corresponding to the unicast indicates duration in which the terminal device waits to receive control information (for example, DCI) after being woken up.

For example, an inactivity timer/the inactivity timer corresponding to the unicast indicates a period of time after newly transmitted data or control information for scheduling new transmission.

For example, a retransmission timer/the retransmission timer corresponding to the unicast indicates duration in which the terminal device receives retransmission (for example, DCI, data, and a resource).

For example, a downlink retransmission timer/the downlink retransmission timer corresponding to the unicast indicates duration in which the terminal device receives downlink retransmission (for example, DCI, data, and a resource).

For example, an uplink retransmission timer/the uplink retransmission timer corresponding to the unicast indicates duration in which the terminal device receives uplink retransmission (for example, DCI, data, and a resource).

For example, a sidelink retransmission timer/the sidelink retransmission timer corresponding to the unicast indicates duration in which the terminal device receives sidelink retransmission (for example, DCI, data, and a resource).

For example, the active time of the first DRX may include any one or more of the following: running time of an on duration timer (for example, drx-onDurationTimer) corresponding to the DRX group, running time of an inactivity timer (for example, drx-InactivityTimer) corresponding to the DRX group, or running time of a retransmission timer corresponding to the DRX group.

It should be noted that the active time of the first DRX may further include other time. This is not limited in this application. For example, for content of the active time of the first DRX, refer to 3GPP TS 38.321: "NR; Medium Access Control (MAC); Protocol specification".

Optionally, this application may further include: The terminal device obtains the configuration message of the first BWP. For example, configuration of the first BWP may be carried in RRC-specific signaling (for example, an RRC reconfiguration message) or a broadcast message/system information (for example, a SIB 1). This is not limited in this application.

The first BWP includes an active BWP.

Optionally, in this application, "a configuration message of a BWP does not include information about a CFR" may include: The BWP does not include the CFR.

For example, the active BWP may include an operating BWP, an active BWP of the terminal device, or all operating BWPs of the terminal device.

For example, the configuration message of the first BWP includes a configuration message corresponding to the first BWP.

For example, the information about the CFR includes CFR-related configuration information.

For example, "a configuration message of a first BWP does not include information about a CFR" includes: The information about the CFR does not exist in the configuration message of the first BWP.

Optionally, the first BWP may include all active BWPs. Optionally, the first BWP includes an active BWP of a cell/cell set corresponding to a multicast that the terminal device joins or receives. Optionally, the first BWP includes an active BWP of a cell/cell set corresponding to all multicasts that the terminal device joins.

For example, the terminal device corresponds to a plurality of cells or operates in the plurality of cells, and the first BWP includes an active BWP corresponding to the plurality of cells.

For example, if the symbol n is not in active time of the unicast DRX, and a configuration message of each active BWP does not include the information about the CFR, the terminal device does not send the semi-persistent CSI configured on the PUSCH, and/or the terminal device does not send the CSI on the PUCCH.

Optionally, the preset condition includes the condition 1, and "a terminal device does not send first CSI at first time" may include: The terminal device does not send the first CSI at the first time for a first cell set.

The first cell set includes at least one cell, and the first cell set is associated with the first DRX.

For example, the first DRX is a DRX group (for example, a first DRX group). The first cell set is a cell set corresponding to the DRX group (for example, the first DRX group).

Optionally, the first BWP is associated with the first DRX or the first cell set.

In this application, "a BWP (for example, the first BWP or a second BWP) is associated with the first DRX or a cell set (for example, the first cell set)" may be understood as that a cell/cell set corresponding to the BWP (for example, the first BWP or the second BWP) is associated with the first DRX or the cell set (for example, the first cell set).

Optionally, the first BWP may include all active BWPs associated with the first DRX or the first cell set. Optionally, the first BWP includes an active BWP of a cell/cell set corresponding to a multicast that the terminal device joins or receives and that is associated with the first DRX or the first cell set. Optionally, the first BWP includes an active BWP of a cell/cell set corresponding to all multicasts that the terminal device joins or receives and that are associated with the first DRX or the first cell set.

For example, the first cell set includes a plurality of cells, and the first BWP includes all active BWPs corresponding to the plurality of cells.

For example, if the symbol n is not in active time of one DRX group, and if a configuration message of each active BWP associated with the DRX group does not include the information about the CFR, for the DRX group or in the DRX group, the terminal device does not send the semi-persistent CSI configured on the PUSCH; and/or the terminal device does not send the CSI on the PUCCH.

It should be noted that "the terminal device does not send the first CSI at the first time for the first cell set" may include/be understood as either of the following: The terminal device does not send CSI (for example, the first CSI) in the first cell set at the first time, or the terminal device does not send CSI (for example, the first CSI) for the first cell set at the first time.

It should be noted that for "the terminal device does not send CSI (for example, the first CSI) in the first cell set at the first time", whether the terminal device sends the CSI for the first cell set in another cell or cell group is not limited in this application.

It should be noted that for "the terminal device does not send CSI (for example, the first CSI) for the first cell set at the first time", whether the terminal device sends CSI for another cell or cell set in the first cell set is not limited in this application.

It should be noted that, in the explanation related to "the terminal device does not send the first CSI at the first time for the first cell set", "the first cell set" may include/be understood as/be replaced with the first DRX. For example, "for the first cell set" may include/be understood as "for the first DRX". For example, "in the first cell set" may include/be understood as "in the first DRX". For example, "for the first cell set" may include/be understood as "for the first DRX".

In some embodiments, whether the first time belongs to the active time of the first DRX may be determined by the terminal device.

Optionally, that the first time does not belong to the active time of the first DRX includes: The terminal device determines that the first time does not belong to the active time of the first DRX.

Optionally, that the terminal device determines that the first time does not belong to the active time of the first DRX may include:
(1) The terminal device may determine, based on or in consideration of any one or more of a grant, an assignment, a DRX Command MAC CE, and a Long DRX Command MAC CE that are received at second time and/or before the second time, and/or based on or in consideration of a scheduling request sent at the second time and/or before the second time, that the first time does not belong to the active time of the first DRX; and/or
(2) the terminal device may determine, based on or in consideration of any one or more of the grant, the assignment, the DRX Command MAC CE, and the Long DRX Command MAC CE that are received at the second time and/or before the second time, and/or based on or in consideration of the scheduling request sent at the second time and/or before the second time, that the first time does not belong to the active time of the first DRX, where the received grant and assignment may be a grant and an assignment that are received in the first cell set.

Optionally, the grant includes a unicast-related grant.

Optionally, the assignment includes a unicast-related assignment.

Optionally, the DRX Command MAC CE includes a unicast-related DRX Command MAC CE.

Optionally, the Long DRX Command MAC CE includes a unicast-related Long DRX Command MAC CE.

Optionally, the scheduling request includes a unicast-related scheduling request.

The second time is determined based on the first time and first duration.

For example, an interval between the second time and the first time is the first duration, and the second time is before the first time.

For example, the first duration may be a parameter configured by the network device, or may be calculated according to a formula or an algorithm, or may be specified in a protocol. This is not limited in embodiments of this application. For example, the first duration is 4 ms.

Optionally, the preset condition includes the condition 1, and the first CSI may be/include/be replaced with second CSI.

Optionally, the preset condition includes the condition 1, and "a terminal device does not send first CSI at first time" may be/include/be replaced with that the terminal device does not send the second CSI at the first time.

Optionally, the preset condition includes the condition 1, and the preset condition may further include a condition 7.

Optionally, the preset condition includes the condition 1, and the method in this application may further include that the condition 7 is met.

Optionally, the preset condition includes the condition 1, and the first CSI may be/include/be replaced with third CSI.

Optionally, the preset condition includes the condition 1, and "a terminal device does not send first CSI at first time" may be/include/be replaced with that the terminal device does not send the third CSI at the first time.

Optionally, the preset condition includes the condition 1, and the preset condition may further include a condition 8.

Optionally, the preset condition includes the condition 1, and the method in this application may further include that the condition 8 is met.

Optionally, the preset condition includes the condition 1, and the preset condition may further include a condition 9.

Optionally, the preset condition includes the condition 1, and the method in this application may further include that the condition 9 is met.

For example, if the condition 1, the condition 8, and the condition 9 are met, the terminal device does not send the first CSI or the third CSI at the first time.

For example, if the condition 1, the condition 8, and the condition 9 are met, the terminal device does not send the first CSI or the third CSI at the first time for the first cell set.

For example, if DCP is not configured for the terminal device, or the symbol n is not in duration of the on duration timer corresponding to the unicast, or the on duration timer corresponding to the unicast is started or restarted, and if the symbol n is not in active time of one DRX group, and a configuration message of each active BWP associated with the DRX group does not include the information about the CFR, for the DRX group or in the DRX group, the terminal device does not send the semi-persistent CSI configured on the PUSCH, and/or the terminal device does not send the CSI on the PUCCH.

For example, if a DCP is configured for the terminal device, the symbol n is in duration of the on duration timer corresponding to the unicast, and the on duration timer corresponding to the unicast is not started or not restarted, if the symbol n is not in active time of the unicast DRX, and if a configuration message of each active BWP does not include the information about the CFR, the terminal device may perform any one or more of the following:
The terminal device does not send the semi-persistent CSI configured on the PUSCH;
if the terminal device is not configured to report the periodic CSI or CSI that is the L1-RSRP, the terminal device does not send, on the PUCCH, the periodic CSI that is the L1-RSRP; or
if the terminal device is not configured to report the periodic CSI or CSI that is not the L1-RSRP, the terminal device does not send, on the PUCCH, the periodic CSI that is not the L1-RSRP.

Condition 2: The first time does not belong to the active time of the first DRX, a configuration message of a second BWP includes the information about the CFR, and the first time does not belong to active time of a second DRX set.

The second DRX set may include at least one multicast DRX, the at least one multicast DRX may include a first multicast DRX, and the first multicast DRX may be used to control monitoring of control information related to a third multicast service.

For example, the second DRX set may include a DRX corresponding to a multicast/multicast service received by the terminal device, or a DRX corresponding to a multicast/multicast service that the terminal device joins, or a DRX corresponding to a multicast/multicast service that is received by the terminal device and that is associated with the second BWP, or a DRX corresponding to a multicast/multicast service that the terminal device joins and that is associated with the second BWP.

"Associated with the second BWP" may include "associated with a cell/cell set corresponding to the second BWP".

For example, the second DRX set may include a DRX corresponding to any one/all of multicasts/multicast services received by the terminal device, or a DRX corresponding to any one/all of multicasts/multicast services that the terminal device joins, or a DRX corresponding to any one/all of multicasts/multicast services that are received by the terminal device and that are associated with the second BWP, or a DRX corresponding to any one/all of multicasts/multicast services that the terminal device joins and that are associated with the second BWP.

For example, the second DRX set is associated with a tenth multicast service set, and the tenth multicast service set may include the third multicast service.

For example, the tenth multicast service set may include a multicast/multicast service received by the terminal device, or a multicast/multicast service that the terminal device joins, or a multicast/multicast service that is received by the terminal device and that is associated with the second BWP, or a multicast/multicast service that the terminal device joins and that is associated with the second BWP.

For example, the tenth multicast service set may include any one/all of the multicasts/multicast services received by the terminal device, or any one/all of the multicasts/multicast services that the terminal device joins, or any one/all of the multicasts/multicast services that is/are received by the terminal device and that is/are associated with the second BWP, or any one/all of the multicasts/multicast services that the terminal device joins and that is/are associated with the second BWP.

For example, the third multicast service may be understood as a multicast service associated with a first G-RNTI and/or a first G-CS-RNTI, or a multicast associated with a first G-RNTI and/or a first G-CS-RNTI.

For example, the control information related to the third multicast service may include/be understood as control information associated with (or scrambled by) the first G-RNTI and/or the first G-CS-RNTI.

It should be noted that the first multicast DRX may also be used to control monitoring of other control information. This is not limited in this application.

For example, active time of a multicast DRX may include any one or more of the following: running time of an on duration timer (for example, drx-onDurationTimerPTM) corresponding to a multicast (for example, a G-RNTI and/or a G-CS-RNTI), running time of an inactivity timer (for example, drx-InactivityTimerPTM) corresponding to the multicast (for example, the G-RNTI and/or the G-CS-RNTI), or running time of a retransmission timer (for example, drx-RetransmissionTimerDL-PTM) corresponding to the multicast (for example, the G-RNTI and/or the G-CS-RNTI).

For example, an on duration timer/the on duration timer corresponding to the multicast indicates duration in which the terminal device waits to receive control information (for example, DCI) after being woken up.

For example, the inactivity timer corresponding to the multicast indicates a period of time after newly transmitted data or control information for scheduling new transmission.

For example, the retransmission timer corresponding to the multicast indicates duration in which the terminal device receives retransmission (for example, DCI, data, and a resource) corresponding to the multicast.

For example, active time of the first multicast DRX may include any one or more of the following:
running time of an on duration timer (for example, drx-onDurationTimerPTM) corresponding to the third multicast service (or the first G-RNTI and/or the first G-CS-RNTI);
running time of an inactivity timer (for example, drx-InactivityTimerPTM) corresponding to the third multicast service (or the first G-RNTI and/or the first G-CS-RNTI); or
running time of a retransmission timer (for example, drx-RetransmissionTimerDL-PTM) corresponding to the third multicast service (or the first G-RNTI and/or the first G-CS-RNTI).

For example, the active time of the second DRX set may include any one or more of the following: active time of a DRX set corresponding to the tenth multicast service set, active time of a DRX set corresponding to a G-RNTI set and/or a G-CS-RNTI set that correspond/corresponds to the tenth multicast service set, or active time of a DRX set corresponding to a G-RNTI set and/or a G-CS-RNTI set that correspond/corresponds to the second DRX set.

For example, the active time of the second DRX set may include any one or more of the following:
running time of drx-onDurationTimerPTM, running time of drx-InactivityTimerPTM, or running time of drx-RetransmissionTimerDL-PTM for the G-RNTI set and/or the G-CS-RNTI set that correspond/corresponds to the second DRX set.

It should be noted that the active time of the second DRX set/multicast DRX/first multicast DRX may further include other time. This is not limited in this application.

Optionally, this application may further include: The terminal device obtains the configuration message of the second BWP. For example, configuration of the second BWP may be carried in the RRC-specific signaling (for example, the RRC reconfiguration message) or the broadcast message/system information (for example, the SIB 1). This is not limited in this application.

The second BWP includes an active BWP.

Optionally, in this application, "a configuration message of a BWP includes information about a CFR" may include: The BWP includes the CFR.

For example, the configuration message of the second BWP includes a configuration message corresponding to the second BWP.

For example, "a configuration message of a second BWP includes information about a CFR" includes: The configuration message of the second BWP includes the information about the CFR.

Optionally, the second BWP may include one or more active BWPs.

Optionally, the second BWP includes the active BWP of the cell/cell set corresponding to the multicast that the terminal device joins or receives.

Optionally, the second BWP includes an active BWP of a cell/cell set corresponding to one or more multicasts that the terminal device joins.

Optionally, the preset condition includes the condition 2, and "a terminal device does not send first CSI at first time" may include: The terminal device does not send the first CSI at the first time for the first cell set.

Optionally, the second BWP is associated with the first DRX or the first cell set.

Optionally, the second BWP may include an active BWP related to the first DRX or the first cell set.

Optionally, the second BWP may include one or more active BWPs related to the first DRX or the first cell set.

Optionally, the second BWP includes the active BWP of the cell/cell set corresponding to the multicast that the terminal device joins or receives and that is associated with the first DRX or the first cell set.

Optionally, the second BWP includes an active BWP of a cell/cell set corresponding to one or more multicasts that the terminal device joins or receives and that are associated with the first DRX or the first cell set.

Optionally, the second BWP may include one or more active BWPs related to the second DRX set or a fourth cell set.

Optionally, the second DRX set is associated with the first cell set or the first DRX.

It may be understood that the first cell set includes the fourth cell set.

For example, the fourth cell set is a subset of the first cell set, or the fourth cell set is equal to the first cell set.

The fourth cell set is associated with the second DRX set, and the fourth cell set includes at least one cell.

For example, the second DRX set may include a DRX corresponding to a multicast/multicast service that is received by the terminal device and that is associated with the first cell set/first DRX, or a DRX corresponding to a multicast/multicast service that the terminal device joins and that is associated with the first cell set/first DRX, or a DRX corresponding to a multicast/multicast service associated with the first cell set/first DRX, or a DRX corresponding to a multicast/multicast service that is received by the terminal device and that is associated with the second BWP, or a DRX corresponding to a multicast/multicast service that the terminal device joins and that is associated with the second BWP, or a DRX corresponding to a multicast/multicast service associated with the second BWP.

For example, the second DRX set may include a DRX corresponding to any one/all of multicasts/multicast services that are received by the terminal device and that are associated with the first cell set/first DRX, or a DRX corresponding to any one/all of multicasts/multicast services that the terminal device joins and that are associated with the first cell set/first DRX, or a DRX corresponding to any one/all of multicasts/multicast services associated with the first cell set/first DRX, or a DRX corresponding to any one/all of multicasts/multicast services that are received by the terminal device and that are associated with the second BWP, or a DRX corresponding to any one/all of multicasts/multicast services that the terminal device joins and that are associated with the second BWP, or a DRX corresponding to any one/all of the multicasts/multicast services associated with the second BWP.

For example, the tenth multicast service set may include a multicast/multicast service that is received by the terminal device and that is associated with the first cell set/first DRX/second BWP, or a multicast/multicast service that the terminal device joins and that is associated with the first cell set/first DRX/second BWP, or a multicast/multicast service associated with the first cell set/first DRX/second BWP.

For example, the tenth multicast service set may include any one/all of multicasts/multicast services that are received by the terminal device and that are associated with the first cell set/first DRX/second BWP, or any one/all of multicasts/multicast services that the terminal device joins and that are associated with the first cell set/first DRX/second BWP, or any one/all of multicasts/multicast services associated with the first cell set/first DRX/second BWP.

For example, the second DRX set may include/be a multicast DRX set associated with the first DRX, or a multicast DRX set corresponding to a multicast service set associated with the first cell set.

For example, the second DRX set may include all multicast DRXes associated with the first DRX, or all multicast DRXes associated with the first cell set.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. A configuration message of an active BWP of the cell 1 includes the information about the CFR. The terminal device receives a multicast 1 in the cell 1. If the first time is in neither active time of the first DRX group nor active time of a multicast DRX corresponding to the multicast 1, the terminal device does not send the first CSI at the first time for the first DRX group/the first cell set, where the first DRX is the first DRX group, the second DRX set is the multicast DRX corresponding to the multicast 1, the first cell set is the cell 1, the cell 2, and the cell 3, the fourth cell set is the cell 1, and the second BWP is the active BWP of the cell 1.

In some embodiments, whether the configuration message of the active second BWP of the terminal device includes the information about the CFR may be determined by the terminal device.

In some embodiments, whether the first time belongs to the active time of the second DRX set may be determined by the terminal device.

Optionally, that the first time does not belong to the active time of the second DRX set includes: The terminal device determines that the first time does not belong to the active time of the second DRX set.

Optionally, that the terminal device determines that the first time does not belong to the active time of the second DRX set may include:
(1) The terminal device may determine, based on or in consideration of either or both of an assignment (for example, a received multicast-related assignment) and a multicast-related DRX Command MAC CE that are received at third time and/or before the third time, that the first time does not belong to the active time of the second DRX set; and/or
(2) the terminal device may determine, based on or in consideration of either or both of the assignment (for example, the received multicast-related assignment) and the multicast-related DRX Command MAC CE that are received at the third time and/or before the third time, that the first time does not belong to the active time of the second DRX set, where the received assignment (for example, the received multicast-related assignment) may be an assignment received in the fourth cell set or the first cell set, and/or a received assignment related to the tenth multicast service set. Optionally, the multicast-related DRX Command MAC CE may be a multicast-related DRX Command MAC CE received in the fourth cell set, and/or a DRX Command MAC CE related to the tenth multicast service set.

It should be noted that the unicast-related DRX Command MAC CE may be the same as or different from the multicast-related DRX Command MAC CE. This is not limited in embodiments of this application.

It should be noted that, in this embodiment of this application, the multicast-related assignment may include an assignment/data received in a multicast manner (for example, scheduled by using DCI scrambled by a G-RNTI or a G-CS-RNTI).

The third time is determined based on the first time and second duration.

For example, an interval between the third time and the first time is the second duration, and the third time is before the first time.

Similarly, the second duration may be a parameter configured by the network device, or may be calculated according to a formula or an algorithm, or may be specified in a protocol. This is not limited in embodiments of this application. For example, the second duration is 4 ms.

It should be noted that the third time may be the same as or different from the second time. This is not limited in embodiments of this application.

It should be noted that the second duration may be the same as or different from the first duration. This is not limited in embodiments of this application.

Optionally, the preset condition includes the condition 2, and the first CSI may be/include/be replaced with the second CSI.

The second CSI may include any one or more of the following:
semi-persistent CSI;
periodic CSI;
CSI configured on a physical uplink shared channel PUSCH;
semi-persistent CSI configured on the PUSCH;
CSI configured on a physical uplink control channel PUCCH;
periodic CSI configured on the PUCCH; or
semi-persistent CSI configured on the PUCCH.

Optionally, the preset condition includes the condition 2, and "a terminal device does not send first CSI at first time" may be/include/be replaced with that the terminal device does not send the second CSI at the first time.

Optionally, that the terminal device does not send the second CSI at the first time may include any one or more of the following:
The terminal device does not send the semi-persistent CSI;
the terminal device does not send the periodic CSI;
the terminal device does not send the CSI configured on the PUSCH;
the terminal device does not send the semi-persistent CSI configured on the PUSCH;
the terminal device does not send the CSI configured on the PUCCH;
the terminal device does not send the periodic CSI configured on the PUCCH;
the terminal device does not send the semi-persistent CSI configured on the PUCCH;
the terminal device does not send CSI on the PUCCH;
the terminal device does not send the periodic CSI on the PUCCH;
the terminal device does not send the semi-persistent CSI on the PUCCH;
the terminal device does not send the CSI on the PUSCH; or
the terminal device does not send the semi-persistent CSI on the PUSCH.

For example, if the condition 2 is met, the terminal device does not send the first CSI or the second CSI at the first time.

For example, if the condition 2 is met, the terminal device does not send the first CSI or the second CSI at the first time for the first cell set.

Optionally, the preset condition includes the condition 2, and the preset condition may further include the condition 7.

Optionally, the preset condition includes the condition 2, and the method in this application may further include that the condition 7 is met.

The condition 7 may include any one or more of the following:
The terminal device does not obtain second information, where the second information includes information related to a wakeup signal;
the first time is not in duration or a duration period corresponding to the first timer; or
the first timer is started or restarted.

For example, "not obtain" may be understood as "not obtained" or "not received".

For example, the wakeup signal may include/be understood as/be replaced with a power saving signal.

For example, a form of the wakeup signal may be any one or more of DCI, a reference signal, a sequence, or the like, or another form. This is not limited in this application.

For example, the wakeup signal may be DCI with CRC scrambled by a PS-RNTI (DCI with CRC scrambled by PS-RNTI, DCP) or DCI scrambled by the PS-RNTI.

Optionally, the second information is associated with the unicast. Optionally, the wakeup signal is associated with the unicast DRX (for example, the first DRX).

It should be noted that "the terminal device does not obtain second information" may include/be replaced with/be understood as any one or more of the following:
The terminal device is not configured to monitor the wakeup signal, or the terminal device is not configured by the network device to monitor the wakeup signal;
the terminal device does not monitor the wakeup signal;
for an active BWP, monitoring the wakeup signal is not configured;
for an active BWP, the terminal device is not configured to monitor the wakeup signal;
for an active BWP, the terminal device is not configured by the network device to monitor the wakeup signal;
DCP function is not configured for the terminal device; or
DCP function is not configured by the network device for the terminal device.

It may be understood that, if the terminal device is configured to monitor the wakeup signal, the terminal device may determine, based on the wakeup signal, whether to start or restart the on duration timer (for example, drx-onDurationTimer) corresponding to the unicast.

"The first timer is started or restarted" may include/be replaced with/be understood as: The first timer is started or restarted in a DRX cycle corresponding to the first time; or the first timer has been started or restarted in a DRX cycle corresponding to the first time; or the first timer is started or restarted in a DRX cycle of a first DRX corresponding to the first time; or the first timer has been started or restarted in a DRX cycle of a first DRX corresponding to the first time; or the first timer is started or restarted in a current DRX cycle; or the first timer has been started or restarted in a current DRX cycle.

It should be understood that "the first timer is started or restarted" is not limited to that the first timer is still running at the first time. For example, at the first time, the first timer may still run, or may not run.

Optionally, the preset condition includes the condition 2, and the first CSI may be/include/be replaced with the third CSI.

The third CSI may include any one or more of the following:
semi-persistent CSI;
CSI configured on a PUSCH;
semi-persistent CSI configured on a PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; or
periodic CSI that is configured on the PUCCH and that is not the L1-RSRP.

Optionally, the preset condition includes the condition 2, and "a terminal device does not send first CSI at first time" may be/include/be replaced with that the terminal device does not send the third CSI at the first time.

Optionally, that the terminal device does not send the third CSI at the first time may include any one or more of the following:
The terminal device does not send the semi-persistent CSI;
the terminal device does not send the CSI configured on the PUSCH;
the terminal device does not send the semi-persistent CSI configured on the PUCCH;
the terminal device does not send the CSI that is the L1-RSRP;
the terminal device does not send the CSI that is not the L1-RSRP;
the terminal device does not send the periodic CSI that is the L1-RSRP;
the terminal device does not send the periodic CSI that is not the L1-RSRP;
the terminal device does not send the CSI that is configured on the PUCCH and that is the L1-RSRP;
the terminal device does not send the CSI that is configured on the PUCCH and that is not the L1-RSRP;
the terminal device does not send the periodic CSI that is configured on the PUCCH and that is the L1-RSRP;
the terminal device does not send the periodic CSI that is configured on the PUCCH and that is not the L1-RSRP;
the terminal device does not send, on the PUCCH, the CSI that is the L1-RSRP;
the terminal device does not send, on the PUCCH, the CSI that is not the L1-RSRP;
the terminal device does not send, on the PUCCH, the periodic CSI that is the L1-RSRP; or
the terminal device does not send, on the PUCCH, the periodic CSI that is not the L1-RSRP.

Optionally, the preset condition includes the condition 2, and the preset condition may further include the condition 8.

Optionally, the preset condition includes the condition 2, and the method in this application may further include that the condition 8 is met.

The condition 8 may include any one or more of the following:
The terminal device obtains the second information, where the second information includes the information related to the wakeup signal;
the first time is in the duration corresponding to the first timer; or
the first timer is not started or not restarted.

For example, "obtain" may be understood as "obtained" or "received".

It should be noted that "the terminal device obtains the second information" may include/be replaced with/be understood as any one or more of the following:
The terminal device is configured to monitor the wakeup signal;
the terminal device is configured by the network device to monitor the wakeup signal;
the terminal device monitors the wakeup signal;
for the active BWP, monitoring the wakeup signal is configured;
for the active BWP, the terminal device is configured to monitor the wakeup signal;
for the active BWP, the terminal device is configured by the network device to monitor the wakeup signal; or
the DCP function is configured for the terminal device; or the DCP function is configured by the network device for the terminal device.

"The first timer is not started or not restarted" may include/be replaced with/be understood as: The first timer is not started or not restarted in the DRX cycle corresponding to the first time; or the first timer has not been started or not been restarted in the DRX cycle corresponding to the first time; or the first timer is not started or not restarted in the DRX cycle of the first DRX corresponding to the first time; or the first timer has not been started or not been restarted in the DRX cycle of the first DRX corresponding to the first time; or the first timer is not started or not restarted in the current DRX cycle; or the first timer has not been started or not been restarted in the current DRX cycle.

Optionally, the preset condition includes the condition 2, and the preset condition may further include the condition 9.

Optionally, the preset condition includes the condition 2, and the method in this application may further include that the condition 9 is met.

The condition 9 includes: The terminal device does not obtain fourth information, and/or the terminal device does not obtain third information.

The third information indicates to report the periodic CSI or CSI that is the L1-RSRP, or indicates the terminal device to report the periodic CSI or CSI that is the L1-RSRP, or indicates the terminal device to report the periodic CSI or CSI.

"Reporting periodic CSI or CSI that is L1-RSRP" may include any one or more of the following:
when/if the first timer is not started or not restarted, reporting the periodic CSI or CSI that is the L1-RSRP;
when/if the condition 8 is met, reporting the periodic CSI or CSI that is the L1-RSRP; or
when/if the condition 2 and the condition 8 are met, reporting the periodic CSI or CSI that is the L1-RSRP.
"Reporting periodic CSI or CSI" may include any one or more of the following:
   when/if the first timer is not started or not restarted, reporting the periodic CSI or CSI;
   when/if the condition 8 is met, reporting the periodic CSI or CSI; or
   when/if the condition 2 and the condition 8 are met, reporting the periodic CSI or CSI.

"The terminal device does not obtain third information" may include/be understood as that the terminal device is not configured to report the periodic CSI or CSI that is the L1-RSRP.

The fourth information indicates to report the periodic CSI or CSI that is not the L1-RSRP, or indicates the terminal device to report the periodic CSI or CSI that is not the L1-RSRP.

"Reporting periodic CSI or CSI that is not L1-RSRP" may include any one or more of the following:
when/if the first timer is not started or not restarted, reporting the periodic CSI or CSI that is not the L1-RSRP;
when/if the condition 8 is met, reporting the periodic CSI or CSI that is not the L1-RSRP; or
when/if the condition 2 and the condition 8 are met, reporting the periodic CSI or CSI that is not the L1-RSRP.

"The terminal device does not obtain fourth information" may include/be understood as that the terminal device is not configured to report the periodic CSI or CSI that is not the L1-RSRP.

For example, the periodic CSI or CSI that is the L1-RSRP may be understood as periodic CSI or CSI whose type is the L1-RSRP.

For example, the periodic CSI or CSI that is not the L1-RSRP may be understood as periodic CSI or CSI whose type is not the L1-RSRP.

For example, if the terminal device does not obtain the third information, and the condition 2 and the condition 8 are met, the terminal device does not send, on the PUCCH at the first time, the periodic CSI that is the L1-RSRP.

For example, if the terminal device does not obtain the fourth information, and the condition 2 and the condition 8 are met, the terminal device does not send, on the PUCCH at the first time, the periodic CSI that is not the L1-RSRP.

For example, if the condition 2, the condition 8, and the condition 9 are met, the terminal device does not send the first CSI or the third CSI at the first time.

For example, if the condition 2, the condition 8, and the condition 9 are met, the terminal device does not send the first CSI or the third CSI at the first time for the first cell set.

Optionally, the preset condition includes the condition 2, and the preset condition may further include a condition 14.

Optionally, the preset condition includes the condition 2, and the method in this application may include that the condition 14 is met.

The condition 14 may include that a multicast DRX is configured for an eleventh multicast service/a ninth multicast service set.

For example, that the multicast DRX is configured for the ninth multicast service set may be understood as any one or more of the following: The multicast DRX is configured for a multicast service/each multicast service included in the ninth multicast service set, a multicast service/each multicast service included in the ninth multicast service set is associated with the multicast DRX, the terminal device receives multicast DRX configuration related to a multicast service/each multicast service included in the ninth multicast service set, the multicast DRX is configured for the terminal device for a multicast service/each multicast service included in the ninth multicast service set, or the network device configures the multicast DRX for a multicast service/each multicast service included in the ninth multicast service set.

For example, that the multicast DRX is configured for the eleventh multicast service may be understood as any one or more of the following: The eleventh multicast service is associated with the multicast DRX, the terminal device receives multicast DRX configuration related to the eleventh multicast service, the multicast DRX is configured for the terminal device for the eleventh multicast service, or the network device configures the multicast DRX for the eleventh multicast service.

For example, the eleventh multicast service/the ninth multicast service set may include a multicast/multicast service received by the terminal device, or a multicast/multicast service that the terminal device joins, or a DRX corresponding to a multicast/multicast service that is received by the terminal device and that is associated with the second BWP, or a DRX corresponding to a multicast/multicast service that the terminal device joins and that is associated with the second BWP.

For example, the ninth multicast service set may include the eleventh multicast service.

For example, the eleventh multicast service/the ninth multicast service set may include any one/all of multicasts/multicast services received by the terminal device, or any one or more/all of multicasts/multicast services that the terminal device joins, or a DRX corresponding to any one/all of multicasts/multicast services that are received by the terminal device and that are associated with the second BWP, or a DRX corresponding to any one/all of multicasts/multicast services that the terminal device joins and that are associated with the second BWP.

For example, the eleventh multicast service may be understood as a multicast service associated with a second G-RNTI and/or a second G-CS-RNTI, or a multicast associated with a second G-RNTI and/or a second G-CS-RNTI.

Optionally, the eleventh multicast service/the ninth multicast service set is associated with the first DRX/first cell set.

Optionally, the first cell set includes a tenth cell set.

For example, the tenth cell set is a subset of the first cell set, or the tenth cell set is equal to the first cell set.

The tenth cell set is associated with the ninth multicast service set, and the tenth cell set includes at least one cell.

For example, the ninth multicast service set may include the multicast/multicast service that is received by the terminal device and that is associated with the first cell set/first DRX, or the multicast/multicast service that the terminal device joins and that is associated with the first cell set/first DRX, or the multicast/multicast service associated with the first cell set/first DRX, or the DRX corresponding to the multicast/multicast service that is received by the terminal device and that is associated with the second BWP, the DRX corresponding to the multicast/multicast service that the terminal device joins and that is associated with the second BWP, or the DRX corresponding to the multicast/multicast service associated with the second BWP.

For example, the ninth multicast service set may include any one or more/all of multicasts/multicast services that are received by the terminal device and that are associated with the first cell set/first DRX, or any one or more/all of multicasts/multicast services that the terminal device joins and that are associated with the first cell set/first DRX, or any one or more/all of multicasts/multicast services associated with the first cell set/first DRX, or the DRX corresponding to any one/all of the multicasts/multicast services that are received by the terminal device and that are associated with the second BWP, or the DRX corresponding to any one/all of the multicasts/multicast services that the terminal device joins and that are associated with the second BWP, or the DRX corresponding to any one/all of the multicasts/multicast services associated with the second BWP.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. A configuration message of an active BWP of the cell 1 includes the information about the CFR. The terminal device receives a multicast 1 in the cell 1, and the terminal device receives a multicast 2 in the cell 1. A multicast DRX is configured for each of the multicast 1 and the multicast 2. If the first time is in neither active time of the first DRX group nor active time of a multicast DRX corresponding to the multicast 1 and active time of a multicast DRX corresponding to the multicast 2, the terminal device does not send the first CSI at the first time for the first DRX group/the first cell set, where the first DRX is the first DRX group, the ninth multicast service set is the multicast 1 and the multicast 2, the first cell set is the cell 1, the cell 2, and the cell 3, the tenth cell set is the cell 1, and the second BWP is the active BWP of the cell 1.

For example, if the condition 2, the condition 7, and the condition 14 are met, the terminal device does not send the first CSI or the second CSI at the first time.

For example, if the condition 2, the condition 7, and the condition 14 are met, the terminal device does not send the first CSI or the second CSI at the first time for the first cell set.

For example, if the condition 2, the condition 8, and the condition 14 are met, the terminal device does not send the first CSI or the third CSI at the first time.

For example, if the condition 2, the condition 8, and the condition 14 are met, the terminal device does not send the first CSI or the third CSI at the first time for the first cell set.

For example, if the condition 2, the condition 8, the condition 9, and the condition 14 are met, the terminal device does not send the first CSI or the third CSI at the first time.

For example, if the condition 2, the condition 8, the condition 9, and the condition 14 are met, the terminal device does not send the first CSI or the third CSI at the first time for the first cell set.

For example, if DCP is not configured for the terminal device, or the symbol n is not in duration of the on duration timer corresponding to the unicast, or the on duration timer corresponding to the unicast is started or restarted, if the symbol n is not in active time of one DRX group, if a configuration message of an active BWP associated with the DRX group includes the information about the CFR, and if the symbol n is not in active time of all multicast DRXes associated with the DRX group, and a multicast DRX is configured for each multicast that UE joins and that is associated with the DRX group, for the DRX group or in the DRX group, the terminal device does not send the semi-persistent CSI configured on the PUSCH, and/or the terminal device does not send the CSI on the PUCCH.

For example, if a DCP is configured for the terminal device, the symbol n is in duration of the on duration timer corresponding to the unicast, and the on duration timer corresponding to the unicast is not started or not restarted, if the symbol n is not in active time of the unicast DRX, if a configuration message of an active BWP includes the information about the CFR, and if the symbol n is not in active time of all multicast DRXes, and a multicast DRX is configured for each multicast that UE joins, the terminal device performs any one or more of the following:
The terminal device does not send the semi-persistent CSI configured on the PUSCH;
if the terminal device is not configured to report the periodic CSI or CSI that is the L1-RSRP, the terminal device does not send, on the PUCCH, the periodic CSI that is the L1-RSRP; or
if the terminal device is not configured to report the periodic CSI or CSI that is not the L1-RSRP, the terminal device does not send, on the PUCCH, the periodic CSI that is not the L1-RSRP.

Condition 3: includes a condition A and a condition B.

Condition A: The first time does not belong to the active time of the first DRX, and the configuration message of the second BWP includes the information about the CFR.

Condition B: The first time belongs to active time of a third DRX set, and/or no multicast DRX is configured for a first multicast service set.

The third DRX set includes at least one multicast DRX, the at least one multicast DRX includes a second multicast DRX, and the second multicast DRX is used to control monitoring of control information related to a fourth multicast service.

For example, the third DRX set may include the DRX corresponding to the multicast/multicast service received by the terminal device, or the DRX corresponding to the multicast/multicast service that the terminal device joins, or the DRX corresponding to the multicast/multicast service that is received by the terminal device and that is associated with the second BWP, or the DRX corresponding to the multicast/multicast service that the terminal device joins and that is associated with the second BWP.

For example, the third DRX set is associated with a twelfth multicast service set, and the twelfth multicast service set may include the fourth multicast service.

For example, the twelfth multicast service set may include the multicast/multicast service received by the terminal device, or the multicast/multicast service that the terminal device joins, or the multicast/multicast service that is received by the terminal device and that is associated with the second BWP, or the multicast/multicast service that the terminal device joins and that is associated with the second BWP.

For example, the fourth multicast service may be understood as a multicast service associated with a third G-RNTI and/or a third G-CS-RNTI, or a multicast associated with a third G-RNTI and/or a third G-CS-RNTI.

For example, the control information related to the fourth multicast service may include/be understood as control information associated with (or scrambled by) the third G-RNTI and/or the third G-CS-RNTI.

It should be noted that the second multicast DRX may also be used to control monitoring of other control information. This is not limited in this application.

For example, active time of the second multicast DRX may include any one or more of the following:
running time of an on duration timer (for example, drx-onDurationTimerPTM) corresponding to the fourth multicast service (or the third G-RNTI and/or the third G-CS-RNTI);
running time of an inactivity timer (for example, drx-InactivityTimerPTM) corresponding to the fourth multicast service (or the third G-RNTI and/or the third G-CS-RNTI); or
running time of a retransmission timer (for example, drx-RetransmissionTimerDL-PTM) corresponding to the fourth multicast service (or the third G-RNTI and/or the third G-CS-RNTI).

For example, the active time of the third DRX set may include any one or more of the following: active time of a DRX set corresponding to the twelfth multicast service set, active time of a DRX set corresponding to a G-RNTI set and/or a G-CS-RNTI set that correspond/corresponds to the twelfth multicast service set, or active time of a DRX set corresponding to a G-RNTI set and/or a G-CS-RNTI set that correspond/corresponds to the third DRX set.

For example, the active time of the third DRX set may include any one or more of the following:
running time of drx-onDurationTimerPTM, running time of drx-InactivityTimerPTM, or running time of drx-RetransmissionTimerDL-PTM for the G-RNTI set and/or the G-CS-RNTI set that correspond/corresponds to the third DRX set.

It should be noted that the active time of the third DRX set may further include other time. This is not limited in this application.

Optionally, the preset condition includes the condition 3, and "a terminal device does not send first CSI at first time" may include: The terminal device does not send the first CSI at the first time for a second cell set.

It should be noted that "the terminal device does not send the first CSI at the first time for a second cell set" may include/be understood as either of the following: The terminal device does not send CSI (for example, the first CSI) in the second cell set at the first time; or the terminal device does not send CSI for the second cell set (for example, the first CSI) at the first time.

It should be noted that for "the terminal device does not send CSI (for example, the first CSI) in the second cell set at the first time", whether the terminal device sends the CSI for the second cell set in another cell or cell group is not limited in this application.

It should be noted that for "the terminal device does not send CSI for the second cell set (for example, the first CSI) at the first time", whether the terminal device sends CSI for another cell or cell set in the second cell set is not limited in this application.

The second cell set includes at least one cell.

Optionally, the second cell set is not associated with the third DRX set.

For example, a sixth cell set is associated with the third DRX set or the twelfth multicast service set.

The sixth cell set includes at least one cell.

That the second cell set is not associated with the third DRX set may be understood as that the second cell set is not associated with the twelfth multicast service set/the sixth cell set.

For example, the second cell set may include a cell/cell set other than a cell/cell set associated with the twelfth multicast service set/third DRX set, or a cell/cell set other than the sixth cell set.

For example, the terminal device includes/has three cells: a cell 1, a cell 2, and a cell 3. A configuration message of an active BWP of the cell 1 includes the information about the CFR. The terminal device receives a multicast 1 in the cell 1. If the first time is not in active time of a unicast DRX, but is in active time of a multicast DRX corresponding to the multicast 1, the terminal device does not send the first CSI at the first time for the cell 2 and the cell 3, where the first DRX is the unicast DRX, the third DRX set is the multicast DRX corresponding to the multicast 1, the second cell set is the cell 2 and the cell 3, the sixth cell set is the cell 1, and the second BWP is the active BWP of the cell 1.

For example, if the symbol n is not in the active time of the unicast DRX, if the configuration message of the active BWP includes the information about the CFR, and if the symbol n is in active time of a multicast DRX that the terminal device joins, for a cell or cell set other than a multicast-associated cell (for example, a cell associated with a multicast in which the symbol n is in the active time of the multicast DRX), the terminal device does not send the semi-persistent CSI configured on the PUSCH, and/or the terminal device does not send the CSI on the PUCCH.

Optionally, the second cell set is not associated with the first multicast service set.

The first multicast service set includes at least one multicast service, and the at least one multicast service includes a fifth multicast service.

For example, the first multicast service set may include the multicast/multicast service received by the terminal device, or the multicast/multicast service that the terminal device joins, or the multicast/multicast service that is received by the terminal device and that is associated with the second BWP, or the multicast/multicast service that the terminal device joins and that is associated with the second BWP.

For example, the first multicast service set may include a multicast/multicast service that is received by the terminal device and for which no multicast DRX is configured, or a multicast/multicast service that the terminal device joins and for which no multicast DRX is configured, or a multicast/multicast service for which no multicast DRX is configured, or a multicast/multicast service that is received by the terminal device, that is associated with the second BWP, and for which no multicast DRX is configured, or a multicast/multicast service that the terminal device joins, that is associated with the second BWP, and for which no multicast DRX is configured, or a multicast/multicast service that is associated with the second BWP and for which no multicast DRX is configured.

For example, the first multicast service set may include any one or more/all of multicasts/multicast services that are received by the terminal device and for which no multicast DRX is configured, or any one or more/all of multicasts/multicast services that the terminal device joins and for which no multicast DRX is configured, or any one or more/all of multicasts/multicast services that are received by the terminal device, that are associated with the second BWP, and for which no multicast DRX is configured, or any one or more/all of multicasts/multicast services that the terminal device joins, that are associated with the second BWP, and for which no multicast DRX is configured, or any one or more/all of multicasts/multicast services that are associated with the second BWP and for which no multicast DRX is configured.

For example, an eighth cell set is associated with the first multicast service set.

The eighth cell set includes at least one cell.

For example, that the second cell set is not associated with the first multicast service set may be understood as that the second cell set is not associated with the eighth cell set.

For example, the second cell set may include a cell/cell set other than a cell/cell set associated with the first multicast service set, or a cell/cell set other than the eighth cell set.

For example, the terminal device includes/has three cells: a cell 1, a cell 2, and a cell 3. A configuration message of an active BWP of the cell 1 includes the information about the CFR. The terminal device receives a multicast 1 in the cell 1, and the terminal device receives a multicast 2 in the cell 1. A multicast DRX is configured for the multicast 1, and no multicast DRX is configured for the multicast 2. If the first time is in neither active time of a unicast DRX nor active time of the multicast DRX corresponding to the multicast 1, the terminal device does not send the first CSI at the first time for the cell 3 and the cell 2, where the first DRX is the unicast DRX, the second cell set is the cell 3 and the cell 2, and the eighth cell set is the cell 1.

For example, if the symbol n is not in the active time of the unicast DRX, and the configuration message of the active BWP includes the information about the CFR, and if there is a multicast for which no multicast DRX is configured, for a cell or cell set other than a cell associated with the multicast for which no multicast DRX is configured, the terminal device does not send the semi-persistent CSI configured on the PUSCH, and/or the terminal device does not send the CSI on the PUCCH.

For example, the second cell set may include a cell/cell set other than the cell/cell set associated with the twelfth multicast service set/third DRX set and the cell/cell set associated with the first multicast service set, or a cell/cell set other than the sixth cell set and the eighth cell set.

For example, the terminal device includes/has three cells: a cell 1, a cell 2, and a cell 3. A configuration message of an active BWP of each of the cell 1 and the cell 2 includes the information about the CFR. The terminal device receives a multicast 1 in the cell 1, and the terminal device receives a multicast 2 in the cell 2. A multicast DRX is configured for the multicast 1, and no multicast DRX is configured for the multicast 2. If the first time is not in active time of a unicast DRX, but is in active time of the multicast DRX corresponding to the multicast 1, the terminal device does not send the first CSI at the first time for the cell 3, where the first DRX is the unicast DRX, the third DRX set is the multicast DRX corresponding to the multicast 1, the second cell set is the cell 3, the sixth cell set is the cell 1, and the eighth cell set is the cell 2.

For example, if the symbol n is not in the active time of the unicast DRX, and the configuration message of the active BWP includes the information about the CFR, if the symbol n is in the active time of the multicast DRX that the terminal device joins, and if there is the multicast for which no multicast DRX is configured, for a cell or cell set other than the cell associated with the multicast (for example, the cell associated with the multicast in which the symbol n is in the active time of the multicast DRX) and the cell associated with the multicast for which no multicast DRX is configured, the terminal device does not send the semi-persistent CSI configured on the PUSCH, and/or the terminal device does not send the CSI on the PUCCH.

Optionally, the second cell set is associated with the first DRX/first cell set.

For example, that the second cell set is associated with the first DRX may be understood as that a same DRX parameter (for example, a parameter related to the first DRX) is used for cells included in the second cell set, and receiving of control information of the cells included in the second cell set is controlled by a same DRX (for example, the first DRX).

Optionally, the third DRX set/the sixth cell set is associated with the first DRX/the first cell set.

For example, that the sixth cell set is associated with the first DRX may be understood as that a same DRX parameter (for example, the parameter related to the first DRX) is used for cells included in the sixth cell set, and receiving of control information of the cells included in the sixth cell set is controlled by a same DRX (for example, the first DRX).

Optionally, the first cell set includes the second cell set.

For example, the second cell set is a subset of the first cell set, or the second cell set is equal to the first cell set.

Optionally, the first cell set includes the sixth cell set.

For example, the sixth cell set is a subset of the first cell set, or the sixth cell set is equal to the first cell set.

Optionally, the first cell set includes the second cell set and the sixth cell set.

For example, the second cell set and the sixth cell set are equal to the first cell set.

For example, there is no intersection between the second cell set and the sixth cell set.

For example, the third DRX set may include the DRX corresponding to the multicast/multicast service that is received by the terminal device and that is associated with the first cell set/first DRX, or the DRX corresponding to the multicast/multicast service that the terminal device joins and that is associated with the first cell set/first DRX, or the DRX corresponding to the multicast/multicast service associated with the first cell set/first DRX, or the DRX corresponding to the multicast/multicast service that is received by the terminal device and that is associated with the second BWP, or the DRX corresponding to the multicast/multicast service that the terminal device joins and that is associated with the second BWP, or the DRX corresponding to the multicast/multicast service associated with the second BWP.

For example, the twelfth multicast service set may include the multicast/multicast service that is received by the terminal device and that is associated with the first cell set/first DRX, or the multicast/multicast service that the terminal device joins and that is associated with the first cell set/first DRX, or the multicast/multicast service associated with the first cell set/first DRX, or the multicast/multicast service that is received by the terminal device and that is associated with the second BWP, or the multicast/multicast service that the terminal device joins and that is associated with the second BWP.

For example, the second cell set may include: in the first cell set, a cell/cell set other than the cell/cell set associated with the twelfth multicast service set/third DRX set, or a cell/cell set other than the sixth cell set.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. A configuration message of an active BWP of the cell 1 includes the information about the CFR. The terminal device receives a multicast 1 in the cell 1. If the first time is not in active time of the first DRX group, but is in active time of a multicast DRX corresponding to the multicast 1, the terminal device does not send the first CSI at the first time for a cell (namely, the cell 2 and the cell 3) other than the cell 1 in the first cell set, where the first DRX is the first DRX group, the third DRX set is the multicast DRX corresponding to the multicast 1, the first cell set is the cell 1, the cell 2, and the cell 3, the second cell set is the cell 2 and the cell 3, the sixth cell set is the cell 1, and the second BWP is the active BWP of the cell 1.

Optionally, the first multicast service set/the eighth cell set is associated with the first DRX/the first cell set.

For example, the first multicast service set may include a multicast/multicast service that is received by the terminal device, that is associated with the first cell set/first DRX, and for which no multicast DRX is configured, or a multicast/multicast service that the terminal device joins, that is associated with the first cell set/first DRX, and for which no multicast DRX is configured, or a multicast/multicast service that is associated with the first cell set/first DRX and for which no multicast DRX is configured, or a multicast/multicast service that is received by the terminal device, that is associated with the second BWP, and for which no multicast DRX is configured, or a multicast/multicast service that the terminal device joins, that is associated with the second BWP, and for which no multicast DRX is configured, or a multicast/multicast service that is associated with the second BWP and for which no multicast DRX is configured.

For example, the first multicast service set may include any one or more/all of multicasts/multicast services that are received by the terminal device, that are associated with the first cell set/first DRX, and for which no multicast DRX is configured, or any one or more/all of multicasts/multicast services that the terminal device joins, that are associated with the first cell set/first DRX, and for which no multicast DRX is configured, or any one or more/all of multicasts/multicast services that are associated with the first cell set/first DRX and for which no multicast DRX is configured, any one or more/all of multicasts/multicast services that are received by the terminal device, that are associated with the second BWP, and for which no multicast DRX is configured, or any one or more/all of multicasts/multicast services that the terminal device joins, that are associated with the second BWP, and for which no multicast DRX is configured, or any one or more/all of multicasts/multicast services that are associated with the second BWP and for which no multicast DRX is configured.

For example, that the first multicast service set/the eighth cell set is associated with the first DRX/the first cell set may be understood as that a same DRX parameter (for example, the parameter related to the first DRX) is used for cells included in the eighth cell set, and receiving of control information of the cells included in the eighth cell set is controlled by a same DRX (for example, the first DRX).

Optionally, the first cell set includes the eighth cell set.

For example, the eighth cell set is a subset of the first cell set, or the eighth cell set is equal to the first cell set.

Optionally, the first cell set includes the second cell set and the eighth cell set.

For example, the second cell set and the eighth cell set are equal to the first cell set.

For example, there is no intersection between the second cell set and the eighth cell set.

For example, the second cell set may include: in the first cell set, a cell/cell set other than the cell/cell set associated with the first multicast service set, or a cell/cell set other than the eighth cell set.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. A configuration message of an active BWP of the cell 1 includes the information about the CFR. The terminal device receives a multicast 1 in the cell 1, and the terminal device receives a multicast 2 in the cell 1. A multicast DRX is configured for the multicast 1, and no multicast DRX is configured for the multicast 2. If the first time is in neither active time of the first DRX group nor active time of the multicast DRX corresponding to the multicast 1, the terminal device does not send the first CSI at the first time for a cell (namely, the cell 3 and the cell 1) other than the cell 1 in the first cell set, where the first DRX is the first DRX group, the third DRX set is the multicast DRX corresponding to the multicast 1, the first cell set is the cell 1, the cell 2, and the cell 3, the second cell set is the cell 3 and the cell 1, and the eighth cell set is the cell 2.

For example, if the symbol n is not in active time of one DRX group, if a configuration message of an active BWP associated with the DRX group includes the information about the CFR, and if there is a multicast that is associated with the DRX group and for which no multicast DRX is configured, for a cell or cell set other than a cell associated with a multicast for which no multicast DRX is configured on/in the DRX group, the terminal device does not send the semi-persistent CSI configured on the PUSCH, and/or the terminal device does not send the CSI on the PUCCH.

Optionally, the first cell set includes the second cell set, the sixth cell set, and the eighth cell set. Alternatively, optionally, the first cell set includes a union of the sixth cell set and the eighth cell set and the second cell set.

For example, the second cell set, the sixth cell set, and the eighth cell set are equal to the first cell set.

For example, there is no intersection between the second cell set and the eighth cell set.

For example, there is no intersection between the second cell set and the union of the sixth cell set and the eighth cell set.

It should be noted that there may be an intersection between the sixth cell set and the eighth cell set, or there may be no intersection between the sixth cell set and the eighth cell set. This is not limited in this application.

It should be noted that the sixth cell set may be the same as or may be different from the eighth cell set. This is not limited in this application.

For example, the second cell set may include: in the first cell set, a cell/cell set other than a cell/cell set associated with the twelfth multicast service set/third DRX set and a cell/cell set associated with the first multicast service set, or a cell/cell set other than the sixth cell set and the eighth cell set.

For example, if a symbol n is not in active time of one DRX group, if a configuration message of an active BWP associated with the DRX group includes the information about the CFR, if the symbol n is in active time of a multicast DRX that the terminal device joins and that is associated with the DRX group, or if there is a multicast that is associated with the DRX group and for which no multicast DRX is configured, for a cell or cell set other than a cell associated with a multicast (for example, a cell associated with a multicast in which the symbol n is in the active time of the multicast DRX) and a cell associated with the multicast for which no multicast DRX is configured on/in the DRX group, the terminal device does not send the semi-persistent CSI configured on the PUSCH, and/or the terminal device does not send the CSI on the PUCCH.

For example, the terminal device may send the first CSI or the CSI at the first time for a cell set or cell other than the second cell set (for example, the sixth cell set and/or the eighth cell set). For example, in a cell or cell set associated with the first multicast service set, the terminal device may send the first CSI at the first time. Alternatively, in a cell or cell set associated with the fifth multicast service, the terminal device may send the first CSI at the first time.

In some embodiments, whether the first time belongs to the active time of the third DRX set may be determined by the terminal device.

Optionally, that the first time belongs to the active time of the third DRX set includes: The terminal device determines that the first time belongs to the active time of the third DRX set.

Optionally, that the terminal device determines that the first time belongs to the active time of the third DRX set may include:
(1) The terminal device determines, based on or in consideration of either or both of an assignment (for example, a received multicast-related assignment) and a multicast-related DRX Command MAC CE that are received at fourth time and/or before the fourth time, that the first time belongs to the active time of the third DRX set; and/or
(2) the terminal device may determine, based on or in consideration of either or both of the assignment (for example, the received multicast-related assignment) and the multicast-related DRX Command MAC CE that are received at the fourth time and/or before the fourth time, that the first time does not belong to the active time of the third DRX set.

The received assignment (for example, the received multicast-related assignment) may be an assignment received in the sixth cell set or the first cell set, and/or a received assignment related to the twelfth multicast service set.

Optionally, the multicast-related DRX Command MAC CE may be a multicast-related DRX Command MAC CE received in the sixth cell set or the first cell set, and/or a DRX Command MAC CE related to the twelfth multicast service set.

The fourth time is determined based on the first time and third duration.

For example, an interval between the fourth time and the first time is the third duration, and the fourth time is before the first time.

Similarly, the third duration may be a parameter configured by the network device, or may be calculated according to a formula or an algorithm, or may be specified in a protocol. This is not limited in embodiments of this application. For example, the third duration is 4 ms.

It should be understood that the fourth time may be the same as or different from the second time. This is not limited in embodiments of this application.

It should be noted that the third duration may be the same as or different from the first duration. This is not limited in embodiments of this application.

Optionally, the preset condition includes the condition 3, and the first CSI may be/include/be replaced with fourth CSI.

The fourth CSI may include any one or more of the following:
semi-persistent CSI;
periodic CSI;
CSI configured on a physical uplink shared channel PUSCH;
semi-persistent CSI configured on a PUSCH;
CSI configured on a physical uplink control channel PUCCH;
periodic CSI configured on the PUCCH; or
semi-persistent CSI configured on the PUCCH.

Optionally, the preset condition includes the condition 3, and "a terminal device does not send first CSI at first time" may be/include/be replaced with that the terminal device does not send the fourth CSI at the first time.

Optionally, that the terminal device does not send the fourth CSI at the first time may include any one or more of the following:
The terminal device does not send the semi-persistent CSI;
the terminal device does not send the periodic CSI;
the terminal device does not send the CSI configured on the PUSCH;
The terminal device does not send the semi-persistent CSI configured on the PUSCH;
the terminal device does not send the CSI configured on the PUCCH;
the terminal device does not send the periodic CSI configured on the PUCCH;
the terminal device does not send the semi-persistent CSI configured on the PUCCH;
the terminal device does not send CSI on the PUCCH;
the terminal device does not send the periodic CSI on the PUCCH;
the terminal device does not send the semi-persistent CSI on the PUCCH;
the terminal device does not send the CSI on the PUSCH; and
the terminal device does not send the semi-persistent CSI on the PUSCH.

Optionally, the preset condition includes the condition 3, and the preset condition may further include the condition 7.

Optionally, the preset condition includes the condition 3, and the method in this application may further include that the condition 7 is met.

Optionally, the preset condition includes the condition 3, and the first CSI may be/include/be replaced with fifth CSI.

The fifth CSI may include any one or more of the following:
semi-persistent CSI;
CSI configured on a PUSCH;
semi-persistent CSI configured on a PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; or
periodic CSI that is configured on the PUCCH and that is not the L1-RSRP.

Optionally, the preset condition includes the condition 3, and "a terminal device does not send first CSI at first time" may be/include/be replaced with that the terminal device does not send the fifth CSI at the first time.

Optionally, that the terminal device does not send the fifth CSI at the first time may include any one or more of the following:
The terminal device does not send the semi-persistent CSI;
the terminal device does not send the CSI configured on the PUSCH;
the terminal device does not send the semi-persistent CSI configured on the PUCCH;
the terminal device does not send the CSI that is the L1-RSRP;
the terminal device does not send the CSI that is not the L1-RSRP;
the terminal device does not send the periodic CSI that is the L1-RSRP;
the terminal device does not send the periodic CSI that is not the L1-RSRP;
the terminal device does not send the CSI that is configured on the PUCCH and that is the L1-RSRP;
the terminal device does not send the CSI that is configured on the PUCCH and that is not the L1-RSRP;
the terminal device does not send the periodic CSI that is configured on the PUCCH and that is the L1-RSRP;
the terminal device does not send the periodic CSI that is configured on the PUCCH and that is not the L1-RSRP;
the terminal device does not send, on the PUCCH, the CSI that is the L1-RSRP;
the terminal device does not send, on the PUCCH, the CSI that is not the L1-RSRP;
the terminal device does not send, on the PUCCH, the periodic CSI that is the L1-RSRP; or
the terminal device does not send, on the PUCCH, the periodic CSI that is not the L1-RSRP.

Optionally, the preset condition includes the condition 3, and the preset condition may further include the condition 8.

Optionally, the preset condition includes the condition 3, and the method in this application may further include that the condition 8 is met.

Optionally, the preset condition includes the condition 3, and the preset condition may further include the condition 9.

Optionally, the preset condition includes the condition 3, and the method in this application may further include that the condition 9 is met.

For example, if the condition 3, the condition 8, and the condition 9 are met, the terminal device does not send the first CSI or the fifth CSI at the first time.

For example, if the condition 3, the condition 8, and the condition 9 are met, the terminal device does not send the first CSI or the fifth CSI at the first time for the second cell set.

Condition 4: The first timer does not run at the first time, and the configuration message of the first BWP does not include the information about the CFR.

In running time of the first timer, the terminal device monitors the terminal device specific control information.

It should be noted that, in the running time of the first timer, the terminal device may also monitor control information that is not terminal device specific control information. This is not limited in this application.

For example, in the running time of the first timer, the terminal device may monitor control information scrambled by any one or more of the following RNTIs: a C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, an AI-RNTI, an SL-RNTI, an SLCS-RNTI, and an SL Semi-Persistent Scheduling V-RNTI.

For example, the first timer may be associated with the first DRX.

For example, the first timer may be associated with the unicast.

For example, the first timer may be an on duration timer (for example, drx-onDurationTimer), an on duration timer related to the unicast DRX (for example, drx-onDurationTimer), or an on duration timer related to one DRX group (for example, drx-onDurationTimer).

It should be noted that for content related to the first BWP, refer to the description in the condition 1. Details are not described herein again.

Optionally, the preset condition includes the condition 4, and "a terminal device does not send first CSI at first time" may include: The terminal device does not send the first CSI at the first time for the first cell set.

In some embodiments, whether the first timer runs at the first time may be determined by the terminal device.

Optionally, that the first timer does not run may include: The terminal device determines that the first timer does not run.

Optionally, that the terminal device determines that the first timer does not run may include:
(1) The terminal device determines, based on or in consideration of any one or more of a grant, an assignment, a DRX Command MAC CE, and a Long DRX Command MAC CE that are received at seventh time and/or before the seventh time, and/or based on or in consideration of a scheduling request sent at the seventh time and/or before the seventh time, that the first timer does not run; and/or
(2) the terminal device determines, based on or in consideration of any one or more of the grant, the assignment, the DRX Command MAC CE, and the Long DRX Command MAC CE that are received at the seventh time and/or before the seventh time, and/or based on or in consideration of the scheduling request sent at the seventh time and/or before the seventh time, that the first timer does not run, where the received grant and assignment may be a grant and an assignment that are received in the first cell set.

Optionally, the grant includes a unicast-related grant.

Optionally, the assignment includes a unicast-related assignment.

Optionally, the DRX Command MAC CE includes a unicast-related DRX Command MAC CE.

Optionally, the Long DRX Command MAC CE includes a unicast-related Long DRX Command MAC CE.

Optionally, the scheduling request includes a unicast-related scheduling request.

The seventh time is determined based on the first time and sixth duration.

For example, an interval between the seventh time and the first time is the sixth duration, and the seventh time is before the first time.

It should be understood that the sixth duration may be a parameter configured by the network device, or may be calculated according to a formula or an algorithm, or may be specified in a protocol. This is not limited in embodiments of this application. For example, the sixth duration is 4 ms.

Optionally, the preset condition includes the condition 4, and the first CSI may be/include/be replaced with sixth CSI.

Optionally, the preset condition includes the condition 4, and "a terminal device does not send first CSI at first time" may be/include/be replaced with that the terminal device does not send the sixth CSI at the first time.

Optionally, the preset condition includes the condition 4, and the preset condition may further include the condition 7.

Optionally, the preset condition includes the condition 4, and the method in this application may further include that the condition 7 is met.

Optionally, the preset condition includes the condition 4, and the preset condition may further include a condition 10.

Optionally, the preset condition includes the condition 4, and the method in this application may further include that the condition 10 is met.

For example, if the condition 4, the condition 7, and the condition 10 are met, the terminal device does not send the first CSI or the sixth CSI at the first time.

For example, if the condition 4, the condition 7, and the condition 10 are met, the terminal device does not send the first CSI or the sixth CSI at the first time for the first cell set.

For example, if CSI masking is configured for the terminal device, if the on duration timer corresponding to the unicast does not run on the symbol n, and if a configuration message of each active BWP does not include the information about the CFR, the terminal device does not send the CSI on the PUCCH.

For example, if CSI masking is configured for the terminal device, if an on duration timer corresponding to one DRX group does not run on the symbol n, and if a configuration message of each active BWP associated with the DRX group does not include the information about the CFR, the terminal device does not send the CSI on the PUCCH for the DRX group or in the DRX group.

For example, if DCP is not configured for the terminal device, or the symbol n is not in duration of the on duration timer corresponding to the unicast, or the on duration timer corresponding to the unicast is started or restarted, if CSI masking is configured for the terminal device, if an on duration timer corresponding to one DRX group does not run on the symbol n, and if a configuration message of each active BWP associated with the DRX group does not include the information about the CFR, the terminal device does not send the CSI on the PUCCH for the DRX group or in the DRX group.

Condition 5: The first timer does not run at the first time, the configuration message of the second BWP includes the information about the CFR, and a second timer set does not run at the first time.

The second timer set includes at least one multicast timer, and the at least one multicast timer includes a first multicast timer. In running time of the first multicast timer, the terminal device monitors control information related to a seventh multicast service.

For example, the multicast timer may be an on duration timer corresponding to a multicast (for example, drx-onDurationTimerPTM), or an on duration timer related to a multicast DRX (for example, drx-onDurationTimerPTM).

For example, the second timer set may include a multicast timer corresponding to a multicast/multicast service received by the terminal device, or a multicast timer corresponding to a multicast/multicast service that the terminal device joins, or a multicast timer corresponding to a multicast/multicast service that is received by the terminal device and that is associated with the second BWP, or a multicast timer corresponding to a multicast/multicast service that the terminal device joins and that is associated with the second BWP.

For example, the second timer set may include a multicast timer corresponding to any one/all of multicasts/multicast services received by the terminal device, or a multicast timer corresponding to any one/all of multicasts/multicast services that the terminal device joins, or a multicast timer corresponding to any one/all of multicasts/multicast services that are received by the terminal device and that are associated with the second BWP, or a multicast timer corresponding to any one/all of multicasts/multicast services that the terminal device joins and that are associated with the second BWP.

For example, the second timer set is associated with a thirteenth multicast service set, and the thirteenth multicast service set may include the seventh multicast service.

For example, the thirteenth multicast service set may include a multicast/multicast service received by the terminal device, or a multicast/multicast service that the terminal device joins.

For example, the thirteenth multicast service set may include any one/all of multicasts/multicast services received by the terminal device, or any one/all of multicasts/multicast services that the terminal device joins.

For example, the seventh multicast service may be understood as a multicast service associated with a fourth G-RNTI and/or a fourth G-CS-RNTI, or a multicast associated with a fourth G-RNTI and/or a fourth G-CS-RNTI.

For example, the control information related to the seventh multicast service may include/be understood as control information associated with (or scrambled by) the fourth G-RNTI and/or the fourth G-CS-RNTI.

It should be noted that, in the running time of the first multicast timer, the terminal device may also monitor other control information. This is not limited in this application.

For example, the first multicast timer may be a timer related to the seventh multicast service, or drx-onDurationTimerPTM related to the seventh multicast service, or a timer related to the fourth G-RNTI and/or the fourth G-CS-RNTI, or drx-onDurationTimerPTM related to the fourth G-RNTI and/or the fourth G-CS-RNTI.

Optionally, the preset condition includes the condition 5, and "a terminal device does not send first CSI at first time" may include: The terminal device does not send the first CSI at the first time for the first cell set.

The first cell set is associated with the first timer.

For example, the first timer is an on duration timer (for example, drx-onDurationTimer) corresponding to one DRX group (for example, the first DRX group).

It should be understood that for related descriptions of "the terminal device does not send the first CSI at the first time for the first cell set", refer to the foregoing related descriptions. For brevity, details are not described again.

It should be noted that for content related to the second BWP, refer to the description in the condition 2. Details are not described herein again.

Optionally, the second BWP may include one or more active BWPs related to the second timer set or a fifth cell set.

Optionally, the second timer set is associated with the first cell set, or the first DRX, or the first timer.

It may be understood that the first cell set includes the fifth cell set.

For example, the fifth cell set is a subset of the first cell set, or the fifth cell set is equal to the first cell set.

The fifth cell set is associated with the second timer set, and the fifth cell set includes at least one cell.

For example, the second timer set may include a multicast timer corresponding to a multicast/multicast service that is received by the terminal device and that is associated with the first cell set/first timer/first DRX, or a multicast timer corresponding to a multicast/multicast service that the terminal device joins and that is associated with the first cell set/first timer/first DRX, or a multicast timer corresponding to a multicast/multicast service associated with the first cell set/first timer/first DRX, or a multicast timer corresponding to a multicast/multicast service that is received by the terminal device and that is associated with the second BWP, or a multicast timer corresponding to a multicast/multicast service that the terminal device joins and that is associated with the second BWP, or a multicast timer corresponding to a multicast/multicast service associated with the second BWP.

For example, the second timer set may include a multicast timer corresponding to any one/all of multicasts/multicast services that are received by the terminal device and that are associated with the first cell set/first timer/first DRX, or a multicast timer corresponding to any one/all of multicasts/multicast services that the terminal device joins and that are associated with the first cell set/first timer/first DRX, or a multicast timer corresponding to any one/all of multicasts/multicast services associated with the first cell set/first timer/first DRX, or a multicast timer corresponding to any one/all of multicasts/multicast services that are received by the terminal device and that are associated with the second BWP, or a multicast timer corresponding to any one/all of multicasts/multicast services that the terminal device joins and that are associated with the second BWP, or a multicast timer corresponding to any one/all of multicasts/multicast services associated with the second BWP.

For example, the thirteenth multicast service set may include the multicast/multicast service that is received by the terminal device and that is associated with the first cell set/first timer/first DRX, or the multicast/multicast service that the terminal device joins and that is associated with the first cell set/first timer/first DRX, or the multicast/multicast service associated with the first cell set/first timer/first DRX.

For example, the thirteenth multicast service set may include any one/all of the multicasts/multicast services that are received by the terminal device and that are associated with the first cell set/first timer/first DRX, or any one/all of the multicasts/multicast services that the terminal device joins and that are associated with the first cell set/first timer/first DRX, or any one/all of the multicasts/multicast services that are associated with the first cell set/first timer/first DRX.

For example, the second timer set is a set of multicast timers associated with the first timer or the first DRX, or a multicast timer set corresponding to a multicast service set associated with the first cell set.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. A configuration message of an active BWP of the cell 1 includes the information about the CFR. The terminal device receives a multicast 1 in the cell 1. If a timer of the first DRX group does not run at the first time, and a timer of a multicast DRX corresponding to the multicast 1 does not run at the first time, the terminal device does not send the first CSI at the first time for the first DRX group/the first cell set, where the first timer is the timer of the first DRX group, the second timer set is the timer of the multicast DRX corresponding to the multicast 1, the first cell set is the cell 1, the cell 2, and the cell 3, the fifth cell set is the cell 1, and the second BWP is the active BWP of the cell 1.

In some embodiments, whether the second timer set runs at the first time may be determined by the terminal device.

Optionally, that the second timer set does not run at the first time includes: The terminal device determines that the second timer set does not run at the first time.

Optionally, that the terminal device determines that the second timer set does not run may include:
(1) The terminal device determines, based on or in consideration of either or both of an assignment (for example, a received multicast-related assignment) and a multicast-related DRX Command MAC CE that are received at eighth time and/or before the eighth time, that the second timer set does not run; and/or
(2) the terminal device determines, based on or in consideration of either or both of the assignment (for example, the received multicast-related assignment) and the multicast-related DRX Command MAC CE that are received at the eighth time and/or before the eighth time, that the second timer set does not run, where the received assignment (for example, the received multicast-related assignment) may be an assignment received in the fifth cell set or the first cell set, and/or a received assignment related to the thirteenth multicast service set. Optionally, the multicast-related DRX Command MAC CE may be a multicast-related DRX Command MAC CE received in the fifth cell set, and/or a DRX Command MAC CE related to the thirteenth multicast service set.

The eighth time is determined based on the first time and seventh duration.

For example, an interval between the eighth time and the first time is the seventh duration, and the eighth time is before the first time.

It should be understood that the seventh duration may be a parameter configured by the network device, or may be calculated according to a formula or an algorithm, or may be specified in a protocol. This is not limited in embodiments of this application. For example, the seventh duration is 4 ms.

Optionally, the preset condition includes the condition 5, and the first CSI may be/include/be replaced with the sixth CSI.

The sixth CSI may include any one or more of the following:
semi-persistent CSI;
periodic CSI;
CSI configured on a physical uplink shared channel PUSCH;
semi-persistent CSI configured on a PUSCH;
CSI configured on a physical uplink control channel PUCCH;
periodic CSI configured on the PUCCH; or
semi-persistent CSI configured on the PUCCH.

Optionally, the preset condition includes the condition 5, and "a terminal device does not send first CSI at first time" may be/include/be replaced with that the terminal device does not send the sixth CSI at the first time.

Optionally, that the terminal device does not send the sixth CSI at the first time may include any one or more of the following:
The terminal device does not send the semi-persistent CSI;
the terminal device does not send the periodic CSI;
the terminal device does not send the CSI configured on the PUSCH;
the terminal device does not send the semi-persistent CSI configured on the PUSCH;
the terminal device does not send the CSI configured on the PUCCH;
the terminal device does not send the periodic CSI configured on the PUCCH;
the terminal device does not send the semi-persistent CSI configured on the PUCCH;
the terminal device does not send CSI on the PUCCH;
the terminal device does not send the periodic CSI on the PUCCH;
the terminal device does not send the semi-persistent CSI on the PUCCH;
the terminal device does not send the CSI on the PUSCH; or
the terminal device does not send the semi-persistent CSI on the PUSCH.

For example, if the condition 5 is met, the terminal device does not send the first CSI or the sixth CSI at the first time.

For example, if the condition 5 is met, the terminal device does not send the first CSI or the sixth CSI at the first time for the first cell set.

For example, if an on duration timer corresponding to a unicast does not run on the symbol n, if a configuration message of an active BWP includes the information about the CFR, and if each on duration timer corresponding to a multicast does not run on the symbol n, the terminal device does not send the CSI on the PUCCH.

For example, if an on duration timer corresponding to one DRX group does not run on the symbol n, if a configuration message of an active BWP associated with the DRX group includes the information about the CFR, and if each on duration timer corresponding to a multicast associated with the DRX group does not run on the symbol n, the terminal device does not send the CSI on the PUCCH for the DRX group or in the DRX group.

Optionally, the preset condition includes the condition 5, and the preset condition may further include the condition 7.

Optionally, the preset condition includes the condition 5, and the method in this application may further include that the condition 7 is met.

Optionally, the preset condition includes the condition 5, and the preset condition may further include the condition 10.

Optionally, the preset condition includes the condition 5, and the method in this application may further include that the condition 10 is met.

The condition 10 may include: The terminal device obtains first information.

The first information may indicate any one or more of the following: The terminal device sends the CSI in running time of a unicast timer (for example, the first timer) and/or in running time of a multicast timer; the terminal device is limited to sending the CSI in running time of a unicast timer (for example, the first timer) and/or in running time of a multicast timer; or the terminal device sends the CSI only in running time of a unicast timer (for example, the first timer) and/or in running time of a multicast timer.

For example, the unicast timer may include/be an on duration timer corresponding to a unicast (for example, drx-onDurationTimer), and/or an on duration timer corresponding to a DRX group (for example, drx-onDurationTimer).

"Sending CSI in running time of a unicast timer (for example, a first timer) and/or in running time of a multicast timer" may include/be understood as any one or more of the following: sending the CSI on the PUCCH in the running time of the unicast timer (for example, the first timer) and/or in the running time of the multicast timer.

For example, the first information may be sent by the network device. For example, the network device may send the first information to the terminal device by using an RRC message.

For example, the first information may be CSI-mask information (or referred to as CSI masking information or CSI-masking information). The CSI-mask information may indicate the terminal device to send the CSI in running time of drx-onDurationTimer and/or in running time of drx-onDurationTimerPTM.

Correspondingly, if the terminal device obtains the first information, at active time other than the running time of the unicast timer and/or the running time of the multicast timer or at time other than the running time of the unicast timer and/or the running time of the multicast timer, the terminal device does not send the CSI or the terminal device does not send the CSI on the PUCCH.

It should be noted that "the terminal device obtains first information" may include/be replaced with that a CSI-mask is configured for the terminal device.

It should be noted that "the terminal device does not obtain first information" may include/be replaced with that no CSI-mask is configured for the terminal device.

For example, if the condition 5, the condition 7, and the condition 10 are met, the terminal device does not send the first CSI or the sixth CSI at the first time.

For example, if the condition 5, the condition 7, and the condition 10 are met, the terminal device does not send the first CSI or the sixth CSI at the first time for the first cell set.

Optionally, the preset condition includes the condition 5, and the preset condition may further include the condition 14.

Optionally, the preset condition includes the condition 5, and the method in this application may further include that the condition 14 is met.

For example, if the condition 5, the condition 7, and the condition 14 are met, the terminal device does not send the first CSI or the sixth CSI at the first time.

For example, if the condition 5, the condition 7, and the condition 14 are met, the terminal device does not send the first CSI or the sixth CSI at the first time for the first cell set.

For example, if the condition 5, the condition 10, and the condition 14 are met, the terminal device does not send the first CSI or the sixth CSI at the first time.

For example, if the condition 5, the condition 10, and the condition 14 are met, the terminal device does not send the first CSI or the sixth CSI at the first time for the first cell set.

For example, if the condition 5, the condition 7, the condition 10, and the condition 14 are met, the terminal device does not send the first CSI or the sixth CSI at the first time.

For example, if the condition 5, the condition 7, the condition 10, and the condition 14 are met, the terminal device does not send the first CSI or the sixth CSI at the first time for the first cell set.

For example, if DCP is not configured for the terminal device, or the symbol n is not in duration of the on duration timer corresponding to the unicast, or the on duration timer corresponding to the unicast is started or restarted, if CSI masking is configured for the terminal device, if an on duration timer corresponding to one DRX group does not run on the symbol n, if a configuration message of an active BWP associated with the DRX group includes the information about the CFR, or if each on duration timer corresponding to a multicast associated with the DRX group does not run on the symbol n, and a multicast DRX is configured for each multicast that the UE joins and that is associated with the DRX group, the terminal device does not send the CSI on the PUCCH for the DRX group or in the DRX group.

Condition 6: includes a condition C and a condition D.

Condition C: The first timer does not run at the first time, and the configuration message of the second BWP includes the information about the CFR.

Condition D: A third timer set runs at the first time, and/or no multicast DRX is configured for a second multicast service set.

The third timer set may include at least one multicast timer, and the at least one multicast timer includes a second multicast timer. In running time of the second multicast timer, the terminal device may monitor control information related to an eighth multicast service.

For example, the third timer set may include a multicast timer corresponding to a multicast/multicast service received by the terminal device, or a multicast timer corresponding to a multicast/multicast service that the terminal device joins, or a multicast timer corresponding to a multicast/multicast service that is received by the terminal device and that is associated with the second BWP, or a multicast timer corresponding to a multicast/multicast service that the terminal device joins and that is associated with the second BWP.

For example, the third timer set is associated with a fourteenth multicast service set, and the fourteenth multicast service set may include the eighth multicast service.

For example, the fourteenth multicast service set may include the multicast/multicast service received by the terminal device, or the multicast/multicast service that the terminal device joins, or the multicast/multicast service that is received by the terminal device and that is associated with the second BWP, or the multicast/multicast service that the terminal device joins and that is associated with the second BWP.

For example, the eighth multicast service may be understood as a multicast service associated with a fifth G-RNTI and/or a fifth G-CS-RNTI, or a multicast associated with a fifth G-RNTI and/or a fifth G-CS-RNTI.

For example, the control information related to the eighth multicast service may include/be understood as control information associated with (or scrambled by) the fifth G-RNTI and/or the fifth G-CS-RNTI.

It should be noted that, in the running time of the second multicast timer, the terminal device may also monitor other control information. This is not limited in this application.

For example, the second multicast timer may be a timer related to the eighth multicast service, or drx-onDurationTimerPTM related to the eighth multicast service, or a timer related to the fifth G-RNTI and/or the fifth G-CS-RNTI, or drx-onDurationTimerPTM related to the fifth G-RNTI and/or the fifth G-CS-RNTI.

Optionally, the preset condition includes the condition 6, and "a terminal device does not send first CSI at first time" may include: The terminal device does not send the first CSI at the first time for a third cell set.

It should be noted that "the terminal device does not send the first CSI at the first time for a third cell set" may include/be understood as either of the following: The terminal device does not send CSI (for example, the first CSI) in the third cell set at the first time; or the terminal device does not send CSI for the third cell set (for example, the first CSI) at the first time.

It should be noted that for "the terminal device does not send CSI (for example, the first CSI) in the third cell set at the first time", whether the terminal device sends the CSI for the third cell set in another cell or cell group is not limited in this application.

It should be noted that for "the terminal device does not send CSI for the third cell set (for example, the first CSI) at the first time", whether the terminal device sends CSI for another cell or cell set in the third cell set is not limited in this application.

The third cell set includes at least one cell.

Optionally, the third cell set is not associated with the third timer set.

For example, a seventh cell set is associated with the third timer set or the fourteenth multicast service set.

The seventh cell set includes at least one cell.

It should be understood that, that the third cell set is not associated with the third timer set may be understood as that the third cell set is not associated with the fourteenth multicast service set/the seventh cell set.

For example, the third cell set may include a cell/cell set other than a cell/cell set associated with the fourteenth multicast service set/third timer set, or a cell/cell set other than the seventh cell set.

For example, the terminal device includes/has three cells: a cell 1, a cell 2, and a cell 3. The terminal device receives a multicast 1 in the cell 1. If an on duration timer corresponding to a unicast does not run at the first time, but an on duration timer corresponding to the multicast 1 runs at the first time, the terminal device does not send the first CSI at the first time for the cell 2 and the cell 3, where the first timer is the on duration timer corresponding to the unicast, the third timer set is the on duration timer corresponding to the multicast 1, the third cell set is the cell 2 and the cell 3, and the seventh cell set is the cell 1.

For example, if the on duration timer corresponding to the unicast does not run on the symbol n, if the configuration message of the active BWP includes the information about the CFR, and if an on duration timer corresponding to the multicast that the terminal device joins runs on the symbol n, for a cell or cell set other than a multicast-associated cell (for example, a cell associated with a multicast in which the symbol n is in the active time of the multicast DRX), the terminal device does not send the semi-persistent CSI configured on the PUSCH, and/or the terminal device does not send the CSI on the PUCCH.

Optionally, the third cell set is not associated with the second multicast service set.

The second multicast service set includes at least one multicast service, and the at least one multicast service includes a sixth multicast service.

For example, the second multicast service set may include the multicast/multicast service received by the terminal device, or the multicast/multicast service that the terminal device joins, or the multicast/multicast service that is received by the terminal device and that is associated with the second BWP, or the multicast/multicast service that the terminal device joins and that is associated with the second BWP.

The multicast/multicast service received by the terminal device may include/be understood as a multicast/multicast service that is to be/has been/is being received by the terminal device, and/or a multicast/multicast service of configuration that is related to a multicast/multicast service and that is obtained by the terminal device.

For example, the second multicast service set may include a multicast/multicast service that is received by the terminal device and for which no multicast DRX is configured, or a multicast/multicast service that the terminal device joins and for which no multicast DRX is configured, or a multicast/multicast service for which no multicast DRX is configured, or a multicast/multicast service that is received by the terminal device, that is associated with the second BWP, and for which no multicast DRX is configured, or a multicast/multicast service that the terminal device joins, that is associated with the second BWP, and for which no multicast DRX is configured, or a multicast/multicast service that is associated with the second BWP and for which no multicast DRX is configured.

For example, the second multicast service set may include any one or more/all of multicasts/multicast services that are received by the terminal device and for which no multicast DRX is configured, or any one or more/all of multicasts/multicast services that the terminal device joins and for which no multicast DRX is configured, or any one or more/all of multicasts/multicast services that are received by the terminal device, that are associated with the second BWP, and for which no multicast DRX is configured, or any one or more/all of multicasts/multicast services that the terminal device joins, that are associated with the second BWP, and for which no multicast DRX is configured, or any one or more/all of multicasts/multicast services that are associated with the second BWP and for which no multicast DRX is configured.

For example, a ninth cell set is associated with the second multicast service set.

The ninth cell set includes at least one cell.

For example, that the third cell set is not associated with the second multicast service set may be understood as that the third cell set is not associated with the ninth cell set.

For example, the third cell set may include a cell/cell set other than a cell/cell set associated with the second multicast service set, or a cell/cell set other than the ninth cell set.

For example, the terminal device includes/has three cells: a cell 1, a cell 2, and a cell 3. The terminal device receives a multicast 1 in the cell 1, and the terminal device receives a multicast 2 in the cell 1. A multicast DRX is configured for the multicast 1, and no multicast DRX is configured for the multicast 2. If an on duration timer of the first DRX does not run at the first time, and an on duration timer of the multicast DRX corresponding to the multicast 1 does not run at the first time, the terminal device does not send the first CSI at the first time for the cell 3 and the cell 2, where the first DRX is the unicast DRX, the third cell set is the cell 3 and the cell 2, and the ninth cell set is the cell 1.

For example, if the on duration timer corresponding to the unicast does not run on the symbol n, if the configuration message of the active BWP includes the information about the CFR, and if there is a multicast for which no multicast DRX is configured, for a cell or cell set other than a cell associated with the multicast for which no multicast DRX is configured, the terminal device does not send the semi-persistent CSI configured on the PUSCH, and/or the terminal device does not send the CSI on the PUCCH.

For example, the third cell set may include a cell/cell set other than the cell/cell set associated with the fourteenth multicast service set/third timer set and the cell/cell set associated with the second multicast service set, or a cell/cell set other than the seventh cell set and the ninth cell set.

For example, if the on duration timer corresponding to the unicast does not run on the symbol n, if the configuration message of the active BWP includes the information about the CFR, if an on duration timer corresponding to the multicast that the terminal device joins runs on the symbol n, and if there is the multicast for which no multicast DRX is configured, for the cell or cell set other than the cell associated with the multicast (for example, the cell associated with the multicast in which the symbol n is in the active time of the multicast DRX) and the cell associated with the multicast for which no multicast DRX is configured, the terminal device does not send the semi-persistent CSI configured on the PUSCH, and/or the terminal device does not send the CSI on the PUCCH.

Optionally, the third cell set is associated with the first timer or the first DRX.

For example, that the third cell set is associated with the first timer or the first DRX may be understood as that a same DRX parameter (for example, the first timer or the parameter related to the first DRX) is used for cells included in the third cell set, and receiving of control information of the cells included in the third cell set is controlled by a same DRX (for example, the first timer or the first DRX).

Optionally, the third timer set/the seventh cell set is associated with the first DRX/the first cell set/the first timer.

For example, that the seventh cell set is associated with the first DRX may be understood as that a same DRX parameter (for example, the parameter related to the first DRX) is used for cells included in the seventh cell set, and receiving of control information of the cells included in the seventh cell set is controlled by a same DRX (for example, the first DRX).

Optionally, the first cell set includes the third cell set.

For example, the third cell set is a subset of the first cell set, or the third cell set is equal to the first cell set.

Optionally, the first cell set includes the seventh cell set.

For example, the seventh cell set is a subset of the first cell set, or the seventh cell set is equal to the first cell set.

Optionally, the first cell set includes the third cell set and the seventh cell set.

For example, the third cell set and the seventh cell set are equal to the first cell set.

For example, there is no intersection between the third cell set and the seventh cell set.

For example, the third timer set may include a multicast timer corresponding to a multicast/multicast service that is received by the terminal device and that is associated with the first cell set/first DRX/first timer, or a multicast timer corresponding to a multicast/multicast service that the terminal device joins and that is associated with the first cell set/first DRX/first timer, or a multicast timer corresponding to a multicast/multicast service associated with the first cell set/first DRX/first timer, or a multicast timer corresponding to a multicast/multicast service that is received by the terminal device and that is associated with the second BWP, or a multicast timer corresponding to a multicast/multicast service that the terminal device joins and that is associated with the second BWP.

For example, the fourteenth multicast service set may include the multicast/multicast service that is received by the terminal device and that is associated with the first cell set/first DRX/first timer, or the multicast/multicast service that the terminal device joins and that is associated with the first cell set/first DRX/first timer, or the multicast/multicast service associated with the first cell set/first DRX/first timer, or the multicast/multicast service that is received by the terminal device and that is associated with the second BWP, or the multicast/multicast service that the terminal device joins and that is associated with the second BWP.

For example, the third cell set may include: in the first cell set, a cell/cell set other than a cell/cell set associated with the fourteenth multicast service set/third timer set, or a cell/cell set other than the seventh cell set.

For example, the terminal device includes/has two DRX groups, a first DRX group corresponds to three cells: a cell 1, a cell 2, and a cell 3, and a second DRX group corresponds to three cells: a cell 4, a cell 5, and a cell 6. A configuration message of an active BWP of the cell 1 includes the information about the CFR. The terminal device receives a multicast 1 in the cell 1. If an on duration timer of the first DRX group does not run at the first time, and an on duration timer of a multicast DRX corresponding to the multicast 1 runs at the first time, the terminal device does not send the first CSI at the first time for a cell (that is, the cell 2 and the cell 3) other than the cell 1 in the first cell set, where the first timer is the on duration timer of the first DRX group, the third timer set is the on duration timer of the multicast DRX corresponding to the multicast 1, the first cell set is the cell 1, the cell 2, and the cell 3, and the third cell set is the cell 2 and the cell 3.

Optionally, the second multicast service set/the ninth cell set is associated with the first DRX/the first cell set.

For example, the second multicast service set may include a multicast/multicast service that is received by the terminal device, that is associated with the first cell set/first DRX, and for which no multicast DRX is configured, or a multicast/multicast service that the terminal device joins, that is associated with the first cell set/first DRX, and for which no multicast DRX is configured, or a multicast/multicast service that is associated with the first cell set/first DRX and for which no multicast DRX is configured, or a multicast/multicast service that is received by the terminal device, that is associated with the second BWP, and for which no multicast DRX is configured, or a multicast/multicast service that the terminal device joins, that is associated with the second BWP, and for which no multicast DRX is configured, or a multicast/multicast service that is associated with the second BWP and for which no multicast DRX is configured.

For example, the second multicast service set may include any one or more/all of multicasts/multicast services that are received by the terminal device, that are associated with the first cell set/first DRX, and for which no multicast DRX is configured, or any one or more/all of multicasts/multicast services that the terminal device joins, that are associated with the first cell set/first DRX, and for which no multicast DRX is configured, or any one or more/all of multicasts/multicast services that are associated with the first cell set/first DRX and for which no multicast DRX is configured, any one or more/all of multicasts/multicast services that are received by the terminal device, that are associated with the second BWP, and for which no multicast DRX is configured, or any one or more/all of multicasts/multicast services that the terminal device joins, that are associated with the second BWP, and for which no multicast DRX is configured, or any one or more/all of multicasts/multicast services that are associated with the second BWP and for which no multicast DRX is configured.

For example, that the second multicast service set/the ninth cell set is associated with the first DRX/the first cell set may be understood as that a same DRX parameter (for example, the parameter related to the first DRX) is used for cells included in the ninth cell set, and receiving of control information of the cells included in the ninth cell set is controlled by a same DRX (for example, the first DRX).

Optionally, the first cell set includes the ninth cell set.

For example, the ninth cell set is a subset of the first cell set, or the ninth cell set is equal to the first cell set.

Optionally, the first cell set includes the third cell set and the ninth cell set.

For example, the third cell set and the ninth cell set are equal to the first cell set.

For example, there is no intersection between the third cell set and the ninth cell set.

For example, the third cell set may include: in the first cell set, a cell/cell set other than the cell/cell set associated with the second multicast service set, or a cell/cell set other than the ninth cell set.

For example, if an on duration timer corresponding to one DRX group does not run on the symbol n, if a configuration message of an active BWP associated with the DRX group includes the information about the CFR, and if there is a multicast that is associated with the DRX group and for which no multicast DRX is configured, the terminal device does not send the CSI on the PUCCH for a cell or cell set other than a cell associated with the multicast for which no multicast DRX is configured on/in the DRX group.

Optionally, the first cell set includes the third cell set, the seventh cell set, and the ninth cell set. Alternatively, optionally, the first cell set includes a union of the seventh cell set and the ninth cell set and the third cell set.

For example, the third cell set, the seventh cell set, and the ninth cell set are equal to the first cell set.

For example, there is no intersection between the third cell set and the ninth cell set.

For example, there is no intersection between the third cell set and the union of the seventh cell set and the ninth cell set.

It should be noted that there may be an intersection between the seventh cell set and the ninth cell set, or there may be no intersection between the seventh cell set and the ninth cell set. This is not limited in this application.

It should be noted that the seventh cell set may be the same as or may be different from the ninth cell set. This is not limited in this application.

For example, the third cell set may include: in the first cell set, a cell/cell set other than the cell/cell set associated with the fourteenth multicast service set/third timer set and the cell/cell set associated with the second multicast service set, or a cell/cell set other than the seventh cell set and the ninth cell set.

For example, if an on duration timer corresponding to one DRX group does not run on the symbol n, if a configuration message of an active BWP associated with the DRX group includes the information about the CFR, if an on duration timer corresponding to a multicast that the terminal device joins and that is associated with the DRX group runs on the symbol n, and if there is a multicast that is associated with the DRX group and for which no multicast DRX is configured, for a cell or cell set other than a cell associated with a multicast (for example, a cell associated with a multicast in which the symbol n is in active time of the multicast DRX) and a cell associated with the multicast for which no multicast DRX is configured on/in the DRX group, the terminal device does not send the semi-persistent CSI configured on the PUSCH, and/or the terminal device does not send the CSI on the PUCCH.

For example, the terminal device may send the first CSI or the CSI at the first time for a cell set or cell other than the third cell set (for example, the seventh cell set and/or the ninth cell set). For example, in a cell or cell set associated with the second multicast service set, the terminal device may send the first CSI at the first time. Alternatively, in a cell or cell set associated with the sixth multicast service, the terminal device may send the first CSI at the first time.

In some embodiments, the third timer set runs at the first time may be determined by the terminal device.

Optionally, that the third timer set runs includes: The terminal device determines that the third timer set runs.

Optionally, that the terminal device determines that the third timer set runs may include:
(1) The terminal device determines, based on or in consideration of either or both of an assignment (for example, a received multicast-related assignment) and a multicast-related DRX Command MAC CE that are received at tenth time and/or before the tenth time, that the third timer set runs; and/or
(2) the terminal device determines, based on or in consideration of either or both of the assignment (for example, the received multicast-related assignment) and the multicast-related DRX Command MAC CE that are received at the tenth time and/or before the tenth time, that the third timer set runs, where the received assignment (for example, the received multicast-related assignment) may be an assignment received in the seventh cell set or the first cell set, and/or a received assignment related to the fourteenth multicast service set. Optionally, the multicast-related DRX Command MAC CE may be a multicast-related DRX Command MAC CE received in the seventh cell set or the first cell set, and/or a DRX Command MAC CE related to the fourteenth multicast service set.

The tenth time is determined based on the first time and ninth duration.

For example, an interval between the tenth time and the first time is the ninth duration, and the tenth time is before the first time.

It should be understood that the ninth duration may be a parameter configured by the network device, or may be calculated according to a formula or an algorithm, or may be specified in a protocol. This is not limited in embodiments of this application. For example, the ninth duration is 4 ms.

Optionally, the preset condition includes the condition 6, and the first CSI may be/include/be replaced with seventh CSI.

The seventh CSI may include any one or more of the following:
semi-persistent CSI;
periodic CSI;
CSI configured on a physical uplink shared channel PUSCH;
semi-persistent CSI configured on a PUSCH;
CSI configured on a physical uplink control channel PUCCH;
periodic CSI configured on the PUCCH; or
semi-persistent CSI configured on the PUCCH.

Optionally, the preset condition includes the condition 6, and "a terminal device does not send first CSI at first time" may be/include/be replaced with that the terminal device does not send the seventh CSI at the first time.

Optionally, that the terminal device does not send the seventh CSI at the first time may include any one or more of the following:
The terminal device does not send the semi-persistent CSI;
the terminal device does not send the periodic CSI;
the terminal device does not send the CSI configured on the PUSCH;
the terminal device does not send the semi-persistent CSI configured on the PUSCH;
the terminal device does not send the CSI configured on the PUCCH;
the terminal device does not send the periodic CSI configured on the PUCCH;
the terminal device does not send the semi-persistent CSI configured on the PUCCH;
the terminal device does not send CSI on the PUCCH;
the terminal device does not send the periodic CSI on the PUCCH;
the terminal device does not send the semi-persistent CSI on the PUCCH;
the terminal device does not send the CSI on the PUSCH; or
the terminal device does not send the semi-persistent CSI on the PUSCH.

For example, if the condition 6 is met, the terminal device does not send the first CSI or the seventh CSI at the first time.

For example, if the condition 6 is met, the terminal device does not send the first CSI or the seventh CSI at the first time for the third cell set.

Optionally, the preset condition includes the condition 6, and the preset condition may further include the condition 7.

Optionally, the preset condition includes the condition 6, and the method in this application may further include that the condition 7 is met.

Optionally, the preset condition includes the condition 6, and the preset condition may further include the condition 10.

Optionally, the preset condition includes the condition 6, and the method in this application may further include that the condition 10 is met.

For example, if CSI masking is configured for the terminal device, if the on duration timer corresponding to the unicast does not run on the symbol n, if the configuration message of the active BWP includes the information about the CFR, if the on duration timer corresponding to the multicast runs on the symbol n, and if there is the multicast for which no multicast DRX is configured, for a cell or cell set other than the cell associated with the multicast (for example, the cell associated with the multicast in which the symbol n is in the active time of the multicast DRX) and/or the cell associated with the multicast for which no multicast DRX is configured, the terminal device does not send the CSI on the PUCCH.

For example, if CSI masking is configured for the terminal device, if an on duration timer corresponding to one DRX group does not run on the symbol n, if a configuration message of an active BWP associated with the DRX group includes the information about the CFR, if an on duration timer corresponding to a multicast associated with the DRX group runs on the symbol n, and if there is a multicast that is associated with the DRX group and for which no multicast DRX is configured, for a cell or cell set other than a cell associated with a multicast (for example, a cell associated with a multicast in which the symbol n is in active time of the multicast DRX) and/or a cell associated with the multicast for which no multicast DRX is configured on/in the DRX group, or in a cell or cell set other than a cell associated with a multicast (for example, a cell associated with a multicast in which the symbol n is in active time of the multicast DRX) and/or a cell associated with the multicast for which no multicast DRX is configured on/in the DRX group, the terminal device does not send the CSI on the PUCCH.

For example, if the condition 6, the condition 7, and the condition 10 are met, the terminal device does not send the first CSI or the seventh CSI at the first time.

For example, if the condition 6, the condition 7, and the condition 10 are met, the terminal device does not send the first CSI or the seventh CSI at the first time for the third cell set.

Optionally, the preset condition may further include step 420/a condition 11.

Optionally, the method may further include step 420.

420: The terminal device obtains fifth information, where the fifth information indicates the terminal device to send the CSI based on the multicast DRX (for example, the active time of the multicast DRX and/or an on duration timer of the multicast DRX) or based on the multicast.

The condition 11 may include: The terminal device obtains the fifth information, where the fifth information indicates the terminal device to send the CSI based on the multicast DRX (for example, the active time of the multicast DRX and/or the on duration timer of the multicast DRX).

"Sending CSI based on a multicast DRX (for example, active time of the multicast DRX and/or an on duration timer of the multicast DRX)" may be understood as any one or more of the following: sending the CSI based on the unicast DRX (for example, active time of the unicast DRX/DRX group and/or an on duration timer of the unicast DRX/DRX group) and the multicast DRX (for example, the active time of the multicast DRX and/or the on duration timer of the multicast DRX). The multicast DRX (for example, the active time of the multicast DRX and/or the on duration timer of the multicast DRX) needs to be considered for sending the CSI. The unicast DRX (for example, the active time of the unicast DRX/DRX group and/or the on duration timer of the unicast DRX/DRX group) and the multicast DRX (for example, the active time of the multicast DRX and/or the on duration timer of the multicast DRX) need to be considered for sending the CSI.

Optionally, this step may be performed before step 410.

That the terminal device obtains the fifth information may be performed according to the method step in the foregoing embodiment. For example, if the terminal device does not obtain the fifth information, the terminal device does not need to send the CSI based on the multicast DRX (for example, the active time of the multicast DRX and/or the on duration timer of the multicast DRX).

Optionally, the fifth information may be sent by the network device to the terminal device. Optionally, a granularity of the fifth information may be per terminal device, or may be per multicast/multicast service (for example, per G-RNTI and/or G-CS-RNTI). This is not limited in this application. Optionally, in different terminal devices, some terminal devices may obtain the fifth information, and some terminal devices may not obtain the fifth information. This is not limited in this application.

It may be understood that, if the condition 11 is not met, the terminal device does not consider one or more of the following when determining whether to send the CSI: Whether the multicast DRX is in the active time, whether the multicast timer runs, whether the multicast DRX is configured for the multicast, and whether the configuration message of the BWP includes information about a multicast CFR.

For example, if the condition 11 is not met, the condition 1, 2, or 3 may be replaced with that the first time does not belong to the active time of the first discontinuous reception DRX. For example, if the condition 11 is not met, the condition 4, 5, or 6 may be replaced with that the first timer does not run at the first time.

Optionally, the method may further include step 430.

430: The terminal device sends sixth information to the network device, where the sixth information indicates that the terminal device can or cannot send the CSI based on the multicast DRX (for example, the active time of the multicast DRX and/or the on duration timer of the multicast DRX); and/or the terminal device sends seventh information to the network device, where the seventh information indicates that the terminal device prefers to or does not prefer to send the CSI based on the multicast DRX (for example, the active time of the multicast DRX and/or the on duration timer of the multicast DRX).

The sixth information is used by the terminal device to report, to the network device, a capability of sending the CSI based on the multicast DRX (for example, the active time of the multicast DRX and/or the on duration timer of the multicast DRX), and the seventh information is used by the terminal device to report, to the network device, that the terminal device prefers to or does not prefer to send the CSI based on the multicast DRX (for example, the active time of the multicast DRX and/or the on duration timer of the multicast DRX). This helps the network device select a mode.

Optionally, this step may be performed before step 410.

It should be noted that a sequence of the steps in this embodiment of this application is not limited in this application.

It should be noted that a sequence of determining different conditions in this embodiment of this application is not limited in this application.

It should be noted that, in the method provided in this embodiment of this application, that the terminal device does not send the CSI (for example, the first CSI) in some cases is limited. It may be understood that the terminal device may send the CSI in a case other than the case limited in this embodiment of this application.

In this embodiment of this application, the terminal device does not send the first CSI at the first time if the preset condition is met. This resolves a problem of how the terminal device reports the CSI in a scenario in which the configuration message of the BWP may include or may not include the information about the multicast CFR, and avoids unnecessary CSI reporting, thereby reducing power consumption of the terminal device.

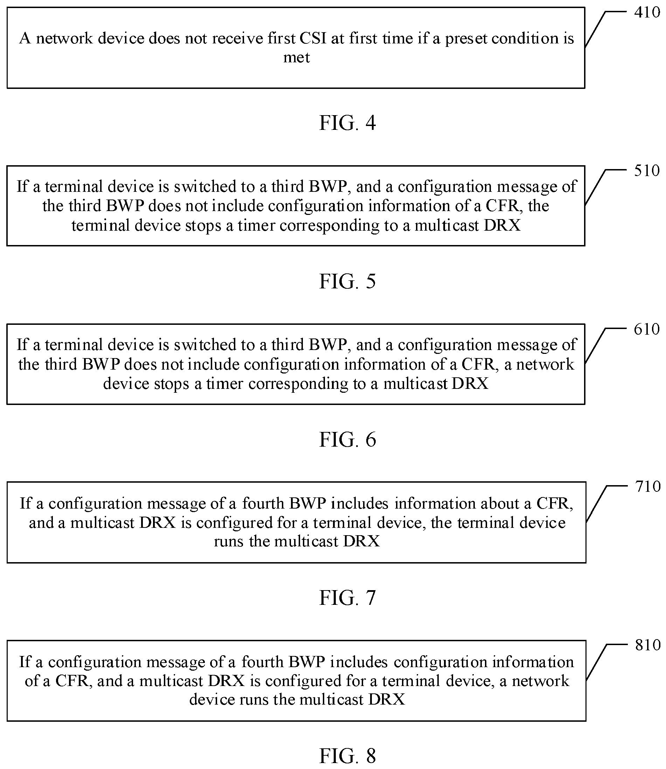

FIG. 4 is a diagram of another communication method according to an embodiment of this application. As shown in FIG. 4, the method may include step 410.

410: A network device does not receive first CSI at first time if a preset condition is met.

It should be understood that, for step 410, refer to related descriptions in step 310. For example, in the technical solution in step 410, in some cases, a terminal device does not send CSI, and correspondingly, the network device does not receive the CSI; or in some cases, a terminal device sends CSI, and correspondingly, the network device receives the CSI; or the terminal device obtains some information, for example, the first information, the second information, and the fifth information that are described above, and correspondingly, the network device sends the information; or the terminal device does not obtain some information, for example, the third information and the fourth information that are described above, and correspondingly, the network device does not send the information; or the terminal device sends some information, for example, the sixth information and the seventh information that are described above, and correspondingly, the network device receives the information. For brevity, details are not described herein again.

It should be noted that "not receive first CSI" may include/be understood as any one or more of the following: not decoding/parsing the CSI (for example, the first CSI).

It should be noted that "a network device does not receive first CSI at first time" may include/be understood as any one or more of the following: The network device does not receive the CSI (for example, the first CSI) on a PUCCH at the first time; the network device does not decode the CSI (for example, the first CSI) on a PUSCH at the first time; the network device determines not to receive the first CSI at the first time; and the network device determines that the terminal device does not to send the first CSI at the first time.

In this embodiment of this application, the network device does not receive the first CSI at the first time if the preset condition is met. This resolves a problem of how the network device receives the CSI in a scenario in which a configuration message of a BWP may include or may not include information about a multicast CFR. A feasible method is provided. When receiving the CSI, the network device not only considers a unicast DRX and/or a multicast DRX (or a multicast), but also considers whether the configuration message of the BWP includes the information about the multicast CFR, so that when receiving the CSI or decoding/parsing data/CSI, the network device can correctly determine whether the CSI exists. This helps improve decoding correctness, and helps improve communication quality (for example, improve reliability). In this way, the network device does not need to always receive the CSI, thereby saving energy of the network device. In addition, the network device can use a PUCCH resource on which the CSI is not sent, thereby improving resource utilization.

It should be noted that, in the embodiment in FIG. 3 and/or the embodiment in FIG. 4, the first CSI may be replaced with a first SRS (Sounding Reference Signal, sounding reference signal), and the CSI may be replaced with an SRS. This may be used as another embodiment or two embodiments. The another embodiment or two embodiments may be combined with the embodiment in FIG. 3 and/or the embodiment in FIG. 4, or may be used as independent embodiments.

Optionally, the first SRS may include a periodic SRS and/or a semi-persistent SRS.

For example, the terminal device does not send the first CSI and/or the first SRS at the first time if the preset condition is met.

### Problem 2:

According to the conventional technology, if a terminal device is switched to a BWP, even if a configuration message of the BWP does not include information about a multicast CFR, a timer of a multicast DRX of the terminal device continues to run, and the multicast DRX continues to be in active time. Therefore, the terminal device also sends CSI and/or an SRS. However, if the configuration message of the active BWP of the terminal device does not include the information about the multicast CFR, the terminal device cannot (or may not) receive a multicast service/data, or the terminal device does not receive a multicast service/data. It may be understood that CSI and/or SRS sending in this case is meaningless, and power consumption of the terminal device may be increased.

The following describes another communication method provided in an embodiment of this application with reference to FIG. 5.

510: If a terminal device is switched to a third BWP, the terminal device stops a timer corresponding to a multicast DRX.

A configuration message of the third BWP does not include information about a CFR.

Optionally, "switching to a third BWP" may include switching from a fifth BWP to the third BWP. For example, a configuration message of the fifth BWP includes the information about the CFR.

For example, "if a terminal device is switched to a third BWP" may include after the terminal device is switched to the third BWP.

For example, the third BWP may be understood as an active BWP.

For example, "switching to a third BWP" may include activating the third BWP.

The timer corresponding to the multicast DRX includes one or more of the following timers: a fourth timer, a fifth timer, a sixth timer, and a seventh timer.

The fourth timer is an on duration timer (for example, drx-onDurationTimerPTM) corresponding to the multicast DRX.

The fifth timer is an inactivity timer (for example, drx-InactivityTimerPTM) corresponding to the multicast DRX.

The sixth timer is a retransmission timer (for example, drx-RetransmissionTimerDL-PTM) corresponding to the multicast DRX.

The seventh timer is an RTT timer (for example, drx-HARQ-RTT-TimerDL-PTM) corresponding to the multicast DRX.

For example, an on duration timer/the on duration timer corresponding to the multicast DRX indicates duration in which the terminal device waits to receive control information (for example, DCI) after being woken up.

For example, the inactivity timer corresponding to the multicast DRX indicates a period of time after newly transmitted data or control information for scheduling new transmission.

For example, the retransmission timer corresponding to the multicast DRX indicates duration in which the terminal device receives retransmission (for example, DCI, data, and a resource) corresponding to a multicast.

Optionally, the timer corresponding to the multicast DRX includes timers corresponding to all multicast DRXes.

Optionally, the timer corresponding to the multicast DRX includes a timer corresponding to a multicast DRX associated with the third BWP.

Optionally, the timer corresponding to the multicast DRX includes timers that correspond to all multicast DRXes and that are associated with the third BWP.

In this embodiment of this application, if the terminal device is switched to the third BWP, and the configuration message of the third BWP does not include the information about the CFR, the terminal device stops the timer corresponding to the multicast DRX. This avoids unnecessary CSI reporting, thereby reducing power consumption of the terminal device.

FIG. 6 is a diagram of another communication method according to an embodiment of this application. As shown in FIG. 6, the method may include step 610.

610: If a terminal device is switched to a third BWP, a network device stops a timer corresponding to a multicast DRX.

It should be understood that, for step 610, refer to related descriptions in step 510. For example, in the technical solution in step 610, in some cases, the terminal device stops the timer corresponding to the multicast DRX, and correspondingly, the network device stops the timer corresponding to the multicast DRX. For brevity, details are not described herein again.

In this embodiment of this application, if the terminal device is switched to the third BWP, and a configuration message of the third BWP does not include configuration information of a CFR, the network device stops the timer corresponding to the multicast DRX. In this way, the network device does not need to always receive CSI, thereby saving energy of the network device. In addition, the network device can use a PUCCH resource on which the CSI is not sent, thereby improving resource utilization.

### Problem 3:

According to the conventional technology, if a multicast DRX is configured for a terminal device, a timer (for example, drx-onDurationTimerPTM) of the multicast DRX of the terminal device is started, and the multicast DRX is in active time. Therefore, the terminal device sends CSI and/or an SRS. However, if a configuration message of an active BWP of the terminal device does not include information about a multicast CFR, the terminal device cannot (or may not) receive a multicast service/data, or the terminal device does not receive a multicast service/data. It may be understood that CSI and/or SRS sending in this case is meaningless, and power consumption of the terminal device may be increased.

The following describes another communication method provided in an embodiment of this application with reference to FIG. 7.

710: If a configuration message of a fourth BWP includes information about a CFR, and a multicast DRX is configured for a terminal device, the terminal device runs the multicast DRX.

For example, the fourth BWP is an active BWP of the terminal device.

That the multicast DRX is configured for the terminal device may include: For any one or more of a fifteenth multicast service, a sixth G-RNTI, and a sixth G-CS-RNTI, the multicast DRX is configured for the terminal device, or the multicast DRX is configured for any one or more of a fifteenth multicast service, a sixth G-RNTI, and a sixth G-CS-RNTI.

Optionally, that the terminal device runs the multicast DRX may include: The terminal device starts an eighth timer, and/or the terminal device monitors a PDCCH in active time of the multicast DRX.

The eighth timer is an on duration timer (for example, drx-onDurationTimerPTM) corresponding to the multicast DRX.

Optionally, that the terminal device starts the eighth timer may include: The terminal device starts the eighth timer after drx-SlotOffsetPTM starting from a first subframe.

The first subframe is determined according to the following formula: [(SFN×10)+subframe number] modulo (drx-LongCyclePTM)=drx-StartOffsetPTM.

For example, the SFN is a system frame number. For example, subframe number is the first subframe. For example, drx-LongCyclePTM is a multicast DRX cycle. For example, drx-StartOffsetPTM is a subframe before starting of the multicast DRX. For example, drx-SlotOffsetPTM is an offset of the multicast DRX.

For example, drx-LongCyclePTM, drx-StartOffsetPTM, and drx-SlotOffsetPTM are configured by a network device for the terminal device, and are used to determine a start occasion of drx-onDurationTimerPTM.

For example, drx-LongCyclePTM indicates duration of a DRX cycle.

For example, drx-StartOffsetPTM indicates a subframe where the DRX cycle starts. For example, drx-StartOffsetPTM is used when a frame number and a subframe number of the start occasion of drx-onDurationTimerPTM are calculated. It may be understood that drx-StartOffsetPTM is used to determine a subframe, in which drx-onDurationTimerPTM is started, in a frame.

For example, drx-SlotOffsetPTM indicate a delay before starting of drx-onDurationTimerPTM, and is an offset that is in a subframe and that is used when the start occasion of drx-onDurationTimerPTM is calculated. For example, a value range of drx-SlotOffsetPTM is 0 ms to (31/32) ms, and precision is (1/32) ms. It may be understood that, after the terminal device determines, based on drx-StartOffsetPTM, the subframe, in which drx-onDurationTimerPTM is started, in the frame, the terminal device determines, based on drx-SlotOffsetPTM, specific (1/32) ms, in which the drx-onDurationTimerPTM is started, in the subframe (that is, a subframe determined based on drx-StartOffset).

Optionally, the multicast DRX is associated with any one or more of the fifteenth multicast service, the sixth G-RNTI, and the sixth G-CS-RNTI.

A cell corresponding to the fourth BWP or the fourth BWP is associated with any one or more of the multicast DRX, the fifteenth multicast service, the sixth G-RNTI, and the sixth G-CS-RNTI.

In this embodiment of this application, if the configuration message of the fourth BWP includes the information about the CFR, and the multicast DRX is configured for the terminal device, the terminal device runs the multicast DRX. This avoids unnecessary CSI reporting, thereby reducing power consumption of the terminal device.

FIG. 8 is a diagram of another communication method according to an embodiment of this application. As shown in FIG. 8, the method may include step 810.

810: If a configuration message of a fourth BWP includes configuration information of a CFR, and a multicast DRX is configured for a terminal device, a network device runs the multicast DRX.

It should be understood that, for step 810, refer to related descriptions in step 710. For example, in the technical solution in step 810, in some cases, the terminal device runs a timer corresponding to the multicast DRX, and correspondingly, the network device runs the timer corresponding to the multicast DRX. For brevity, details are not described herein again.

In this embodiment of this application, when the network device and the terminal device run on the fourth BWP, if the configuration message of the fourth BWP includes information about the CFR, and the multicast DRX is configured for the terminal device, the network device runs the multicast DRX, and runs the multicast DRX when the foregoing condition is met. In this way, the network device does not need to always receive CSI, thereby saving energy of the network device. In addition, the network device can use a PUCCH resource on which the CSI is not sent, thereby improving resource utilization.

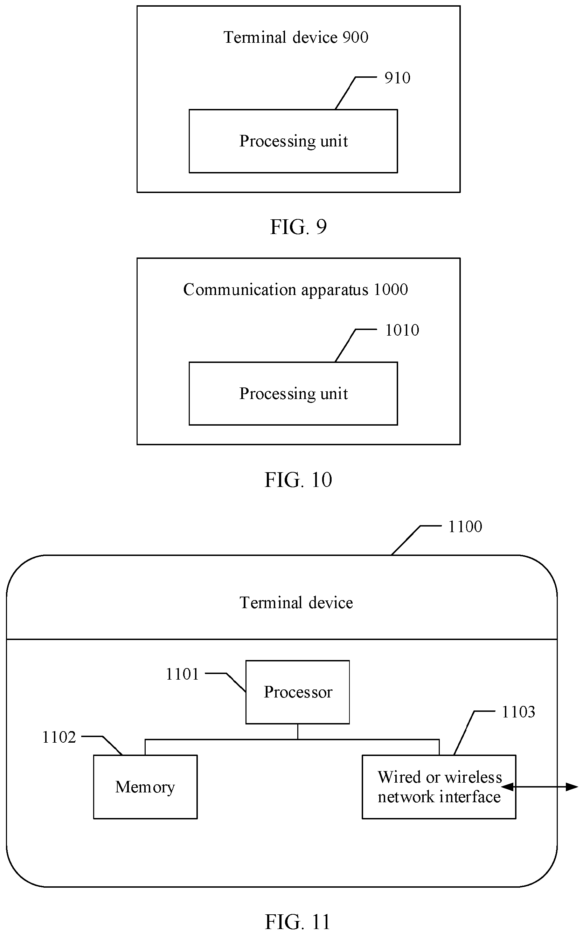

The foregoing describes the communication method provided in this application. The following describes a terminal device that implements the communication method. FIG. 9 is a diagram of an embodiment of a terminal device according to an embodiment of this application.

The terminal device 900 includes a processing unit 910, configured not to send first channel state information CSI at first time if a preset condition is met, where the preset condition includes any one or more of the following:
a first condition, where the first condition includes: The first time does not belong to active time of a first discontinuous reception DRX, and a configuration message of a first bandwidth part BWP does not include information about a common frequency resource CFR;
a second condition, where the second condition includes: The first time does not belong to the active time of the first DRX, a configuration message of a second BWP includes the information about the CFR, and the first time does not belong to active time of a second DRX set;
a third condition, where the third condition includes a condition A and a condition B; the condition A includes: The first time does not belong to the active time of the first DRX, and the configuration message of the second BWP includes the information about the CFR; and the condition B includes: The first time belongs to active time of a third DRX set, and/or no multicast DRX is configured for a first multicast service set;
a fourth condition, where the fourth condition includes: A first timer does not run at the first time, and the configuration message of the first BWP does not include the information about the CFR;
a fifth condition, where the fifth condition includes: The first timer does not run at the first time, the configuration message of the second BWP includes the information about the CFR, and a second timer set does not run at the first time; and
a sixth condition, where the sixth condition includes a condition C and a condition D; the condition C includes: The first timer does not run at the first time, and the configuration message of the second BWP includes the information about the CFR; and the condition D includes: A third timer set runs at the first time, and/or no multicast DRX is configured for a second multicast service set.

The first DRX is used to control monitoring of terminal device specific control information. The second DRX set includes at least one multicast DRX, the at least one multicast DRX includes a first multicast DRX, and the first multicast DRX is used to control monitoring of control information related to a third multicast service. The third DRX set includes at least one multicast DRX, the at least one multicast DRX includes a second multicast DRX, and the second multicast DRX is used to control monitoring of control information related to a fourth multicast service. The first multicast service set includes at least one multicast service, and the at least one multicast service includes a fifth multicast service. The second multicast service set includes at least one multicast service, and the at least one multicast service includes a sixth multicast service. In running time of the first timer, the terminal device monitors the terminal device specific control information. The second timer set includes at least one multicast timer, and the at least one multicast timer includes a first multicast timer. In running time of the first multicast timer, the terminal device monitors control information related to a seventh multicast service. The third timer set includes at least one multicast timer, and the at least one multicast timer includes a second multicast timer. In running time of the second multicast timer, the terminal device monitors control information related to an eighth multicast service. The first BWP includes an active BWP of the terminal device, and the second BWP includes an active BWP of the terminal device.

In a possible implementation, the first BWP includes all active BWPs.

In a possible implementation, the second DRX set includes DRXes corresponding to all multicasts that the terminal device joins.

In a possible implementation, the preset condition includes at least one of the first condition and the second condition, and the processing unit 910 is specifically configured not to send the first CSI at the first time for a first cell set, where the first cell set includes at least one cell, and the first cell set is associated with the first DRX.

In a possible implementation, the second DRX set includes DRXes corresponding to all multicasts associated with the first cell set or the first DRX.

In a possible implementation, the first BWP includes all active BWPs associated with the first cell set or the first DRX, and/or the second BWP includes an active BWP associated with the first cell set or the first DRX.

In a possible implementation, the preset condition includes the third condition, and the processing unit 910 is specifically configured not to send the first CSI at the first time for a second cell set, where the second cell set includes at least one cell; and the second cell set is not associated with the third DRX set, and/or the second cell set is not associated with the first multicast service set.

In a possible implementation, the second cell set is associated with the first DRX.

In a possible implementation, the third DRX set is associated with the first DRX.

In a possible implementation, the first multicast service set is associated with the first DRX.

In a possible implementation, the second BWP is associated with the first DRX.

In a possible implementation, the second timer set includes multicast timers corresponding to all the multicasts that the terminal device joins.

In a possible implementation, the preset condition includes at least one of the fourth condition and the fifth condition, and the processing unit 910 is specifically configured not to send the first CSI at the first time for the first cell set.

In a possible implementation, the second timer set includes multicast timers corresponding to all the multicasts associated with the first cell set or the first DRX.

In a possible implementation, the first BWP includes all active BWPs associated with the first cell set or the first DRX, and/or the second BWP includes an active BWP associated with the first cell set or the first DRX.

In a possible implementation, the preset condition includes at least one of the second condition and the fifth condition, and the preset condition further includes: A multicast DRX is configured for a ninth multicast service set, and the ninth multicast service set includes all multicast services that the terminal device joins.

In a possible implementation, the preset condition includes at least one of the second condition and the fifth condition, and the preset condition further includes: The multicast DRX is configured for the ninth multicast service set, and the ninth multicast service set includes all the multicasts associated with the first cell set or the first DRX.

In a possible implementation, the preset condition includes the sixth condition, and the processing unit 910 is specifically configured not to send the first CSI at the first time for a third cell set, where the third cell set includes at least one cell; and the third cell set is not associated with the third timer set, and/or the third cell set is not associated with the second multicast service set.

In a possible implementation, the third cell set is associated with the first timer or the first DRX.

In a possible implementation, the third timer set is associated with the first timer or the first DRX.

In a possible implementation, the second multicast service set is associated with the first timer or the first DRX.

In a possible implementation, the second BWP is associated with the first DRX.

In a possible implementation, the first CSI includes any one or more of the following:
semi-persistent CSI;
periodic CSI;
CSI configured on a physical uplink shared channel PUSCH;
semi-persistent CSI configured on a PUSCH;
CSI configured on a physical uplink control channel PUCCH;
periodic CSI configured on the PUCCH;
semi-persistent CSI configured on the PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; and
periodic CSI that is configured on the PUCCH and that is not the L1-RSRP.

In a possible implementation, not sending the first CSI at the first time includes any one or more of the following:
not sending CSI on the PUCCH;
not sending the periodic CSI on the PUCCH;
not sending the semi-persistent CSI on the PUCCH;
not sending the CSI on the PUSCH;
not sending the semi-persistent CSI on a PUSCH;
not sending, on the PUCCH, the CSI that is the L1-RSRP;
not sending, on the PUCCH, the CSI that is not the L1-RSRP;
not sending, on the PUCCH, the periodic CSI that is the L1-RSRP; and
not sending, on the PUCCH, the periodic CSI that is not the L1-RSRP.

In a possible implementation, the preset condition includes at least one of the fourth condition, the fifth condition, and the sixth condition, and the preset condition further includes: The terminal device obtains first information, where the first information indicates the terminal device to send CSI in running time of a unicast timer and/or in running time of a multicast timer.

In a possible implementation, the preset condition further includes any one or more of the following: The terminal device does not obtain second information, where the second information includes information related to a wakeup signal; the first time is not in duration corresponding to the first timer; or the first timer is started or restarted.

In a possible implementation, the preset condition includes at least one of the first condition, the second condition, and the third condition, and the preset condition further includes any one or more of the following: The terminal device obtains second information, where the second information includes information related to a wakeup signal; the first time is in duration corresponding to the first timer; or the first timer is not started or not restarted.

In a possible implementation, the preset condition further includes: The terminal device does not obtain third information; and/or the terminal device does not obtain fourth information, where the third information indicates to report the periodic CSI or CSI that is the L1-RSRP, and the fourth information indicates to report the periodic CSI or CSI that is not the L1-RSRP.

In a possible implementation, the preset condition further includes: The terminal device obtains fifth information, where the fifth information indicates the terminal device to send CSI based on a multicast DRX.

In another possible implementation, the processing unit 910 is configured to: if the terminal device is switched to a third BWP, stop a timer corresponding to the multicast DRX, where a configuration message of the third BWP does not include the information about the CFR, and the timer corresponding to the multicast DRX includes one or more of the following timers:
a fourth timer, a fifth timer, a sixth timer, and a seventh timer, where the fourth timer is an on duration timer corresponding to the multicast DRX;
the fifth timer is an inactivity timer corresponding to the multicast DRX;
the sixth timer is a retransmission timer corresponding to the multicast DRX; and
the seventh timer is an RTT timer corresponding to the multicast DRX.

In a possible implementation, the timer corresponding to the multicast DRX includes timers corresponding to all multicast DRXes.

In another possible implementation, the processing unit 910 is configured to: if a configuration message of a fourth BWP includes the information about the CFR, and a multicast DRX is configured for the terminal device, run the multicast DRX, where the first BWP is the active BWP of the terminal device.

In a possible implementation, that the terminal device runs the multicast DRX includes: The terminal device starts an eighth timer; and/or the terminal device monitors a PDCCH in active time of the multicast DRX, where the eighth timer is an on duration timer corresponding to the multicast DRX.

In a possible implementation, the multicast DRX is associated with a sixth G-RNTI, and/or the multicast DRX is associated with a sixth G-CS-RNTI.

It should be understood that division into the foregoing units of the terminal device is merely logical function division. In an actual implementation, all or a part of the units may be integrated into one physical entity, or may be physically separated. In addition, all the units may be implemented in a form of software invoked by using a processing element; or may be implemented in a form of hardware; or some units may be implemented in a form of software invoked by using a processing element, and some units are implemented in a form of hardware. For example, the foregoing units may be configured as one or more integrated circuits for implementing the foregoing methods, such as one or more application-specific integrated circuits (application specific integrated circuit, ASIC), one or more microprocessors (digital signal processor, DSP), or one or more field-programmable gate arrays (field-programmable gate array, FPGA). For another example, when one of the foregoing units is implemented in a form of a processing element scheduling a program, the processing element may be a general-purpose processor, for example, a central processing unit (central processing unit, CPU) or another processor that can invoke a program. For still another example, the units may be integrated and implemented in a form of a system-on-a-chip (system-on-a-chip, SOC).

For technical effect implemented by the terminal device, refer to the foregoing method embodiments. Details are not described herein again.

The following describes a communication device for implementing the communication method. FIG. 10 is a diagram of an embodiment of a communication apparatus according to an embodiment of this application.

The communication apparatus 1000 includes a processing unit 1010, configured not to receive first CSI at first time if a preset condition is met.

In another possible implementation, the processing unit 1010 is configured to: if a terminal device is switched to a third BWP, and a configuration message of the third BWP does not include configuration information of a CFR, stop a timer corresponding to a multicast DRX.

In another possible implementation, the processing unit 1010 is configured to: if a configuration message of a fourth BWP includes the configuration information of the CFR, and a multicast DRX is configured for the terminal device, run the multicast DRX.

For details about the method performed by the communication apparatus 1000, refer to the method embodiments corresponding to FIG. 4, FIG. 6, and FIG. 8. Details are not described herein again.

FIG. 11 is a diagram of another embodiment of a terminal device according to an embodiment of this application.

The terminal device provided in this embodiment may be various types of terminal electronic devices. A specific device form of the terminal device is not limited in embodiments of this application.

The terminal device 1100 may vary greatly with configuration or performance, and may include one or more processors 1101 and a memory 1102. The memory 1102 stores a program or data.

The memory 1102 may be a volatile memory or a non-volatile memory. Optionally, the processor 1101 is one or more central processing units (central processing unit, CPU), and the CPU may be a single-core CPU, or may be a multi-core CPU. The processor 1101 may communicate with the memory 1102 and execute a set of instructions in the memory 1102 on the terminal device 1100.

The terminal device 1100 further includes one or more wired or wireless network interfaces 1103, for example, an ethernet interface.

Optionally, although not shown in FIG. 11, the terminal device 1100 may further include one or more power supplies and one or more input/output interfaces. The input/output interface may be configured to connect to a display, a mouse, a keyboard, a touchscreen device, a sensor device, or the like. The input/output interface is an optional component, and may exist or may not exist. This is not limited herein.

For a procedure performed by the processor 1101 of the terminal device 1100 in this embodiment, refer to the method procedure described in the foregoing method embodiments. Details are not described herein.

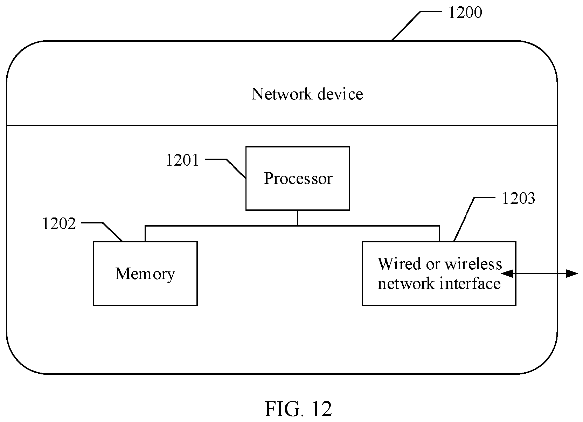

FIG. 12 is a diagram of another embodiment of a network device according to an embodiment of this application.

The network device provided in this embodiment may be various types of network devices. A specific device form of the network device is not limited in embodiments of this application.

The network device 1200 may vary greatly with configuration or performance, and may include one or more processors 1201 and a memory 1202. The memory 1202 stores a program or data.

The memory 1202 may be a volatile memory or a non-volatile memory. Optionally, the processor 1201 is one or more central processing units (central processing unit, CPU), and the CPU may be a single-core CPU, or may be a multi-core CPU. The processor 1201 may communicate with the memory 1202 and execute a set of instructions in the memory 1202 on the network device 1200.

The network device 1200 further includes one or more wired or wireless network interfaces 1203, for example, an ethernet interface.

Optionally, although not shown in FIG. 12, the network device 1200 may further include one or more power supplies and one or more input/output interfaces. The input/output interface may be configured to connect to a display, a mouse, a keyboard, a touchscreen device, a sensor device, or the like. The input/output interface is an optional component, and may exist or may not exist. This is not limited herein.

For a procedure performed by the processor 1201 of the network device 1200 in this embodiment, refer to the method procedure described in the foregoing method embodiments. Details are not described herein.

It should be understood that the conventional technology may change with evolution of the technical solutions, and the technical solutions provided in this application are not limited to the provided conventional technology.

It should be noted that different embodiments of this application or some steps (for example, any one or more steps) in different embodiments may be combined with each other to form a new embodiment. It should be noted that some steps or any one or more steps in different embodiments may include an optional step in an embodiment, may include a mandatory step in an embodiment, or may include an optional step and a mandatory step in an embodiment. This is not limited in this application.

It should be noted that, unless otherwise specified and a logical conflict occurs, terms and/or descriptions in different embodiments are consistent and may be referenced by each other.

It should be noted that a sequence of the steps in this embodiment of this application is not limited in this application.

It should be noted that a sequence of determining different conditions in this embodiment of this application is not limited in this application.

It should be noted that "after" and "when" in this application do not strictly limit a time point.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electric form, a mechanical form, or another form.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

In conclusion, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A communication method, comprising:
not sending first channel state information CSI at first time if a preset condition is met, wherein the preset condition comprises any one or more of the following:
a first condition, wherein the first condition comprises: the first time does not belong to active time of a first discontinuous reception DRX, and a configuration message of a first bandwidth part BWP does not comprise information about a common frequency resource CFR;
a second condition, wherein the second condition comprises: the first time does not belong to the active time of the first DRX, a configuration message of a second BWP comprises the information about the CFR, and the first time does not belong to active time of a second DRX set;
a third condition, wherein the third condition comprises a condition A and a condition B; the condition A comprises: the first time does not belong to the active time of the first DRX, and the configuration message of the second BWP comprises the information about the CFR; and the condition B comprises: the first time belongs to active time of a third DRX set, and/or no multicast DRX is configured for a first multicast service set;
a fourth condition, wherein the fourth condition comprises: a first timer does not run at the first time, and the configuration message of the first BWP does not comprise the information about the CFR;
a fifth condition, wherein the fifth condition comprises: the first timer does not run at the first time, the configuration message of the second BWP comprises the information about the CFR, and a second timer set does not run at the first time; and
a sixth condition, wherein the sixth condition comprises a condition C and a condition D; the condition C comprises: the first timer does not run at the first time, and the configuration message of the second BWP comprises the information about the CFR; and the condition D comprises: a third timer set runs at the first time, and/or no multicast DRX is configured for a second multicast service set, wherein
the first DRX is used to control monitoring of a terminal device specific control information;
the second DRX set comprises at least one multicast DRX, the at least one multicast DRX comprises a first multicast DRX, and the first multicast DRX is used to control monitoring of control information related to a third multicast service;
the third DRX set comprises at least one multicast DRX, the at least one multicast DRX comprises a second multicast DRX, and the second multicast DRX is used to control monitoring of control information related to a fourth multicast service;
the first multicast service set comprises at least one multicast service, and the at least one multicast service comprises a fifth multicast service; and
the second multicast service set comprises at least one multicast service, and the at least one multicast service comprises a sixth multicast service; and
in running time of the first timer, monitoring the terminal device specific control information, wherein
the second timer set comprises at least one multicast timer, and the at least one multicast timer comprises a first multicast timer; and in running time of the first multicast timer, monitoring control information related to a seventh multicast service, wherein
the third timer set comprises at least one multicast timer, and the at least one multicast timer comprises a second multicast timer; and in running time of the second multicast timer, monitoring control information related to an eighth multicast service, wherein
the first BWP comprises all active BWPs of the terminal device; and
the second BWP comprises one or more active BWPs of the terminal device.

2. The communication method according to claim 1, wherein the first time is a symbol n.

3. The communication method according to claim 1 or 2, wherein the first DRX is a unicast DRX.

4. The communication method according to any one of claims 1 to 3, wherein the first timer is an on duration timer related to a unicast DRX, or an on duration timer related to one DRX group.

5. The communication method according to any one of claims 1 to 4, wherein the at least one multicast timer is an on duration timer corresponding to a multicast, or an on duration timer related to a multicast DRX.

6. The communication method according to any one of claims 1 to 5, wherein the second DRX set comprises DRXes corresponding to all multicasts that the terminal device joins.

7. The communication method according to any one of claims 1 to 6, wherein the preset condition comprises at least one of the first condition and the second condition, and the not sending first CSI at first time comprises:
not sending the first CSI at the first time for a first cell set, wherein
the first cell set comprises at least one cell, and the first cell set is associated with the first DRX.

8. The communication method according to claim 7, wherein the second DRX set comprises DRXes corresponding to all multicasts associated with the first cell set or the first DRX.

9. The communication method according to claim 7 or 8, wherein the first BWP comprises all active BWPs associated with the first cell set or the first DRX, and/or the second BWP comprises an active BWP associated with the first cell set or the first DRX.

10. The communication method according to any one of claims 1 to 9, wherein the preset condition comprises the third condition, and the not sending first CSI at first time comprises:
not sending the first CSI at the first time for a second cell set, wherein
the second cell set comprises at least one cell; and the second cell set is not associated with the third DRX set, and/or the second cell set is not associated with the first multicast service set.

11. The communication method according to claim 10, wherein the second cell set is associated with the first DRX.

12. The communication method according to claim 10 or 11, wherein the third DRX set is associated with the first DRX.

13. The communication method according to any one of claims 10 to 12, wherein the first multicast service set is associated with the first DRX.

14. The communication method according to any one of claims 10 to 13, wherein the second BWP is associated with the first DRX.

15. The communication method according to any one of claims 1 to 14, wherein the second timer set comprises multicast timers corresponding to all the multicasts that the terminal device joins.

16. The communication method according to any one of claims 1 to 15, wherein the preset condition comprises at least one of the fourth condition and the fifth condition, and the not sending first CSI at first time comprises:
not sending the first CSI at the first time for the first cell set.

17. The communication method according to claim 16, wherein the second timer set comprises multicast timers corresponding to all the multicasts associated with the first cell set or the first DRX.

18. The communication method according to claim 16 or 17, wherein the first BWP comprises all the active BWPs associated with the first cell set or the first DRX, and/or the second BWP comprises the active BWP associated with the first cell set or the first DRX.

19. The communication method according to any one of claims 1 to 18, wherein the preset condition comprises at least one of the second condition and the fifth condition, and the preset condition further comprises:
a multicast DRX is configured for a ninth multicast service set, and the ninth multicast service set comprises all multicast services that the terminal device joins.

20. The communication method according to any one of claims 1 to 19, wherein the preset condition comprises at least one of the second condition and the fifth condition, and the preset condition further comprises:
the multicast DRX is configured for the ninth multicast service set, and the ninth multicast service set comprises all the multicasts associated with the first cell set or the first DRX.

21. The communication method according to any one of claims 1 to 20, wherein the preset condition comprises the sixth condition, and the not sending first CSI at first time comprises:
not sending the first CSI at the first time for a third cell set, wherein
the third cell set comprises at least one cell; and the third cell set is not associated with the third timer set, and/or the third cell set is not associated with the second multicast service set.

22. The communication method according to claim 21, wherein the third cell set is associated with the first timer or the first DRX.

23. The communication method according to claim 21 or 22, wherein the third timer set is associated with the first timer or the first DRX.

24. The communication method according to any one of claims 21 to 23, wherein the second multicast service set is associated with the first timer or the first DRX.

25. The communication method according to any one of claims 21 to 24, wherein the second BWP is associated with the first DRX.

26. The communication method according to any one of claims 1 to 25, wherein the first CSI comprises any one or more of the following:
semi-persistent CSI;
periodic CSI;
CSI configured on a physical uplink shared channel PUSCH;
semi-persistent CSI configured on the PUSCH;
CSI configured on a physical uplink control channel PUCCH;
periodic CSI configured on the PUCCH;
semi-persistent CSI configured on the PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; and
periodic CSI that is configured on the PUCCH and that is not the L1-RSRP.

27. The communication method according to any one of claims 1 to 26, wherein the not sending first CSI at first time comprises any one or more of the following:
not sending CSI on the PUCCH;
not sending the periodic CSI on the PUCCH;
not sending the semi-persistent CSI on the PUCCH;
not sending the CSI on the PUSCH;
not sending the semi-persistent CSI on the PUSCH;
not sending, on the PUCCH, the CSI that is the L1-RSRP;
not sending, on the PUCCH, the CSI that is not the L1-RSRP;
not sending, on the PUCCH, the periodic CSI that is the L1-RSRP; and
not sending, on the PUCCH, the periodic CSI that is not the L1-RSRP.

28. The communication method according to any one of claims 1 to 27, wherein the preset condition comprises at least one of the fourth condition, the fifth condition, and the sixth condition, and the method and/or the preset condition further comprise/comprises:
obtaining first information, wherein the first information indicates the terminal device to send CSI in running time of a unicast timer and/or in running time of a multicast timer.

29. The communication method according to any one of claims 1 to 28, wherein the preset condition further comprises any one or more of the following:
second information is not obtained, wherein the second information comprises information related to a wakeup signal;
the first time is not in duration corresponding to the first timer; or
the first timer is started or restarted.

30. The communication method according to any one of claims 1 to 28, wherein the preset condition comprises at least one of the first condition, the second condition, and the third condition, and the preset condition further comprises any one or more of the following:
second information is obtained, wherein the second information comprises information related to a wakeup signal;
the first time is in duration corresponding to the first timer; or
the first timer is not started or not restarted.

31. The communication method according to claim 30, wherein the preset condition further comprises:
third information is not obtained; and/or
fourth information is not obtained, wherein
the third information indicates to report the periodic CSI or CSI that is the L1-RSRP, and the fourth information indicates to report the periodic CSI or CSI that is not the L1-RSRP.

32. The communication method according to any one of claims 1 to 31, wherein the method and/or the preset condition further comprise/comprises:
obtaining fifth information, wherein the fifth information indicates the terminal device to send CSI based on a multicast DRX.

33. A communication method, comprising:
not receiving first CSI at first time if a preset condition is met, wherein the preset condition comprises any one or more of the following:
a first condition, wherein the first condition comprises: the first time does not belong to active time of a first discontinuous reception DRX, and a configuration message of a first bandwidth part BWP does not comprise information about a common frequency resource CFR;
a second condition, wherein the second condition comprises: the first time does not belong to the active time of the first DRX, a configuration message of a second BWP comprises the information about the CFR, and the first time does not belong to active time of a second DRX set;
a third condition, wherein the third condition comprises a condition A and a condition B; the condition A comprises: the first time does not belong to the active time of the first DRX, and the configuration message of the second BWP comprises the information about the CFR; and the condition B comprises: the first time belongs to active time of a third DRX set, and/or no multicast DRX is configured for a first multicast service set;
a fourth condition, wherein the fourth condition comprises: a first timer does not run at the first time, and the configuration message of the first BWP does not comprise the information about the CFR;
a fifth condition, wherein the fifth condition comprises: the first timer does not run at the first time, the configuration message of the second BWP comprises the information about the CFR, and a second timer set does not run at the first time; and
a sixth condition, wherein the sixth condition comprises a condition C and a condition D; the condition C comprises: the first timer does not run at the first time, and the configuration message of the second BWP comprises the information about the CFR; and the condition D comprises: a third timer set runs at the first time, and/or no multicast DRX is configured for a second multicast service set, wherein
the first DRX is used to control monitoring of a terminal device specific control information;
the second DRX set comprises at least one multicast DRX, the at least one multicast DRX comprises a first multicast DRX, and the first multicast DRX is used to control monitoring of control information related to a third multicast service;
the third DRX set comprises at least one multicast DRX, the at least one multicast DRX comprises a second multicast DRX, and the second multicast DRX is used to control monitoring of control information related to a fourth multicast service;
the first multicast service set comprises at least one multicast service, and the at least one multicast service comprises a fifth multicast service;
the second multicast service set comprises at least one multicast service, and the at least one multicast service comprises a sixth multicast service;
running time of the first timer is used by the terminal device to monitor the specific control information;
the second timer set comprises at least one multicast timer, the at least one multicast timer comprises a first multicast timer, and running time of the first multicast timer is used by the terminal device to monitor control information related to a seventh multicast service;
the third timer set comprises at least one multicast timer, the at least one multicast timer comprises a second multicast timer, and running time of the second multicast timer is used by the terminal device to monitor control information related to an eighth multicast service;
the first BWP comprises all active BWPs of the terminal device; and
the second BWP comprises one or more active BWPs of the terminal device.

34. The communication method according to claim 33, wherein the first time is a symbol n.

35. The communication method according to claim 33 or 34, wherein the first DRX is a unicast DRX.

36. The communication method according to any one of claims 33 to 35, wherein the first timer is an on duration timer related to a unicast DRX, or an on duration timer related to one DRX group.

37. The communication method according to any one of claims 33 to 36, wherein the at least one multicast timer is an on duration timer corresponding to a multicast, or an on duration timer related to a multicast DRX.

38. The communication method according to any one of claims 33 to 37, wherein the second DRX set comprises DRXes corresponding to all multicasts that the terminal device joins.

39. The communication method according to any one of claims 33 to 38, wherein the preset condition comprises at least one of the first condition and the second condition, and the not receiving first CSI at first time comprises:
not receiving the first CSI at the first time for a first cell set, wherein
the first cell set comprises at least one cell, and the first cell set is associated with the first DRX.

40. The communication method according to claim 39, wherein the second DRX set comprises DRXes corresponding to all multicasts associated with the first cell set or the first DRX.

41. The communication method according to any one of claims 33 to 40, wherein the preset condition comprises at least one of the fourth condition and the fifth condition, and the not receiving first CSI at first time comprises:
not receiving the first CSI at the first time for the first cell set.

42. The communication method according to claim 41, wherein the second timer set comprises multicast timers corresponding to all the multicasts associated with the first cell set or the first DRX.

43. The communication method according to any one of claims 33 to 42, wherein the preset condition comprises at least one of the second condition and the fifth condition, and the preset condition further comprises:
a multicast DRX is configured for a ninth multicast service set, and the ninth multicast service set comprises all multicast services that the terminal device joins.

44. The communication method according to any one of claims 33 to 43, wherein the preset condition comprises at least one of the second condition and the fifth condition, and the preset condition further comprises:
the multicast DRX is configured for the ninth multicast service set, and the ninth multicast service set comprises all the multicasts associated with the first cell set or the first DRX.

45. The communication method according to any one of claims 33 to 44, wherein the first CSI comprises any one or more of the following:
semi-persistent CSI;
periodic CSI;
CSI configured on a physical uplink shared channel PUSCH;
semi-persistent CSI configured on the PUSCH;
CSI configured on a physical uplink control channel PUCCH;
periodic CSI configured on the PUCCH;
semi-persistent CSI configured on the PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; and
periodic CSI that is configured on the PUCCH and that is not the L1-RSRP.

46. The communication method according to any one of claims 33 to 45, wherein the not receiving first CSI at first time comprises any one or more of the following:
not receiving CSI on the PUCCH;
not receiving the periodic CSI on the PUCCH;
not receiving the semi-persistent CSI on the PUCCH;
not receiving the CSI on the PUSCH;
not receiving the semi-persistent CSI on the PUSCH;
not receiving, on the PUCCH, the CSI that is the L1-RSRP;
not receiving, on the PUCCH, the CSI that is not the L1-RSRP;
not receiving, on the PUCCH, the periodic CSI that is the L1-RSRP; and
not receiving, on the PUCCH, the periodic CSI that is not the L1-RSRP.

47. The communication method according to any one of claims 33 to 46, wherein the preset condition comprises at least one of the fourth condition, the fifth condition, and the sixth condition, and the method and/or the preset condition further comprise/comprises:
sending first information, wherein the first information indicates the terminal device to send CSI in running time of a unicast timer and/or in running time of a multicast timer.

48. The communication method according to any one of claims 33 to 47, wherein the preset condition further comprises any one or more of the following:
second information is not sent, wherein the second information comprises information related to a wakeup signal;
the first time is not in duration corresponding to the first timer; or
the first timer is started or restarted.

49. The communication method according to any one of claims 33 to 47, wherein the preset condition comprises at least one of the first condition, the second condition, and the third condition, and the preset condition further comprises any one or more of the following:
second information is sent, wherein the second information comprises information related to a wakeup signal;
the first time is in duration corresponding to the first timer; or
the first timer is not started or not restarted.

50. The communication method according to claim 49, wherein the preset condition further comprises:
third information is not sent; and/or
fourth information is not sent, wherein
the third information indicates to report the periodic CSI or CSI that is the L1-RSRP, and the fourth information indicates to report the periodic CSI or CSI that is not the L1-RSRP.

51. The communication method according to any one of claims 33 to 50, wherein the method and/or the preset condition further comprise/comprises:
sending fifth information, wherein the fifth information indicates the terminal device to send CSI based on a multicast DRX.

52. A communication method, comprising:
if a terminal device is switched to a third BWP, stopping a timer corresponding to a multicast DRX, wherein
a configuration message of the third BWP does not comprise information about a CFR, and the timer corresponding to the multicast DRX comprises one or more of the following timers: a fourth timer, a fifth timer, a sixth timer, and a seventh timer;
the fourth timer is an on duration timer corresponding to the multicast DRX;
the fifth timer is an inactivity timer corresponding to the multicast DRX;
the sixth timer is a retransmission timer corresponding to the multicast DRX; and
the seventh timer is an RTT timer corresponding to the multicast DRX.

53. The communication method according to claim 52, wherein the timer corresponding to the multicast DRX comprises timers corresponding to all multicast DRXes.

54. A communication method, comprising:
if a configuration message of a fourth BWP comprises information about a common frequency resource CFR, and a multicast DRX is configured for a terminal device, running the multicast DRX, wherein the fourth BWP is an active BWP of the terminal device.

55. The communication method according to claim 54, wherein the running the multicast DRX comprises:
starting an eighth timer; and/or
monitoring a PDCCH in active time of the multicast DRX, wherein
the eighth timer is an on duration timer corresponding to the multicast DRX.

56. The communication method according to claim 55, wherein the starting an eighth timer comprises:
starting the eighth timer after drx-SlotOffsetPTM starting from a first subframe, wherein
the first subframe is determined according to the following formula: [(SFN×10)+subframe number] modulo (drx-LongCyclePTM)=drx-StartOffsetPTM, wherein
SFN is a system frame number, subframe number is the first subframe, drx-LongCyclePTM is a multicast DRX cycle, drx-StartOffsetPTM is a subframe before the multicast DRX is started, and drx-SlotOffsetPTM is an offset of the multicast DRX.

57. The communication method according to any one of claims 54 to 56, wherein
the CFR is used to receive a multicast service.

58. A communication method, comprising:
if a configuration message of a fourth BWP comprises configuration information of a CFR, and a multicast DRX is configured for a terminal device, running, by a network device, the multicast DRX, wherein
the running, by a network device, the multicast DRX comprises:
starting, by the network device, an eighth timer; and/or
monitoring, by the network device, a PDCCH in active time of the multicast DRX, wherein
the eighth timer is an on duration timer corresponding to the multicast DRX.

59. The communication method according to claim 58, wherein the starting, by the network device, an eighth timer comprises:
starting, by the network device, the eighth timer after drx-SlotOffsetPTM starting from a first subframe, wherein
the first subframe is determined according to the following formula: [(SFN×10)+subframe number] modulo (drx-LongCyclePTM)=drx-StartOffsetPTM, wherein
SFN is a system frame number, subframe number is the first subframe, drx-LongCyclePTM is a multicast DRX cycle, drx-StartOffsetPTM is a subframe before the multicast DRX is started, and drx-SlotOffsetPTM is an offset of the multicast DRX.

60. The communication method according to claim 58 or 59, wherein
the CFR is used by the terminal device to receive a multicast service.

61. A communication method, comprising:
not sending a first SRS at first time if a preset condition is met, wherein the preset condition comprises any one or more of the following:
a first condition, wherein the first condition comprises: the first time does not belong to active time of a first discontinuous reception DRX, and a configuration message of a first bandwidth part BWP does not comprise information about a common frequency resource CFR;
a second condition, wherein the second condition comprises: the first time does not belong to the active time of the first DRX, a configuration message of a second BWP comprises the information about the CFR, and the first time does not belong to active time of a second DRX set;
a third condition, wherein the third condition comprises a condition A and a condition B; the condition A comprises: the first time does not belong to the active time of the first DRX, and the configuration message of the second BWP comprises the information about the CFR; and the condition B comprises: the first time belongs to active time of a third DRX set, and/or no multicast DRX is configured for a first multicast service set;
a fourth condition, wherein the fourth condition comprises: a first timer does not run at the first time, and the configuration message of the first BWP does not comprise the information about the CFR;
a fifth condition, wherein the fifth condition comprises: the first timer does not run at the first time, the configuration message of the second BWP comprises the information about the CFR, and a second timer set does not run at the first time; and
a sixth condition, wherein the sixth condition comprises a condition C and a condition D; the condition C comprises: the first timer does not run at the first time, and the configuration message of the second BWP comprises the information about the CFR; and the condition D comprises: a third timer set runs at the first time, and/or no multicast DRX is configured for a second multicast service set, wherein
the first DRX is used to control monitoring of a terminal device specific control information;
the second DRX set comprises at least one multicast DRX, the at least one multicast DRX comprises a first multicast DRX, and the first multicast DRX is used to control monitoring of control information related to a third multicast service;
the third DRX set comprises at least one multicast DRX, the at least one multicast DRX comprises a second multicast DRX, and the second multicast DRX is used to control monitoring of control information related to a fourth multicast service;
the first multicast service set comprises at least one multicast service, and the at least one multicast service comprises a fifth multicast service; and
the second multicast service set comprises at least one multicast service, and the at least one multicast service comprises a sixth multicast service; and
in running time of the first timer, monitoring, by the terminal device, the specific control information, wherein
the second timer set comprises at least one multicast timer, and the at least one multicast timer comprises a first multicast timer; and in running time of the first multicast timer, monitoring, by the terminal device, control information related to a seventh multicast service; and
the third timer set comprises at least one multicast timer, and the at least one multicast timer comprises a second multicast timer; and in running time of the second multicast timer, monitoring, by the terminal device, control information related to an eighth multicast service, wherein
the first BWP comprises all active BWPs of the terminal device; and
the second BWP comprises one or more active BWPs of the terminal device.

62. The communication method according to claim 61, wherein the first SRS comprises:
a periodic SRS and/or a semi-persistent SRS.

63. A communication method, comprising:
not receiving a first SRS at first time if a preset condition is met, wherein the preset condition comprises any one or more of the following:
a first condition, wherein the first condition comprises: the first time does not belong to active time of a first discontinuous reception DRX, and a configuration message of a first bandwidth part BWP does not comprise information about a common frequency resource CFR;
a second condition, wherein the second condition comprises: the first time does not belong to the active time of the first DRX, a configuration message of a second BWP comprises the information about the CFR, and the first time does not belong to active time of a second DRX set;
a third condition, wherein the third condition comprises a condition A and a condition B; the condition A comprises: the first time does not belong to the active time of the first DRX, and the configuration message of the second BWP comprises the information about the CFR; and the condition B comprises: the first time belongs to active time of a third DRX set, and/or no multicast DRX is configured for a first multicast service set;
a fourth condition, wherein the fourth condition comprises: a first timer does not run at the first time, and the configuration message of the first BWP does not comprise the information about the CFR;
a fifth condition, wherein the fifth condition comprises: the first timer does not run at the first time, the configuration message of the second BWP comprises the information about the CFR, and a second timer set does not run at the first time; and
a sixth condition, wherein the sixth condition comprises a condition C and a condition D; the condition C comprises: the first timer does not run at the first time, and the configuration message of the second BWP comprises the information about the CFR; and the condition D comprises: a third timer set runs at the first time, and/or no multicast DRX is configured for a second multicast service set, wherein
the first DRX is used to control a terminal device to monitor specific control information;
the second DRX set comprises at least one multicast DRX, the at least one multicast DRX comprises a first multicast DRX, and the first multicast DRX is used to control monitoring of control information related to a third multicast service;
the third DRX set comprises at least one multicast DRX, the at least one multicast DRX comprises a second multicast DRX, and the second multicast DRX is used to control monitoring of control information related to a fourth multicast service;
the first multicast service set comprises at least one multicast service, and the at least one multicast service comprises a fifth multicast service;
the second multicast service set comprises at least one multicast service, and the at least one multicast service comprises a sixth multicast service;
running time of the first timer is used by the terminal device to monitor the specific control information;
the second timer set comprises at least one multicast timer, the at least one multicast timer comprises a first multicast timer, and running time of the first multicast timer is used by the terminal device to monitor control information related to a seventh multicast service;
the third timer set comprises at least one multicast timer, the at least one multicast timer comprises a second multicast timer, and running time of the second multicast timer is used by the terminal device to monitor control information related to an eighth multicast service;
the first BWP comprises all active BWPs of the terminal device; and
the second BWP comprises one or more active BWPs of the terminal device.

64. The communication method according to claim 63, wherein the first SRS comprises:
a periodic SRS and/or a semi-persistent SRS.

65. A communication apparatus, comprising a processing unit, wherein
the processing unit is configured to determine not to send first channel state information CSI at first time if a preset condition is met, wherein the preset condition comprises any one or more of the following:
a first condition, wherein the first condition comprises: the first time does not belong to active time of a first discontinuous reception DRX, and a configuration message of a first bandwidth part BWP does not comprise information about a common frequency resource CFR;
a second condition, wherein the second condition comprises: the first time does not belong to the active time of the first DRX, a configuration message of a second BWP comprises the information about the CFR, and the first time does not belong to active time of a second DRX set;
a third condition, wherein the third condition comprises a condition A and a condition B; the condition A comprises: the first time does not belong to the active time of the first DRX, and the configuration message of the second BWP comprises the information about the CFR; and the condition B comprises: the first time belongs to active time of a third DRX set, and/or no multicast DRX is configured for a first multicast service set;
a fourth condition, wherein the fourth condition comprises: a first timer does not run at the first time, and the configuration message of the first BWP does not comprise the information about the CFR;
a fifth condition, wherein the fifth condition comprises: the first timer does not run at the first time, the configuration message of the second BWP comprises the information about the CFR, and a second timer set does not run at the first time; and
a sixth condition, wherein the sixth condition comprises a condition C and a condition D; the condition C comprises: the first timer does not run at the first time, and the configuration message of the second BWP comprises the information about the CFR; and the condition D comprises: a third timer set runs at the first time, and/or no multicast DRX is configured for a second multicast service set, wherein
the first DRX is used to control the communication apparatus to monitor specific control information;
the second DRX set comprises at least one multicast DRX, the at least one multicast DRX comprises a first multicast DRX, and the first multicast DRX is used to control monitoring of control information related to a third multicast service;
the third DRX set comprises at least one multicast DRX, the at least one multicast DRX comprises a second multicast DRX, and the second multicast DRX is used to control monitoring of control information related to a fourth multicast service;
the first multicast service set comprises at least one multicast service, and the at least one multicast service comprises a fifth multicast service; and
the second multicast service set comprises at least one multicast service, and the at least one multicast service comprises a sixth multicast service;
in running time of the first timer, the processing unit is further configured to monitor the terminal device specific control information, wherein
the second timer set comprises at least one multicast timer, and the at least one multicast timer comprises a first multicast timer; and in running time of the first multicast timer, the processing unit is further configured to monitor control information related to a seventh multicast service, wherein
the third timer set comprises at least one multicast timer, and the at least one multicast timer comprises a second multicast timer; and in running time of the second multicast timer, the processing unit is further configured to monitor control information related to an eighth multicast service, wherein
the first BWP comprises all active BWPs of the terminal device; and
the second BWP comprises one or more active BWPs of the terminal device.

66. The communication apparatus according to claim 65, wherein the first time is a symbol n.

67. The communication apparatus according to claim 65 or 66, wherein the first DRX is a unicast DRX.

68. The communication apparatus according to any one of claims 65 to 67, wherein the first timer is an on duration timer related to a unicast DRX, or an on duration timer related to one DRX group.

69. The communication apparatus according to any one of claims 65 to 68, wherein the at least one multicast timer is an on duration timer corresponding to a multicast, or an on duration timer related to a multicast DRX.

70. The communication apparatus according to any one of claims 65 to 69, wherein the second DRX set comprises DRXes corresponding to all multicasts that the terminal device joins.

71. The communication apparatus according to any one of claims 65 to 70, wherein the preset condition comprises at least one of the first condition and the second condition; and
the processing unit is further configured to determine not to send the first CSI at the first time for a first cell set, wherein
the first cell set comprises at least one cell, and the first cell set is associated with the first DRX.

72. The communication apparatus according to claim 71, wherein the second DRX set comprises DRXes corresponding to all multicasts associated with the first cell set or the first DRX.

73. The communication apparatus according to any one of claims 65 to 72, wherein the preset condition comprises at least one of the fourth condition and the fifth condition; and
the processing unit is configured to determine not to send the first CSI at the first time for the first cell set.

74. The communication apparatus according to claim 73, wherein the second timer set comprises multicast timers corresponding to all the multicasts associated with the first cell set or the first DRX.

75. The communication apparatus according to any one of claims 65 to 74, wherein the preset condition comprises at least one of the second condition and the fifth condition, and the preset condition further comprises:
a multicast DRX is configured for a ninth multicast service set, and the ninth multicast service set comprises all multicast services that the communication apparatus joins.

76. The communication apparatus according to any one of claims 65 to 75, wherein the preset condition comprises at least one of the second condition and the fifth condition, and the preset condition further comprises:
the multicast DRX is configured for the ninth multicast service set, and the ninth multicast service set comprises all the multicasts associated with the first cell set or the first DRX.

77. The communication apparatus according to any one of claims 65 to 76, wherein the first CSI comprises any one or more of the following:
semi-persistent CSI;
periodic CSI;
CSI configured on a physical uplink shared channel PUSCH;
semi-persistent CSI configured on the PUSCH;
CSI configured on a physical uplink control channel PUCCH;
periodic CSI configured on the PUCCH;
semi-persistent CSI configured on the PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; and
periodic CSI that is configured on the PUCCH and that is not the L1-RSRP.

78. The communication apparatus according to any one of claims 65 to 77, wherein the processing unit is further configured to determine any one or more of the following:
not to send CSI on the PUCCH;
not to send the periodic CSI on the PUCCH;
not to send the semi-persistent CSI on the PUCCH;
not to send the CSI on the PUSCH;
not to send the semi-persistent CSI on the PUSCH;
not to send, on the PUCCH, the CSI that is the L1-RSRP;
not to send, on the PUCCH, the CSI that is not the L1-RSRP;
not to send, on the PUCCH, the periodic CSI that is the L1-RSRP; and
not to send, on the PUCCH, the periodic CSI that is not the L1-RSRP.

79. The communication apparatus according to any one of claims 65 to 78, wherein the preset condition comprises at least one of the fourth condition, the fifth condition, and the sixth condition, and the preset condition further comprises:
first information is obtained, wherein the first information indicates the communication apparatus to send CSI in running time of a unicast timer and/or in running time of a multicast timer.

80. The communication apparatus according to any one of claims 65 to 79, wherein the preset condition further comprises any one or more of the following:
second information is not obtained, wherein the second information comprises information related to a wakeup signal;
the first time is not in duration corresponding to the first timer; or
the first timer is started or restarted.

81. The communication apparatus according to any one of claims 65 to 80, wherein the preset condition comprises at least one of the first condition, the second condition, and the third condition, and the preset condition further comprises any one or more of the following:
second information is obtained, wherein the second information comprises information related to a wakeup signal;
the first time is in duration corresponding to the first timer; or
the first timer is not started or not restarted.

82. The communication apparatus according to claim 81, wherein the preset condition further comprises:
third information is not obtained; and/or
fourth information is not obtained, wherein
the third information indicates to report the periodic CSI or CSI that is the L1-RSRP, and the fourth information indicates to report the periodic CSI or CSI that is not the L1-RSRP.

83. The communication apparatus according to any one of claims 65 to 82, wherein the preset condition further comprises:
fifth information is obtained, wherein the fifth information indicates the communication apparatus to send CSI based on a multicast DRX.

84. A communication apparatus, comprising a processing unit, wherein
the processing unit is configured to determine not to receive first CSI at first time if a preset condition is met, wherein the preset condition comprises any one or more of the following:
a first condition, wherein the first condition comprises: the first time does not belong to active time of a first discontinuous reception DRX, and a configuration message of a first bandwidth part BWP does not comprise information about a common frequency resource CFR;
a second condition, wherein the second condition comprises: the first time does not belong to the active time of the first DRX, a configuration message of a second BWP comprises the information about the CFR, and the first time does not belong to active time of a second DRX set;
a third condition, wherein the third condition comprises a condition A and a condition B; the condition A comprises: the first time does not belong to the active time of the first DRX, and the configuration message of the second BWP comprises the information about the CFR; and the condition B comprises: the first time belongs to active time of a third DRX set, and/or no multicast DRX is configured for a first multicast service set;
a fourth condition, wherein the fourth condition comprises: a first timer does not run at the first time, and the configuration message of the first BWP does not comprise the information about the CFR;
a fifth condition, wherein the fifth condition comprises: the first timer does not run at the first time, the configuration message of the second BWP comprises the information about the CFR, and a second timer set does not run at the first time; and
a sixth condition, wherein the sixth condition comprises a condition C and a condition D; the condition C comprises: the first timer does not run at the first time, and the configuration message of the second BWP comprises the information about the CFR; and the condition D comprises: a third timer set runs at the first time, and/or no multicast DRX is configured for a second multicast service set, wherein
the first DRX is used to control monitoring of a terminal device specific control information;
the second DRX set comprises at least one multicast DRX, the at least one multicast DRX comprises a first multicast DRX, and the first multicast DRX is used to control monitoring of control information related to a third multicast service;
the third DRX set comprises at least one multicast DRX, the at least one multicast DRX comprises a second multicast DRX, and the second multicast DRX is used to control monitoring of control information related to a fourth multicast service;
the first multicast service set comprises at least one multicast service, and the at least one multicast service comprises a fifth multicast service; and
the second multicast service set comprises at least one multicast service, and the at least one multicast service comprises a sixth multicast service;
running time of the first timer is used by the terminal device to monitor the specific control information;
the second timer set comprises at least one multicast timer, the at least one multicast timer comprises a first multicast timer, and running time of the first multicast timer is used by the terminal device to monitor control information related to a seventh multicast service;
the third timer set comprises at least one multicast timer, the at least one multicast timer comprises a second multicast timer, and running time of the second multicast timer is used by the terminal device to monitor control information related to an eighth multicast service;
the first BWP comprises all active BWPs of the terminal device; and
the second BWP comprises one or more active BWPs of the terminal device.

85. The communication apparatus according to claim 84, wherein the first time is a symbol n.

86. The communication apparatus according to claim 84 or 85, wherein the first DRX is a unicast DRX.

87. The communication apparatus according to any one of claims 84 to 86, wherein the first timer is an on duration timer related to a unicast DRX, or an on duration timer related to one DRX group.

88. The communication apparatus according to any one of claims 84 to 87, wherein the at least one multicast timer is an on duration timer corresponding to a multicast, or an on duration timer related to a multicast DRX.

89. The communication apparatus according to claim 84 or 87, wherein the second DRX set comprises DRXes corresponding to all multicasts that the terminal device joins.

90. The communication apparatus according to any one of claims 84 to 89, wherein the preset condition comprises at least one of the first condition and the second condition; and
the processing unit is further configured to determine not to receive the first CSI at the first time for a first cell set, wherein
the first cell set comprises at least one cell, and the first cell set is associated with the first DRX.

91. The communication apparatus according to claim 90, wherein the second DRX set comprises DRXes corresponding to all multicasts associated with the first cell set or the first DRX.

92. The communication apparatus according to any one of claims 84 to 91, wherein the preset condition comprises at least one of the fourth condition and the fifth condition; and
the processing unit is further configured to determine not to receive the first CSI at the first time for the first cell set.

93. The communication apparatus according to claim 92, wherein the second timer set comprises multicast timers corresponding to all the multicasts associated with the first cell set or the first DRX.

94. The communication apparatus according to any one of claims 84 to 93, wherein the preset condition comprises at least one of the second condition and the fifth condition, and the preset condition further comprises:
a multicast DRX is configured for a ninth multicast service set, and the ninth multicast service set comprises all multicast services that the terminal device joins.

95. The communication apparatus according to any one of claims 84 to 94, wherein the preset condition comprises at least one of the second condition and the fifth condition, and the preset condition further comprises:
the multicast DRX is configured for the ninth multicast service set, and the ninth multicast service set comprises all the multicasts associated with the first cell set or the first DRX.

96. The communication apparatus according to any one of claims 84 to 95, wherein the first CSI comprises any one or more of the following:
semi-persistent CSI;
periodic CSI;
CSI configured on a physical uplink shared channel PUSCH;
semi-persistent CSI configured on the PUSCH;
CSI configured on a physical uplink control channel PUCCH;
periodic CSI configured on the PUCCH;
semi-persistent CSI configured on the PUCCH;
CSI that is layer 1 reference signal received power L1-RSRP;
CSI that is not the L1-RSRP;
periodic CSI that is the L1-RSRP;
periodic CSI that is not the L1-RSRP;
CSI that is configured on the PUCCH and that is the L1-RSRP;
CSI that is configured on the PUCCH and that is not the L1-RSRP;
periodic CSI that is configured on the PUCCH and that is the L1-RSRP; and
periodic CSI that is configured on the PUCCH and that is not the L1-RSRP.

97. The communication apparatus according to any one of claims 84 to 96, wherein the processing unit is further configured to determine any one or more of the following:
not to receive CSI on the PUCCH;
not to receive the periodic CSI on the PUCCH;
not to receive the semi-persistent CSI on the PUCCH;
not to receive the CSI on the PUSCH;
not to receive the semi-persistent CSI on the PUSCH;
not to receive, on the PUCCH, the CSI that is the L1-RSRP;
not to receive, on the PUCCH, the CSI that is not the L1-RSRP;
not to receive, on the PUCCH, the periodic CSI that is the L1-RSRP; and
not to receive, on the PUCCH, the periodic CSI that is not the L1-RSRP.

98. The communication apparatus according to any one of claims 84 to 97, wherein the preset condition comprises at least one of the fourth condition, the fifth condition, and the sixth condition, and the preset condition further comprises:
first information is sent, wherein the first information indicates the terminal device to send CSI in running time of a unicast timer and/or in running time of a multicast timer.

99. The communication apparatus according to any one of claims 84 to 98, wherein the preset condition further comprises any one or more of the following:
second information is not sent, wherein the second information comprises information related to a wakeup signal;
the first time is not in duration corresponding to the first timer; or
the first timer is started or restarted.

100. The communication apparatus according to any one of claims 84 to 98, wherein the preset condition comprises at least one of the first condition, the second condition, and the third condition, and the preset condition further comprises any one or more of the following:
second information is sent, wherein the second information comprises information related to a wakeup signal;
the first time is in duration corresponding to the first timer; or
the first timer is not started or not restarted.

101. The communication apparatus according to claim 100, wherein the preset condition further comprises:
third information is not sent; and/or
fourth information is not sent, wherein
the third information indicates to report the periodic CSI or CSI that is the L1-RSRP, and the fourth information indicates to report the periodic CSI or CSI that is not the L1-RSRP.

102. The communication apparatus according to any one of claims 84 to 101, wherein the preset condition further comprises:
fifth information is sent, wherein the fifth information indicates the terminal device to send CSI based on a multicast DRX.

103. A communication apparatus, comprising a processing unit, wherein
if a configuration message of a fourth BWP comprises information about a common frequency resource CFR, and a multicast DRX is configured for the communication apparatus,
the processing unit is configured to run the multicast DRX, wherein the fourth BWP is an active BWP of the communication apparatus.

104. The communication apparatus according to claim 103, wherein the running the multicast DRX comprises:
starting an eighth timer; and/or
monitoring a PDCCH in active time of the multicast DRX, wherein
the eighth timer is an on duration timer corresponding to the multicast DRX.

105. The communication apparatus according to claim 104, wherein
the processing unit is further configured to start the eighth timer after drx-SlotOffsetPTM starting from a first subframe, wherein
the first subframe is determined according to the following formula: [(SFN×10)+subframe number] modulo (drx-LongCyclePTM)=drx-StartOffsetPTM, wherein
SFN is a system frame number, subframe number is the first subframe, drx-LongCyclePTM is a multicast DRX cycle, drx-StartOffsetPTM is a subframe before the multicast DRX is started, and drx-SlotOffsetPTM is an offset of the multicast DRX.

106. The communication apparatus according to any one of claims 103 to 105, wherein
the CFR is used to receive a multicast service.

107. A communication apparatus, comprising a processing unit, wherein
if a configuration message of a fourth BWP comprises configuration information of a CFR, and a multicast DRX is configured for a terminal device,
the processing unit is configured to run the multicast DRX; and
the processing unit is further configured to start an eighth timer; and/or
monitor a PDCCH in active time of the multicast DRX, wherein
the eighth timer is an on duration timer corresponding to the multicast DRX.

108. The communication apparatus according to claim 107, wherein
the processing unit is further configured to start the eighth timer after drx-SlotOffsetPTM starting from a first subframe, wherein
the first subframe is determined according to the following formula: [(SFN×10)+subframe number] modulo (drx-LongCyclePTM)=drx-StartOffsetPTM, wherein
SFN is a system frame number, subframe number is the first subframe, drx-LongCyclePTM is a multicast DRX cycle, drx-StartOffsetPTM is a subframe before the multicast DRX is started, and drx-SlotOffsetPTM is an offset of the multicast DRX.

109. The communication apparatus according to claim 107 or 108, wherein
the CFR is used by the terminal device to receive a multicast service.

110. A communication apparatus, comprising a processing unit, wherein
the processing unit is configured to determine not to send a first SRS at first time if a preset condition is met, wherein the preset condition comprises any one or more of the following:
a first condition, wherein the first condition comprises: the first time does not belong to active time of a first discontinuous reception DRX, and a configuration message of a first bandwidth part BWP does not comprise information about a common frequency resource CFR;
a second condition, wherein the second condition comprises: the first time does not belong to the active time of the first DRX, a configuration message of a second BWP comprises the information about the CFR, and the first time does not belong to active time of a second DRX set;
a third condition, wherein the third condition comprises a condition A and a condition B; the condition A comprises: the first time does not belong to the active time of the first DRX, and the configuration message of the second BWP comprises the information about the CFR; and the condition B comprises: the first time belongs to active time of a third DRX set, and/or no multicast DRX is configured for a first multicast service set;
a fourth condition, wherein the fourth condition comprises: a first timer does not run at the first time, and the configuration message of the first BWP does not comprise the information about the CFR;
a fifth condition, wherein the fifth condition comprises: the first timer does not run at the first time, the configuration message of the second BWP comprises the information about the CFR, and a second timer set does not run at the first time; and
a sixth condition, wherein the sixth condition comprises a condition C and a condition D; the condition C comprises: the first timer does not run at the first time, and the configuration message of the second BWP comprises the information about the CFR; and the condition D comprises: a third timer set runs at the first time, and/or no multicast DRX is configured for a second multicast service set, wherein
the first DRX is used to control monitoring of the communication apparatus specific control information;
the second DRX set comprises at least one multicast DRX, the at least one multicast DRX comprises a first multicast DRX, and the first multicast DRX is used to control monitoring of control information related to a third multicast service;
the third DRX set comprises at least one multicast DRX, the at least one multicast DRX comprises a second multicast DRX, and the second multicast DRX is used to control monitoring of control information related to a fourth multicast service;
the first multicast service set comprises at least one multicast service, and the at least one multicast service comprises a fifth multicast service; and
the second multicast service set comprises at least one multicast service, and the at least one multicast service comprises a sixth multicast service;
in running time of the first timer, the processing unit is further configured to monitor the specific control information, wherein
the second timer set comprises at least one multicast timer, and the at least one multicast timer comprises a first multicast timer; and in running time of the first multicast timer, the processing unit is further configured to monitor control information related to a seventh multicast service, wherein
the third timer set comprises at least one multicast timer, and the at least one multicast timer comprises a second multicast timer; and in running time of the second multicast timer, the processing unit is further configured to monitor control information related to an eighth multicast service, wherein
the first BWP comprises all active BWPs of the communication apparatus; and
the second BWP comprises one or more active BWPs of the communication apparatus.

111. The communication apparatus according to claim 110, wherein the first SRS comprises:
a periodic SRS and/or a semi-persistent SRS.

112. A communication apparatus, comprising a processing unit, wherein
the processing unit is configured to determine not to receive a first SRS at first time if a preset condition is met, wherein the preset condition comprises any one or more of the following:
a first condition, wherein the first condition comprises: the first time does not belong to active time of a first discontinuous reception DRX, and a configuration message of a first bandwidth part BWP does not comprise information about a common frequency resource CFR;
a second condition, wherein the second condition comprises: the first time does not belong to the active time of the first DRX, a configuration message of a second BWP comprises the information about the CFR, and the first time does not belong to active time of a second DRX set;
a third condition, wherein the third condition comprises a condition A and a condition B; the condition A comprises: the first time does not belong to the active time of the first DRX, and the configuration message of the second BWP comprises the information about the CFR; and the condition B comprises: the first time belongs to active time of a third DRX set, and/or no multicast DRX is configured for a first multicast service set;
a fourth condition, wherein the fourth condition comprises: a first timer does not run at the first time, and the configuration message of the first BWP does not comprise the information about the CFR;
a fifth condition, wherein the fifth condition comprises: the first timer does not run at the first time, the configuration message of the second BWP comprises the information about the CFR, and a second timer set does not run at the first time; and
a sixth condition, wherein the sixth condition comprises a condition C and a condition D; the condition C comprises: the first timer does not run at the first time, and the configuration message of the second BWP comprises the information about the CFR; and the condition D comprises: a third timer set runs at the first time, and/or no multicast DRX is configured for a second multicast service set, wherein
the first DRX is used to control a terminal device to monitor specific control information;
the second DRX set comprises at least one multicast DRX, the at least one multicast DRX comprises a first multicast DRX, and the first multicast DRX is used to control monitoring of control information related to a third multicast service;
the third DRX set comprises at least one multicast DRX, the at least one multicast DRX comprises a second multicast DRX, and the second multicast DRX is used to control monitoring of control information related to a fourth multicast service;
the first multicast service set comprises at least one multicast service, and the at least one multicast service comprises a fifth multicast service; and
the second multicast service set comprises at least one multicast service, and the at least one multicast service comprises a sixth multicast service;
running time of the first timer is used by the terminal device to monitor the specific control information;
the second timer set comprises at least one multicast timer, the at least one multicast timer comprises a first multicast timer, and running time of the first multicast timer is used by the terminal device to monitor control information related to a seventh multicast service;
the third timer set comprises at least one multicast timer, the at least one multicast timer comprises a second multicast timer, and running time of the second multicast timer is used by the terminal device to monitor control information related to an eighth multicast service;
the first BWP comprises all active BWPs of the terminal device; and
the second BWP comprises one or more active BWPs of the terminal device.

113. The communication apparatus according to claim 112, wherein the first SRS comprises:
a periodic SRS and/or a semi-persistent SRS.

114. A communication apparatus, comprising a processing unit, wherein
the processing unit is configured to: if a terminal device is switched to a third BWP, stop a timer corresponding to a multicast DRX, wherein
a configuration message of the third BWP does not comprise information about a CFR, and the timer corresponding to the multicast DRX comprises one or more of the following timers: a fourth timer, a fifth timer, a sixth timer, and a seventh timer;
the fourth timer is an on duration timer corresponding to the multicast DRX;
the fifth timer is an inactivity timer corresponding to the multicast DRX;
the sixth timer is a retransmission timer corresponding to the multicast DRX; and
the seventh timer is an RTT timer corresponding to the multicast DRX.

115. A communication apparatus, comprising:
a processing unit, configured to perform the method according to any one of claims 1 to 64.

116. A communication apparatus, comprising:
a memory, configured to store executable instructions, and
a processor, configured to invoke and run the executable instructions in the memory, to perform the method according to any one of claims 1 to 32 or 52 to 57, or either claim 61 or claim 62.

117. A communication apparatus, comprising:
a memory, configured to store executable instructions, and
a processor, configured to invoke and run the executable instructions in the memory, to perform the method according to any one of claims 33 to 51 or 58 to 60, or either claim 63 or claim 64.

118. A computer program product, comprising: computer-readable instructions, wherein when the computer-readable instructions are run on a computer, the computer is enabled to perform the method according to any one of claims 1 to 64.

119. A computer-readable storage medium, wherein the computer-readable storage medium stores instructions, and when the instructions are run on a computer, the computer is enabled to perform the method according to any one of claims 1 to 64.

120. A communication system, comprising a terminal device and/or a network device, wherein the terminal device is configured to perform the method according to any one of claims 1 to 32 and 52 to 57, or either 61 or 62, and the network device is configured to perform the method according to any one of claims 33 to 51 and 58 to 60, or either claim 63 or claim 64.
